# EUROPÄISCHE PATENTANMELDUNG

(11) **EP 3 474 244 A1**
(43) Veröffentlichungstag der Anmeldung: **24.04.2019**
(21) Anmeldenummer: 17197697.0
(22) Anmeldetag: 23.10.2017
(51) Int. Cl.: G07F 7/06, B07C 5/36, B30B 9/32

(54) **KOMPAKTORANORDNUNG UND VERFAHREN ZUM BETREIBEN EINER KOMPAKTORANORDNUNG**

(71) Anmelder: Wincor Nixdorf International GmbH, 33106 Paderborn (DE)
(72) Erfinder: HARTUNG, Domenic, 99094 Molsdorf (DE)
(74) Vertreter: Viering, Jentschura & Partner mbB Patent- und Rechtsanwälte

(57) **Zusammenfassung**

Gemäß verschiedenen Ausführungsformen kann eine Kompaktoranordnung (202) Folgendes aufweisen: einen Kompaktor (102); eine Leergut-Transportvorrichtung (202t) zum Transportieren von Leergut (104) in der Kompaktoranordnung (202) in einem Transportbereich (1000t) oberhalb der Leergut-Transportvorrichtung (202t); eine erste Eingriff-Schutzstruktur (1000s), welche den Transportbereich (1000t) seitlich begrenzt und zwischen dem Transportbereich (1000t) und dem Kompaktor (102) bereitgestellt ist, wobei die erste Eingriff-Schutzstruktur (1000s) einen Zuführbereich (1000d) definiert, durch welchen hindurch Leergut (104) seitlich aus dem Transportbereich (1000t) heraus dem Kompaktor (102) zugeführt werden kann; und eine Schutzvorrichtung (1002) aufweisend eine zweite Eingriff-Schutzstruktur (1002s), welche derart eingerichtet ist, dass wahlweise ein Eingriff aus Richtung des Transportbereichs (1000t) in den Zuführbereich (1000d) verhindern werden kann.

## Beschreibung

Verschiedene Ausführungsbeispiele betreffen eine Kompaktoranordnung, eine Kompaktoreinrichtung, eine Funktionsmodulanordnung, und ein Verfahren zum Betreiben einer Kompaktoranordnung.

Im Allgemeinen werden zum Kompaktieren von Objekten verschiedene Konzepte verwendet, wobei die Objekte zerteilt, gepresst, und/oder auf eine andere Art umgeformt werden, um deren Platzbedarf zu verringern. Aufgrund des eingeführten Pfandsystems für Einweg- und Mehrwegbehälter (z.B. Flaschen, Dosen, Gläser, etc.) werden zunehmend automatisierte Rücknahmesysteme verwendet, um die Rücknahme großer Mengen an Behältern logistisch einfach zu gestalten. Mittels derartiger Rücknahmesysteme können die Behälter beispielsweise nach Art, Material, etc., sortieren werden. Ferner können verschiedene Optionen für die Rücknahme von Einzelbehältern oder Gebinden (z.B. einem Kasten, etc.) vorgesehen sein. In der Regel kann es erforderlich oder hilfreich sein, zumindest einige der zurückgenommenen Behälter zu zerkleinern, um einen effizienten Abtransport dieser zu ermöglichen. Dabei können beispielsweise nicht nur Einweg-Kunststoffbehälter, sondern auch Einweg-Glasbehälter, etc., kompaktiert werden. Mehrwegbehälter und Mehrweggebinde werden in der Regel separat gesammelt und abtransportiert ohne diese zu kompaktieren. In der Lebensmittelindustrie werden die leeren Behälter auch als Leergut bezeichnet und das Rücknahmesystem als Leergutrücknahmeanlage oder Leergutrücknahmeautomat.

Verschiedenen Ausführungsformen betreffen eine Kompaktoranordnung, beispielsweise in Verwendung in einer Leergutrücknahmeanlage oder einem Leergutrücknahmeautomaten. Gemäß verschiedenen Ausführungsformen kann die Kompaktoranordnung eine modulare Anordnung mehrerer Funktionsmodule aufweisen, welche den Betrieb der Kompaktoranordnung definieren.

Gemäß verschiedenen Ausführungsformen kann eine Kompaktoranordnung Folgendes aufweisen: einen Kompaktor; eine Leergut-Transportvorrichtung zum Transportieren von Leergut in der Kompaktoranordnung in einem Transportbereich oberhalb der Leergut-Transportvorrichtung; eine erste Eingriff-Schutzstruktur, welche den Transportbereich seitlich begrenzt und zwischen dem Transportbereich und dem Kompaktor bereitgestellt ist, wobei die erste Eingriff-Schutzstruktur einen Zuführbereich definiert, durch welchen hindurch Leergut seitlich aus dem Transportbereich heraus dem Kompaktor zugeführt werden kann; und eine Schutzvorrichtung aufweisend eine zweite Eingriff-Schutzstruktur, welche derart eingerichtet ist, dass wahlweise ein Eingriff aus Richtung des Transportbereichs in den Zuführbereich verhindern werden kann.

Gemäß verschiedenen Ausführungsformen kann eine Kompaktoranordnung eine Funktionsmodulanordnung aufweisen, wobei die Funktionsmodulanordnung Folgendes aufweist: eine Modulaufnahme zum Aufnehmen von mehreren Funktionsmodulen, die mehreren Funktionsmodule, welche passend zu der Modulaufnahme ausgestaltet sind derart, dass die mehreren Funktionsmodule jeweils wahlweise in der Modulaufnahme aufgenommen werden können, wobei die Selektiervorrichtung als ein Selektiermodul der mehreren Funktionsmodule bereitgestellt ist, und wobei die zweite Eingriff-Schutzstruktur als ein Schutzmodul der mehreren Funktionsmodule bereitgestellt ist.

Gemäß verschiedenen Ausführungsformen kann eine Funktionsmodulanordnung Folgendes aufweisen: eine Modulaufnahme, mehrere Funktionsmodule unterschiedlichen Funktionsmodul-Typs, welche derart eingerichtet sind, dass diese wahlweise in der Modulaufnahme aufgenommen werden können, mindestens einen Prozessor, welcher eingerichtet ist den Funktionsmodul-Typ mindestens eines in der Modulaufnahme aufgenommenen Funktionsmoduls zu ermitteln, und die Funktionsmodulanordnung wahlweise in einem Betriebsmodus aus mehreren Betriebsmodi zu betreiben basierend auf dem ermittelten Funktionsmodul-Typ.

Gemäß verschiedenen Ausführungsformen kann eine Kompaktoreinrichtung eine oder mehrere Kompaktoranordnungen aufweisen. Dabei kann beispielsweise eine der Kompaktoranordnung in einem ersten Betriebsmodus sein, z.B. einem Normalbetrieb, und die zweite Kompaktoranordnung kann einem zweiten Betriebsmodus sein, z.B. in einem Notbetrieb. Dabei kann Leergut beispielsweise durch die zweite Kompaktoranordnung hindurch in die erste Kompaktoranordnung geführt werden und in der ersten Kompaktoranordnung kompaktiert werden.

Gemäß verschiedenen Ausführungsformen kann ein Verfahren zum Betreiben einer Kompaktoranordnung Folgendes aufweisen: Betreiben der Kompaktoranordnung in einem ersten Betriebsmodus, aufweisend: Transportieren von Leergut mittels der Leergut-Transportvorrichtung in einem Transportbereich, und selektives Führen des Leerguts mittels einer Selektiervorrichtung aus dem Transportbereich heraus und durch einen Zuführbereich hindurch zu einem Kompaktor der Kompaktoranordnung; und, zuvor oder anschließend,
Betreiben der Kompaktoranordnung in einem zweiten Betriebsmodus, aufweisend: Transportieren von Leergut mittels der Leergut-Transportvorrichtung in dem Transportbereich durch die Kompaktoranordnung hindurch, und Sichern des Zuführbereichs mittels einer Eingriff-Schutzstruktur vor einem Eingriff aus Richtung des Transportbereichs.

Ausführungsbeispiele sind in den Figuren dargestellt und werden im Folgenden näher erläutert.

Es zeigen
Fig.1A und Fig.1B einen Kompaktor in verschiedenen schematischen Darstellungen, gemäß verschiedenen Ausführungsformen;
Fig.2A und Fig.2B eine Kompaktoranordnung in verschiedenen schematischen Darstellungen, gemäß verschiedenen Ausführungsformen;
Fig.3A und Fig.3B jeweils eine Kompaktoreinrichtung in einer schematischen Darstellung, gemäß verschiedenen Ausführungsformen;
Fig.4A bis Fig.4F jeweils verschiedene Komponenten einer Kompaktoreinrichtung in einer schematischen Darstellung, gemäß verschiedenen Ausführungsformen;
Fig.5A bis Fig.5C jeweils mehrere Kompaktoranordnungen in verschiedenen schematischen Darstellungen, gemäß verschiedenen Ausführungsformen;
Fig.6 eine Kompaktoranordnung in einer schematischen Darstellung, gemäß verschiedenen Ausführungsformen;
Fig.7A bis Fig.7C eine Kompaktoranordnung in verschiedenen schematischen Darstellungen, gemäß verschiedenen Ausführungsformen;
Fig.8A bis Fig.8C mehrere Kompaktoranordnungen in verschiedenen schematischen Darstellungen, gemäß verschiedenen Ausführungsformen;
Fig.9A bis Fig.9C mehrere Kompaktoranordnungen in verschiedenen schematischen Darstellungen, gemäß verschiedenen Ausführungsformen;
Fig.10A bis Fig.10F eine Kompaktoranordnung in verschiedenen schematischen Darstellungen, gemäß verschiedenen Ausführungsformen;
Fig.11A bis Fig.11D eine Funktionsmodulanordnung einer Kompaktoranordnung in verschiedenen schematischen Darstellungen, gemäß verschiedenen Ausführungsformen;
Fig.12 ein schematisches Ablaufdiagramm eines Verfahrens zum Betreiben einer Kompaktoranordnung, gemäß verschiedenen Ausführungsformen;
Fig.13A bis Fig.13D eine Kompaktoranordnung in verschiedenen schematischen Darstellungen, gemäß verschiedenen Ausführungsformen;
Fig.14 ein schematisches Ablaufdiagramm eines Verfahrens zum Betreiben einer Kompaktoranordnung, gemäß verschiedenen Ausführungsformen;
Fig.15A bis Fig.15H einen Gurtgliedförderer in verschiedenen schematischen Darstellungen, gemäß verschiedenen Ausführungsformen; und
Fig.16A und Fig.16B eine Kompaktoranordnung in verschiedenen schematischen Darstellungen, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen", "gekoppelt" sowie "gekuppelt" verwendet zum Beschreiben sowohl einer direkten als auch einer indirekten Verbindung, eines direkten oder indirekten Anschlusses, einer direkten oder indirekten Kopplung sowie einer direkten oder indirekten Kupplung. In den Figuren werden identische oder ähnliche Elemente mit identischen Bezugszeichen versehen, soweit dies zweckmäßig ist.

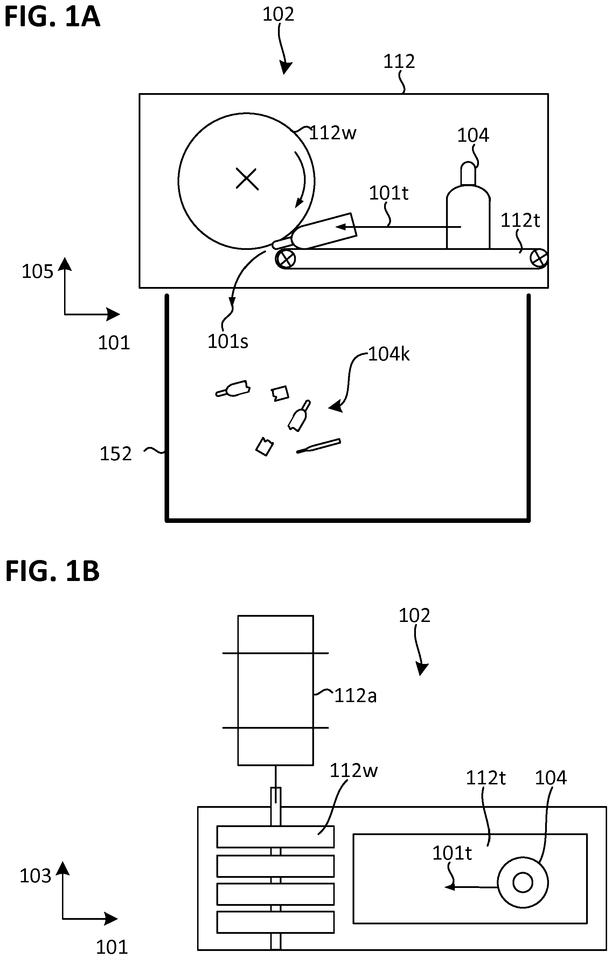

**Fig.1A** und **Fig.1B** veranschaulichen einen Kompaktor 102 gemäß verschiedenen Ausführungsformen in einer Seiten- oder Querschnittsansicht und in einer Draufsicht.

Ein Kompaktor 102 kann als funktionelle Baugruppe eines Leergutautomaten verwendet werden. Ein Leergutautomat wird auch als Leergutrücknahmeautomat (engl.: Reverse Vending Machine, RVS) bezeichnet. Typischerweise steht der Leergutautomat in Verbindung mit einem Pfandsystem, kann aber auch in anderen Einsatzgebieten Anwendung finden.

Um beispielsweise den Abtransport zurückgenommenen Leerguts 104 zu erleichtern, kann ein Kompaktor 102 eingerichtet sein, dieses Leergut 104 zu kompaktieren. Beispielsweise kann das Leergut 104, welches einem Leergutautomaten zugeführt wird, z.B. sofern es zum Kompaktieren geeignet ist, mittels eines Kompaktors 102 oder aufgeteilt mittels mehrerer Kompaktoren 102 kompaktiert werden. Anschaulich wird dabei der Platzbedarf des Leerguts 104 verringert. Dazu kann das Leergut 104 umgeformt, z.B. gepresst, zerkleinert, etc., werden. Anschaulich kann das Leergut 104 beispielsweise in eine Vielzahl von Stücke zerbrochen, zerschnitten, etc. werden. Alternativ oder zusätzlich dazu kann das Leergut 104 beispielsweise in eine flache Form gedrückt werden. Beispielsweise können Glasbehälter zerbrochen werden, z.B. mittels eines Glas-Crushers. Kunststoffbehälter können beispielsweise mittels eines Schneidwerks zerkleinert werden. Ferner können andere Umformverfahren Anwendung finden.

Kompaktiertes Leergut 104k kann in mindestens einem Sammelbehälter 152 (z.B. einem Frachtbehälter) gesammelt 101s werden. Der Sammelbehälter 152 kann dazu beispielsweise unter dem Kompaktor 102 angeordnet sein oder werden. Beispielsweise kann der Kompaktor 102 auf einem Gestell angeordnet sein, so dass unterhalb des Kompaktors 102 ein Raum zum Aufnehmen eines Sammelbehälters 152 oder mehrerer Sammelbehälter 152 bereitgestellt ist.

Leergut 104 kann in dem Zusammenhang beispielsweise als Behälter verstanden werden, z.B. in Form entleerter Verkaufsverpackungen, Verkaufsbehältern etc. Leergut 104 kann beispielsweise Folgendes aufweisen: Einwegflaschen, Einwegpfandflaschen, Getränkedosen, Mehrwegflaschen, etc. Ein Leergutautomat kann beispielsweise Teil einer Leergut-Rückführungskette sein, welche das Leergut 104 beispielsweise einer Wiederverwendung oder einer Verwertung (z.B. zur Rohstoff-Rückgewinnung) zuführt.

Der Kompaktor 102 kann ein Kompaktorwerk 112 (anschaulich eine Vorrichtung zum Verringern des Platzbedarfs) aufweisen, mittels dessen Leergut 104 kompaktiert werden kann. Das Kompaktorwerk 112 kann zumindest eine Kompaktorwalze 112w (z.B. eine Einzel-Kompaktorwalze oder mehrere gegenläufige Kompaktorwalzen) und einen Antrieb 112a (z.B. einen elektrischen Motor) zum Antreiben der Kompaktorwalze 112w aufweisen. Ferner kann der Kompaktor 102 eine Zuführvorrichtung 112t aufweisen zum Zuführen des Leerguts 104 in Richtung 101t der Kompaktorwalze 112w.

Die Zuführvorrichtung 112t kann beispielsweise eine angetriebene Transportvorrichtung sein. Alternativ oder zusätzlich dazu kann die Zuführvorrichtung 112t einen vordefinierten Pfad bereitstellen, auf dem das Leergut 104 beispielsweise aufgrund der Gravitationskraft bewegt wird. Anschaulich kann die Zuführvorrichtung 112t in diesem Fall eine Rutsche aufweisen. Alternativ dazu kann der Kompaktor 102 derart eingerichtet sein, dass das Leergut 104 in diesen hineinfallen kann, z.B. in freiem Fall.

Die Zuführvorrichtung 112t kann beispielsweise, als angetriebene Transportvorrichtung, einen Bandförderer, einen Gurtgliedförderer, einen Kettenförderer, einen Rollenförderer, etc. aufweisen. Ein Bandförderer kann beispielsweise mindestens ein Transportband aufweisen, auf welchem das Leergut 104 transportiert wird. Das mindestens eine Transportband kann beispielsweise mittels mehrerer Transportrollen (auch als Tragrollen bezeichnet) abgestützt sein oder werden. Das mindestens eine Transportband kann endlos umlaufend gelagert sein. Ein Gurtgliedförderer kann mindestens ein Gurtgliedband aufweisen. Das mindestens eine Gurtgliedband kann endlos umlaufend gelagert sein. Die einzelnen Gurtglieder eines Gurtgliedbands können mittels Verbindungselementen lösbar verbunden sein. Ein Rollenförderer kann beispielsweise eine Vielzahl von Transportrollen aufweisen, welche derart angeordnet sind, dass diese eine Transportfläche bereitstellen, auf welcher das Leergut 104 transportiert werden kann. Es können alternativ oder zusätzlich noch andere Förderertypen verwendet werden, welche zum Transport des Leerguts 104 geeignet sind.

Die Zuführvorrichtung 112t kann beispielsweise ein Schaufelrad aufweisen. Das Schaufelrad kann beispielsweise das Zuführen und/oder das Kompaktieren des Leerguts 104 unterstützen.

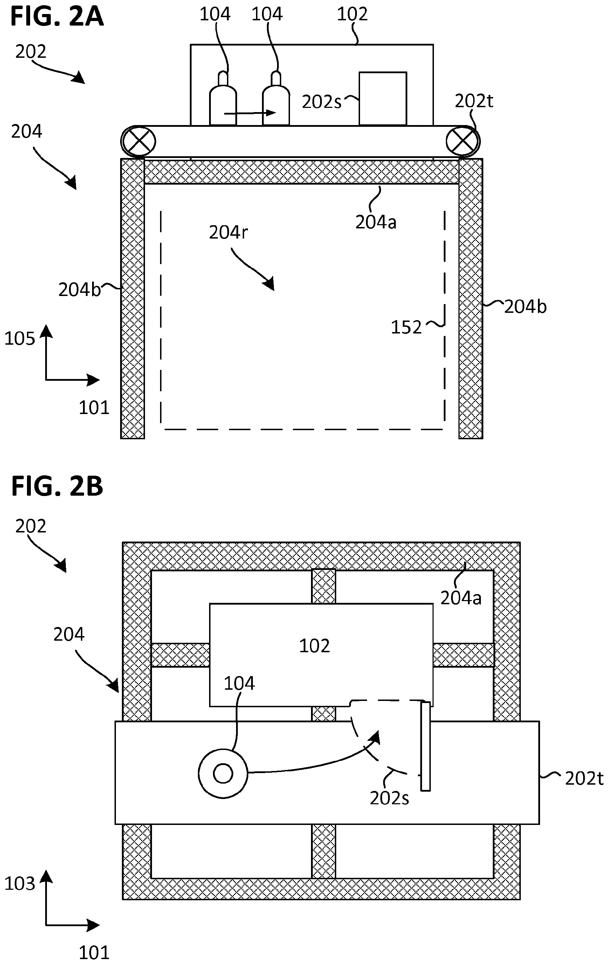

**Fig.2A** und **Fig.2B** veranschaulichen eine Kompaktoranordnung 202 gemäß verschiedenen Ausführungsformen in verschiedenen Ansichten. Die Kompaktoranordnung 202 kann beispielsweise eine Gestellanordnung 204 aufweisen. Ferner kann die Kompaktoranordnung 202 einen Kompaktor 102 oder mehrere Kompaktoren 102 aufweisen. Der Kompaktor 102 der Kompaktoranordnung 202 kann beispielsweise in ähnlicher oder gleicher Weise eingerichtet sein, wie vorangehend beschrieben ist und vice versa.

Die Kompaktoranordnung 202 kann zusätzlich zu dem Kompaktor 102 weitere Baugruppen aufweisen. Die weiteren Baugruppen können beispielsweise eingerichtet sein, den Betrieb des Kompaktors 102 zu unterstützen und/oder den Kompaktor 102 in die Ablaufkette eines Leergutautomaten einzubinden.

Die Gestellanordnung 204 kann beispielsweise mindestens ein Tragegestell 204a aufweisen. Der Kompaktor 102 kann beispielsweise an dem mindestens einen Tragegestell 204a befestig sein oder werden. Beispielsweise kann die Gestellanordnung 204 den Kompaktor 102 in einer Arbeitshöhe abstützen. Somit kann beispielsweise ein Sammelbehälter 152 (z.B. ein Container oder ein anderer Großraum-Behälter) unter dem Kompaktor 102 angeordnet sein oder werden.

Die Gestellanordnung 204 kann ferner mehrere Stützbeine 204b aufweisen. Die Stützbeine 204b können derart angeordnet sein, dass zwischen diesen ein erster Aufnahmeraum 204r zum Aufnehmen eines Sammelbehälters 152 bereitgestellt ist. Somit kann beispielsweise der Sammelbehälter 152 auf einfache Weise ausgetauscht werden kann.

Die Kompaktoranordnung 202 kann beispielsweise eine Leergut-Transportvorrichtung 202t aufweisen. Die Leergut-Transportvorrichtung 202t kann beispielsweise eingerichtet sein, das Leergut 104 zu dem Kompaktor 102 und/oder an diesem vorbei zu führen. Die Leergut-Transportvorrichtung 202t kann beispielsweise Teil einer Transportstrecke sein, entlang derer das Leergut 104 transportiert wird. Die Leergut-Transportvorrichtung 202t kann beispielsweise eine angetriebene Transportvorrichtung sein, beispielsweise aufweisend mindestens einen Bandförderer, mindestens einen Gurtgliedförderer, mindestens einen Kettenförderer, mindestens einen Rollenförderer, etc.

Die Kompaktoranordnung 202 kann beispielsweise eine Selektiervorrichtung 202s aufweisen. Die Selektiervorrichtung 202s kann auch als Sortiervorrichtung oder Teil einer Sortiervorrichtung verstanden werden. Somit kann Leergut 104, das entlang des Kompaktors 102 geführt wird, selektiert werden, z.B. zum selektiven Zuführen des Leerguts 104 in den Kompaktor 102. Dabei kann das Leergut 104 beispielsweise klassifiziert sein oder werden, z.B. kann eine erste Klasse "Kompaktieren" und eine zweite Klasse "Nicht-Kompaktieren" sein. Ferner können zusätzliche oder andere Klassen verwendet werden, z.B. kann das Leergut 104 nach Farbe, Material (z.B. Glas, Metall, Kunststoff, etc.), Zustand (z.B. Füllzustand, Integrität), etc. klassifiziert sein oder werden. Eine Kompaktoranordnung 202 kann beispielsweise Leergut 104, welches eine ihr zugeordnete Klasse aufweist (z.B. "Kompaktieren", z.B. "Glas einer ersten Farbe", "Glas einer zweiten Farbe", "Kunststoff einer ersten Farbe", "Kunststoff einer zweiten Farbe", etc.), selektieren.

Die Selektiervorrichtung 202s kann beispielsweise eingerichtet sein, aus einem Leergutstrom, welcher mittels der Leergut-Transportvorrichtung 202t an dem Kompaktor 102 entlanggeführt wird, das Leergut 104, welches eine der Kompaktoranordnung 202 zugeordnete Klasse aufweist, herauszuteilen und dem Kompaktor 102 zuzuführen.

Die Selektiervorrichtung 202s kann beispielsweise eingerichtet sein, das Klassifizieren des Leerguts 104 durchzuführen. Beispielsweise kann das Leergut 104 mittels der Selektiervorrichtung 202s und/oder einer geeigneten Sensoranordnung, die mit der Selektiervorrichtung 202s gekoppelt ist, klassifiziert werden, z.B. nach "kompaktierbar", "nicht-kompaktierbar", Behältertyp, Rückführungstyp, Material, Farbe, etc.

Beispielsweise kann das Selektieren des Leerguts 104 stufenweise erfolgen, z.B. kann als "kompaktierbar" klassifiziertes Leergut 104 weiter nach Farbe, Material, etc. unterklassifiziert werden.

Das Klassifizieren des Leerguts 104 bzw. ein Detektieren der Klasse des Leerguts 104 kann alternativ oder zusätzlich mittels einer separaten Klassifiziereinrichtung erfolgen. Diese kann beispielsweise am Eingang eines Leergutautomaten (siehe die nachfolgenden Figuren) angeordnet sein.

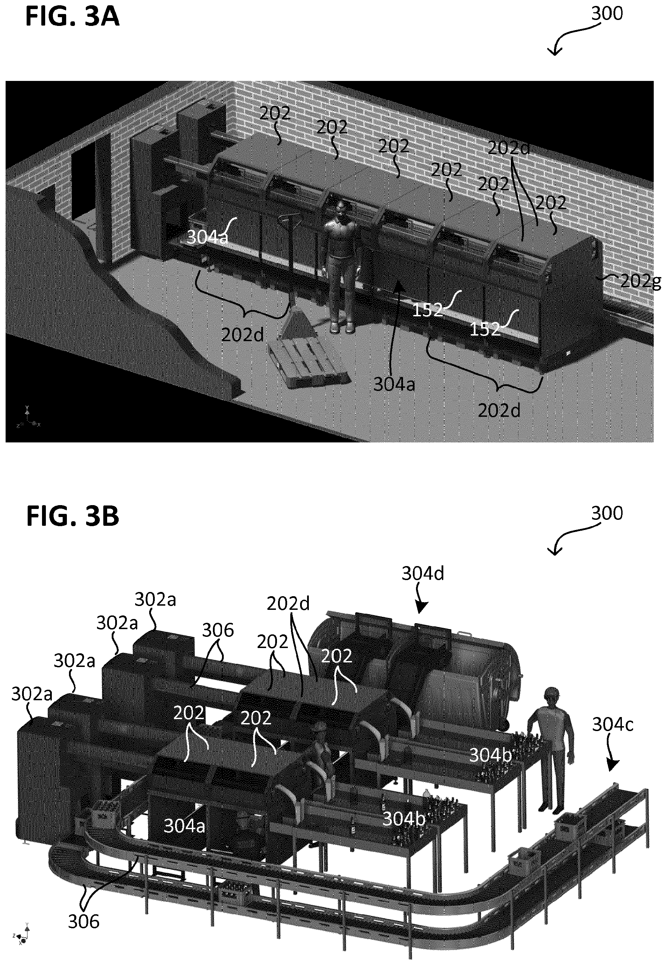

Die Kompaktoranordnung 202 kann ein Gehäuse aufweisen (siehe beispielsweise das Gehäuse 202g in Fig.3A). Der Kompaktor 102 und die Leergut-Transportvorrichtung 202t können beispielsweise zumindest teilweise in dem Gehäuse angeordnet sein. Das Gehäuse kann zumindest eine erste Öffnung aufweisen, durch welche hindurch der Kompaktoranordnung 202 das Leergut 104 zugeführt (z.B. mittels der Leergut-Transportvorrichtung 202t aufgenommen) werden kann, z.B. entlang der Transportstrecke.

Ferner kann das Gehäuse eine zweite Öffnung aufweisen. Durch die zweite Öffnung hindurch kann beispielsweise das nicht selektierte Leergut 104, welches an dem Kompaktor 102 vorbei transportiert wird, ausgegeben werden, z.B. entlang der Transportstrecke.

**Fig.3A** und **Fig.3B** veranschaulichen jeweils eine Kompaktoreinrichtung 300 (auch als Leergutrücknahmeanlage oder Leergutrücknahmeautomat bezeichnet) in einer schematischen Perspektivansicht, gemäß verschiedenen Ausführungsformen.

Die Kompaktoreinrichtung 300 kann beispielsweise eingerichtet sein, das Leergut 104 effizient zu sortieren, zu kompaktieren, etc. Dazu kann eine Ablaufkette für das Sortieren, Kompaktieren, etc. bereitgestellt sein oder werden in Verbindung mit mehreren Kompaktoranordnungen. Die Kompaktoranordnungen der Kompaktoreinrichtung 300 können beispielsweise eingerichtet sein, wie vorangehend mit Bezug auf die Kompaktoranordnung 202 beschrieben ist.

Die Ablaufkette der Kompaktoreinrichtung 300 kann an ihrem Anfang 302a beispielsweise eine Überprüfung des Leerguts 104 auf seine Rücknahmefähigkeit aufweisen. Beispielsweise können zur Überprüfung verschiedene Merkmale des Leerguts 104 (wie beispielsweise Leerguttyp, Gewicht, Gebindetyp, Barcode-Informationen, etc.) erfasst werden. Das als rücknahmefähig klassifizierte Leergut 104 kann dann von der Kompaktoreinrichtung 300 angenommen und der Ablaufkette zugeführt werden.

Beispielsweise können in der Ablaufkette mehrere Kompaktoranordnungen 202 in Serie (d.h. entlang einer gemeinsamen Transportstrecke) eingerichtet sein. Die mehreren Kompaktoranordnungen 202 können beispielsweise gemäß der Klassifizierung kompaktieren, z.B. wie vorangehend beschrieben ist.

Alternativ oder zusätzlich können die mehreren Kompaktoranordnungen 202 paarweise (z.B. zwei erste Kompaktoranordnungen und/oder zwei zweite Kompaktoranordnungen) ein Doppelmodul 202d bilden, dessen Kompaktoranordnungen 202 dieselbe Klasse (auch als Kategorie bezeichnet) kompaktieren. So kann beispielsweise eine Kompaktoranordnung 202 des Doppelmoduls 202d gewartet werden, während die andere Kompaktoranordnung 202 des Doppelmoduls 202d den Betrieb aufrechterhält. Mehrere Doppelmodule 202d können in Serie (z.B. "Rücken-an-Rücken") oder parallel zueinander (d.h. in verschiedenen Transportstrecken) angeordnet sein. Das Doppelmodul 202d kann beispielsweise zwei Kompaktoren 102 aufweisen. Diese können in einem gemeinsamen Gehäuse 202g oder in separaten Gehäusen 202g angeordnet sein.

Ein Doppelmodul 202d kann auch als Kabinett bezeichnet werden. Ein Kabinett kann beispielsweise aus zwei unabhängigen spiegelsymmetrischen modulartig ausgestalteten Kompaktoranordnungen 202 bestehen. Ein Umbau des Kabinetts zur spiegelsymmetrischen Variante kann, gemäß verschiedenen Ausführungsformen, durch wenige Handgriffe (z.B. Tausch des Kompaktors 102 und der Selektiervorrichtung 202s) erfolgen. Um den Tausch der Selektiervorrichtung 202s zu erleichtern, kann diese ebenfalls modulartig, als Selektiermodul bezeichnet, bereitgestellt sein.

Die Ablaufkette kann an einem Ende einen Aufnahmeraum 304a (z.B. mit einem Sammelbehälter 152 darin) aufweisen zum Aufnehmen von kompaktiertem Leergut 104k. Die Ablaufkette kann (zusätzlich dazu oder alternativ dazu) an einem weiteren Ende zumindest einen weiteren Aufnahmeraum 304b aufweisen, z.B. für Einzel-Leergut (z.B. Mehrweg-Leergut oder Glasflaschen), welches nicht kompaktiert werden soll. Ferner kann die Ablaufkette (zusätzlich dazu oder alternativ dazu) an einem weiteren Ende einen weiteren Aufnahmeraum 304c aufweisen, z.B. für Leergut-Kisten. Ferner kann die Ablaufkette (zusätzlich dazu oder alternativ dazu) an einem weiteren Ende einen weiteren Aufnahmeraum 304d aufweisen, z.B. für nicht verwertbares Leergut 104 (z.B. zu entsorgendes Leergut).

Ein Ende oder mehrere Enden der Ablaufkette können beispielsweise mittels eines Transportsystems verbunden sein. Das Transportsystem kann beispielsweise mehrere Transportstrecken 306 aufweisen und/oder an den Stellen, an denen es sich verzweigt (d.h. zwei Transportstrecken aneinandergrenzen), kann eine Selektion erfolgen.

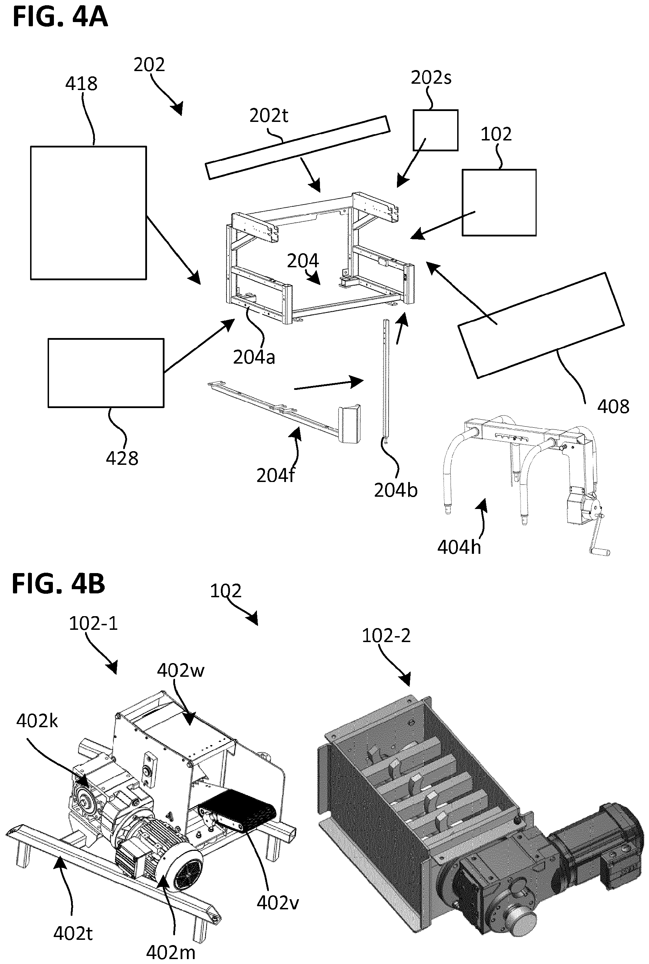

**Fig.4A** veranschaulicht verschiedene Komponenten einer Kompaktoranordnung 202, gemäß verschiedenen Ausführungsformen. Die Kompaktoranordnung 202 kann in ähnlicher oder gleicher Weise ausgestaltet sein, wie vorangehend beschrieben ist und vice versa.

Die Kompaktoranordnung 202 kann beispielsweise mindestens einen Kompaktor 102 aufweisen, der in ähnlicher oder gleicher Weise ausgestaltet sein kann, wie vorangehend beschrieben ist und vice versa.

Die Kompaktoranordnung 202 kann beispielsweise mindestens eine Gestellanordnung 204 aufweisen, die in ähnlicher oder gleicher Weise ausgestaltet sein kann, wie vorangehend beschrieben ist und vice versa. Die Gestellanordnung 204 kann beispielsweise ein Tragegestell 204a aufweisen, welches anschaulich als zentrales Element dient zum Montieren der Komponenten der Kompaktoranordnung 202 und/oder zum Aufstellen der Kompaktoranordnung 202. Die Gestellanordnung 204 kann ferner beispielsweise Stützbeine 204b aufweisen, mittels derer das Tragegestell 204a abgestützt werden kann. Ferner kann die Gestellanordnung 204 beispielsweise eine Fußbaugruppe 204f aufweisen. Die Fußbaugruppe 204f kann einen Rammschutz und/oder einen Bodenanker aufweisen. Der Rammschutz selbst kann beispielsweise austauschbar eingerichtet sein, da dieser bei einer Beschädigung gewechselt werden sollte. Der Bodenanker kann beispielsweise mit mindestens einer Bohrung versehen sein, die zur Befestigung am Boden verwendet werden kann.

Die Gestellanordnung 204 kann derart eingerichtet sein, dass das Tragegestell 204a mittels eines Hubwagens transportiert werden kann, auf dem Boden abgestellt werden kann, und mittels der Stützbeine 204b auf eine gewünschte Höhe angehoben werden kann. Zum Anheben des Tragegestells 204a kann eine Hubvorrichtung 404h verwendet werden. Es können auch mehrere Tragegestelle 204a miteinander verbunden sein oder werden und gleichzeitig angehoben werden. Beim Anheben des Tragegestells 204a können einige oder alle weiteren Komponenten der Kompaktoranordnung 202 bereits an dem Tragegestell 204a montiert sein. Ferner kann das Tragegestell
204a auch wieder abgesenkt werden. Das Tragegestell 204a kann derart eingerichtet sein, dass einige oder alle weiteren Komponenten der Kompaktoranordnung 202, die an dem Tragegestell 204a montiert sind (z.B. der Kompaktor 102), demontiert bzw. ausgetauscht werden können, ohne das Tragegestell 204a abzusenken.

**Fig.4B** veranschaulicht beispielhaft einen Kompaktor 102 in zwei verschiedenen Ausgestaltungen 102-1, 102-2. Der Kompaktor 102 kann beispielsweise in ähnlicher oder gleicher Weise eingerichtet sein, wie vorangehend beschrieben ist und vice versa.

Der Kompaktor 102 kann beispielsweise in einer ersten Ausgestaltung 102-1 ein Schneidwerk 402w aufweisen, z.B. zum Zerkleinern von Leergut 104 aus Kunststoff. Mittels einer Vorbandbaugruppe 402v kann beispielsweise das Leergut 104 in Richtung des Schneidwerks 402w geführt werden. Die Vorbandbaugruppe 402v kann beispielsweise in gleicher oder ähnlicher Weise ausgestaltet sein wie die vorangehend beschriebene Zuführvorrichtung 112t und vice versa.

Das Schneidwerk kann beispielsweise derart eingerichtet sein, dass der Elektromotor 402m vermittels einer Drehmomentstütze auf eine Messerwelle wirkt, z.B. ohne zusätzliche Hilfsgetriebe. Zum Übertragen des Drehmoments von dem Elektromotor 402m auf die Messerwelle kann ein Kegelradgetriebe 402k verwendet werden.

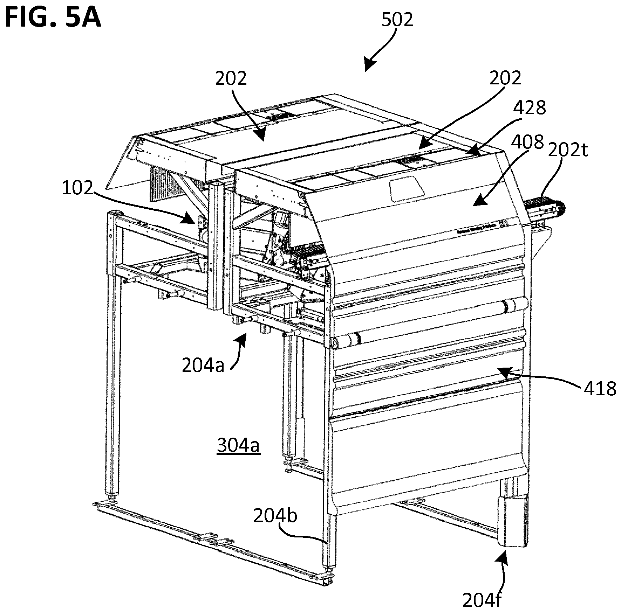

Der Kompaktor 102 (z.B. in der ersten Ausgestaltung 102-1 mit einem Schneidwerk) kann beispielsweise auf einem Tragrahmen 402t montiert sein oder werden. Der Tragrahmen 402t kann beispielsweise passend zu dem Tragegestell 204a der Gestellanordnung 204 ausgestaltet sein (oder anschaulich als Teil der Gestellanordnung 204 verstanden werden) zum Montieren des Kompaktors 102 an dem Tragegestell 204a (siehe beispielsweise Fig.5A bis FIG.5C). Beispielsweise kann der Kompaktor 102 mittels des Tragrahmens 402t von unten in das Tragegestell 204a hineingehoben werden und an diesem lösbar befestigt werden. Ferner kann der Tragrahmen 402t von dem Tragegestell 204a gelöst werden und der Kompaktor 102 kann mittels des Tragrahmens 402t nach unten aus dem Tragegestell 204a heraus abgesenkt werden. Zum Anheben und/oder Absenken des Kompaktors 102 kann beispielsweise die Hubvorrichtung 404h verwendet werden.

Ferner kann der Kompaktor 102 in einer zweiten Ausgestaltung 102-2 einen Glas-Crusher aufweisen, z.B. zum Zerkleinern von Leergut 104 aus Glas.

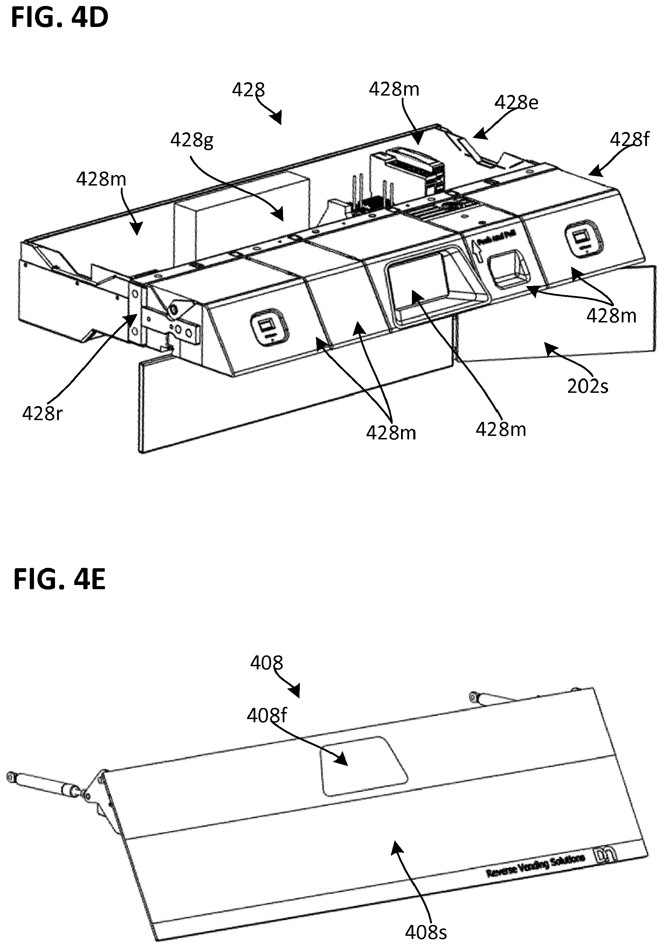

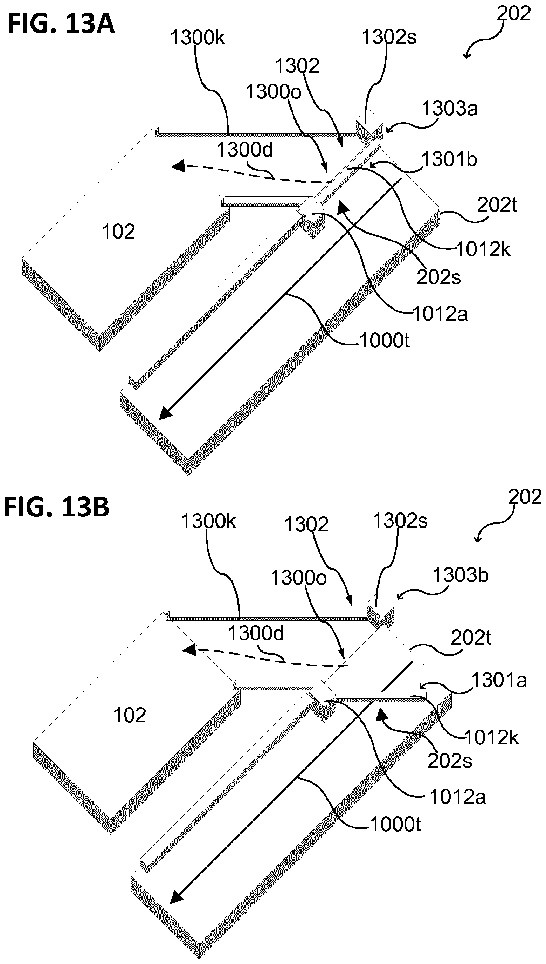

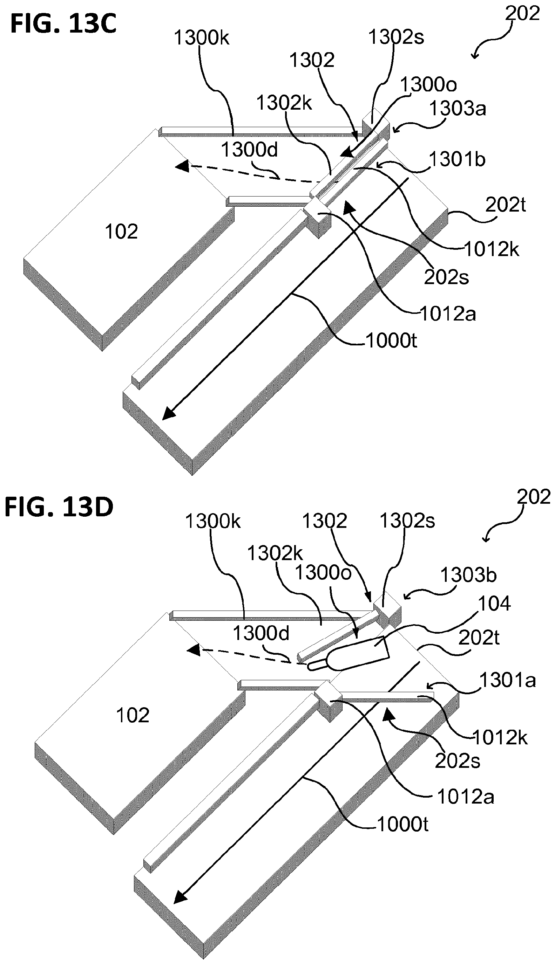

Der Kompaktor 102 (z.B. in der zweiten Ausgestaltung 102-2 als Glas-Crusher) kann beispielsweise bei einem Doppelmodul 202d mittig angeordnet sein und von beiden Transportstrecken mittels der Selektiervorrichtung 202s mit Leergut aus Glas versorgt werden. Der Zulauf hinter der Selektierklappe der Selektiervorrichtung 202s (vgl. Fig.4D) kann mittels einer aktive Transportstrecke bereitgestellt werden. Die aktive Transportstrecke kann beispielsweise mittels zweier Schottwände gesichert sein oder werden. Diese Schottwände dienen beispielsweise dem Schutz vor Glassplittern und zur Vermeidung einer manipulativen Entnahme (siehe Fig.13). In der Zulaufstrecke befinden sich beispielsweise ein oder mehrere manipulier-geschützte Sensoren, welche den sicheren Zulauf überwachen. Somit kann das Entwerten des jeweiligen Leerguts 104 zugeordnet werden.

Die Kompaktoranordnung 202 kann beispielsweise mindestens eine Leergut-Transportvorrichtung 202t aufweisen, die in ähnlicher oder gleicher Weise ausgestaltet sein kann, wie vorangehend beschrieben ist und vice versa.

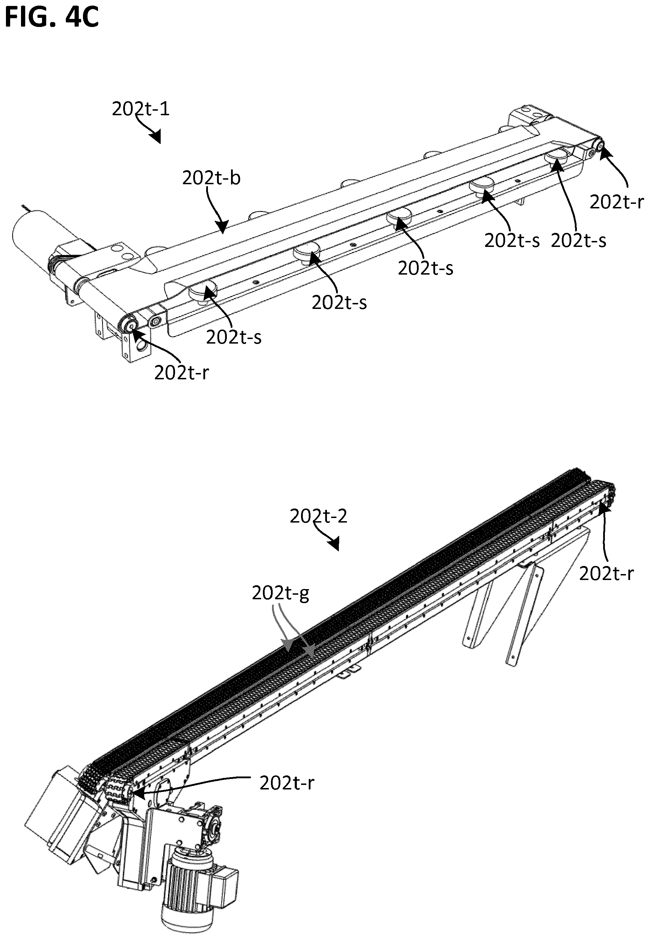

**Fig.4C** veranschaulicht beispielhaft eine Leergut-Transportvorrichtung 202t in zwei verschiedenen Ausgestaltungen 202t-1, 202t-2. Die Leergut-Transportvorrichtung 202t kann beispielsweise in ähnlicher oder gleicher Weise eingerichtet sein, wie vorangehend beschrieben ist und vice versa.

Die Leergut-Transportvorrichtung 202t kann in einer ersten Ausgestaltung 202t-1 ein Transportband 202t-b aufweisen. Anschaulich kann die Leergut-Transportvorrichtung 202t als Bandförderer 202t-1 ausgestaltet sein. Das Transportband 202t-b kann zwischen mindestens zwei Bandrollen 202t-r endlos umlaufend gelagert sein. Mittels der Bandrollen 202t-r kann das Transportband 202t-b entsprechend gespannt werden. Ferner können Abstützanordnungen 202t-s zum Bombieren des Transportbands 202t-b verwendet werden. Die jeweilige Abstützanordnung 202t-s kann beispielsweise eine Tragrolle und ein Drehlager aufweisen, wobei die Tragrolle mittels des Drehlagers um eine Drehachse drehbar gelagert ist. Dabei kann die Tragrolle eine Mantelfläche aufweisen, auf welcher das Transportband zumindest teilweise aufliegt. Die Mantelfläche kann beispielsweise schräg zu der Drehachse ausgerichtet sein.

Die Leergut-Transportvorrichtung 202t kann in einer zweiten Ausgestaltung 202t-2 beispielsweise zwei Gurtgliedbänder 202t-g aufweisen. Anschaulich kann die Leergut-Transportvorrichtung 202t als Gurtgliedförderer 202t-2 ausgestaltet sein. Die Gurtgliedbänder 202t-g können V-förmig angeordnet sein. Das jeweilige Gurtgliedband 202t-g kann zwischen mindestens zwei Bandrollen 202t-r endlos umlaufend gelagert sein. Das jeweilige Gurtgliedband 202t-g kann eine Vielzahl von Gurtgliedern aufweisen, die mechanisch (z.B. mittels Bolzen) miteinander verbunden sind. Dabei kann die nach außen frei liegende Seite des Gurtgliedbands 202t-g (anschaulich die Seite, die in Kontakt mit dem Leergut 104 kommen kann) gummiert sein.

In analoger Weise kann die Vorbandbaugruppe 402v des Kompaktors 102 als Bandförderer oder Gurtgliedförderer ausgestaltet sein.

Die Kompaktoranordnung 202 kann beispielsweise mindestens eine Selektiervorrichtung 202s aufweisen, die in ähnlicher oder gleicher Weise ausgestaltet sein kann, wie vorangehend beschrieben ist und vice versa.

Die Kompaktoranordnung 202 kann beispielsweise mindestens eine Elektrobaugruppe 428 aufweisen, wie beispielsweise in **Fig.4D** in einer schematischen Ansicht dargestellt ist.

Die Elektrobaugruppe 428 kann beispielsweise elektrische und elektromechanische Bauelemente aufweisen zum Betreiben der Kompaktoranordnung 202, beispielsweise zum Betreiben des Kompaktors 102, der Leergut-Transportvorrichtung 202t, der Vorbandbaugruppe 402v, der Selektiervorrichtung 202s, etc. Als Betreiben kann dabei ein Steuern, ein Regeln, und/oder ein Versorgen mit elektrischer Energie verstanden werden.

Die Elektrobaugruppe 428 kann beispielsweise an dem Tragegestell 204a angeordnet sein oder werden. Die Elektrobaugruppe 428 kann beispielsweise modular ausgestaltet sein und eine Vielzahl von Modulen 428m aufweisen. Die Module 428m können beispielsweise ein oder mehrere Elektronik-Module, ein oder mehrere Elektromechanik-Module, etc., aufweisen. Die Module 428m der Elektrobaugruppe 428 können mittels einer gemeinsamen Lageranordnung 428r (z.B. eines Rahmens, etc.) lösbar (z.B. steckbar) gelagert sein oder werden. Die gemeinsame Lageranordnung 428r kann beispielsweise beweglich eingerichtet sein, z.B. kann diese verschiebbar und/oder schwenkbar eingerichtet sein. Alternativ dazu kann die gemeinsame Lageranordnung 428r ortsfest an dem Tragegestell 204a montiert sein oder werden.

In einigen Ausgestaltungen kann die Selektiervorrichtung 202s beispielsweise als Modul 428m der Elektrobaugruppe 428 ausgestaltet sein. Die Selektiervorrichtung 202s kann beispielsweise eine schwenkbar gelagerte Klappe aufweisen. Die schwenkbar gelagerte Klappe kann derart eingerichtet sein, dass diese in einer ersten Position Leergut 104 von der Leergut-Transportvorrichtung 202t zu dem Kompaktor 102 leitet, anschaulich selektiert, und in einer zweiten Position das Leergut 104 auf der Leergut-Transportvorrichtung 202t zu belassen.

Die Module 428m der Elektrobaugruppe 428 können beispielsweise derart eingerichtet sein, dass diese auf einfache Weise zugänglich sind, so dass diese beispielsweise von einem Benutzer ausgetauscht werden können.

Die Elektrobaugruppe 428 kann beispielsweise mehrere Versorgungs-Module aufweisen, die beispielsweise als Elektrokästen 428e ausgestaltet sind. Beispielsweise kann ein Elektrokasten eingerichtet sein, eine Starkstrom-Versorgung bereitzustellen. Ferner kann ein weiterer Elektrokasten eingerichtet sein, Steuerfunktionen bereitzustellen, z.B. bei einer Niederspannung, z.B. 12 V, 24 V, etc. Die Steuerfunktionen können mittels einer entsprechend eingerichteten Steuerungselektronik realisiert werden. Die Elektrokästen 428e können beispielsweise derart eingerichtet und gelagert sein, dass diese (z.B. nach oben) entnehmbar sind. Somit können diese bei Bedarf beispielsweise mittels weniger Handgriffe ausgetauscht werden. Ferner kann beispielsweise ein Freiraum 428g vorgehalten werden für einen oberseitigen Zugriff zum Schneidwerk.

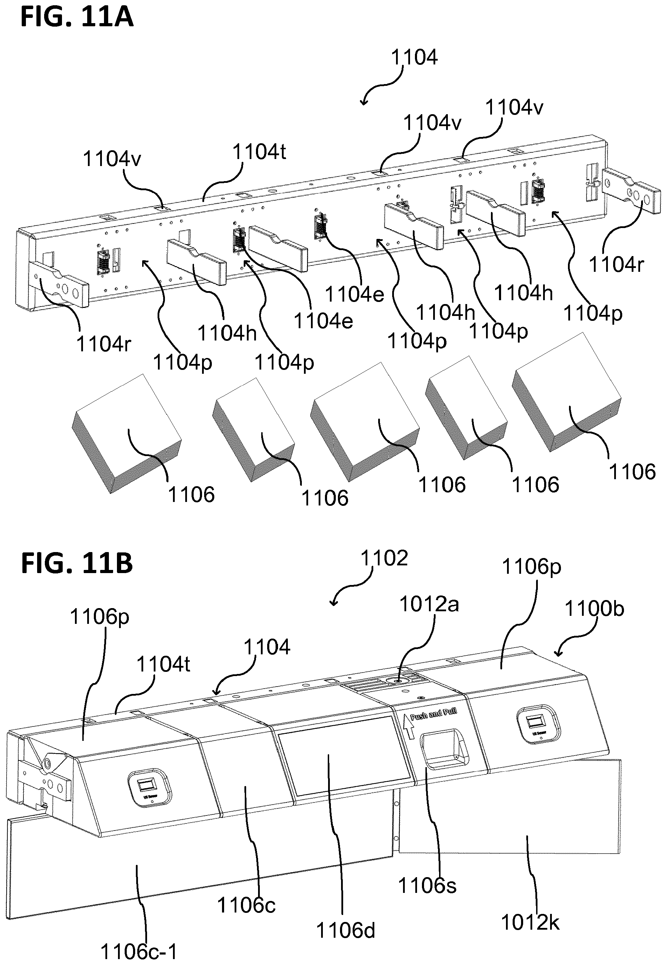

Mehrere Funktionsmodule der Elektrobaugruppe 428 können als Frontbaugruppe 428f (siehe Funktionsmodulanordnung 1102 in den Figuren 11A bis 11D) ausgestaltet sein. Die Frontbaugruppe 428f kann mittels einer elektrischen Schnittstelle (z.B. einer Verkabelungsbrücke) mit den Elektrokästen 428e verbunden sein. Die Funktionsmodule der Frontbaugruppe 428f können mittels der in den Elektrokästen 428e installierten elektrischen Leistungsversorgung mit elektrischer Leistung versorgt werden. Ferner können die Funktionsmodule der Frontbaugruppe 428f mittels der in den Elektrokästen 428e installierten Steuerelektronik, z.B. implementiert mittels mindestens eines Prozessors. Die Steuerelektronik kann je nach Bedarf vordefinierte Steuerbefehle und/oder Steuerabläufe erzeugen, und dementsprechend leistungsstark ausgestaltet sein, z.B. kann eine anwendungsspezifische integrierte Schaltung (ASIC) oder ein Computersystem (z.B. ein System auf einem Chip, SoC) zum Implementieren der Steuerung verwendet werden.

Die Kompaktoranordnung 202 kann beispielsweise mehrere Abdeckungen 408, 418 aufweisen. Die Abdeckungen 408, 418 können beispielsweise einen Teil eines Gehäuses (auch als Einhausung bezeichnet) bilden, welches die Komponenten der Kompaktoranordnung 202 zumindest abschnittweise einhaust. Die Abdeckungen 408, 418 können beispielsweise dazu dienen, Komponenten der Kompaktoranordnung 202 zu schützen und/oder Komponenten, die ein Risiko für einen Benutzer (z.B. eine Hochstromkomponente, ein Schneidwerk, bewegte Bauteile einer Transportvorrichtung, etc.) darstellen, abzuschirmen.

Die Einhausung der Kompaktoranordnung 202 kann beispielsweise unterteilt sein in eine obere Abdeckung 408 (z.B. eine obere Klappe) und in eine untere Abdeckung 418 (z.B. eine untere Klappe, auch als Containerklappe bezeichnet), siehe Fig. 4A. Die obere Abdeckung 408 kann beispielsweise die Transportstrecke (z.B. zumindest abschnittsweise die Leergut-Transportvorrichtung 202t der Kompaktoranordnung 202) abdecken. Die untere Abdeckung 418 kann beispielsweise einen Teil des Tragegestells 204a abdecken sowie einen Aufnahmeraum unterhalb des Tragegestells 204a, wenn dieses angehoben ist, zum Aufnehmen eines Sammelbehälters, wie beispielsweise vorangehend beschrieben ist.

**Fig.4E** veranschaulicht beispielsweise eine obere Abdeckung 408 in einer beispielhaften Ansicht.

Die obere Abdeckung 408 kann beispielsweise passend zu der Elektrobaugruppe 428 bereitgestellt sein, um beispielsweise einen einfachen Zugang zu den Modulen 428m der Elektrobaugruppe 428 zu gewährleisten, z.B. zum Austauschen eines oder mehrerer der Module 428m. Dazu kann die obere Abdeckung 408 derart beweglich montiert sein, dass diese geöffnet und geschlossen werden kann.

Ferner kann die obere Abdeckung 408 derart eingerichtet sein, dass mindestens ein Anzeigeelement eines Moduls 428m der Frontbaugruppe 428f für einen Benutzer sichtbar ist. Beispielsweise kann die obere Abdeckung 408 mindestens ein Sichtfenster 408f aufweisen, durch welches hindurch ein Anzeigeelement eines Moduls 428m der Frontbaugruppe 428f für einen Benutzer sichtbar ist.

Ferner kann die obere Abdeckung 408 derart eingerichtet sein, dass mindestens ein Eingabeelement der Module 428m der Frontbaugruppe 428f für einen Benutzer zugänglich ist.

Ferner kann die obere Abdeckung 408 derart eingerichtet sein, das Leergut 104, welches mittels der Leergut-Transportvorrichtung 202t in der Kompaktoranordnung 202 transportiert wird, für einen Benutzer sichtbar ist. Beispielsweise kann die obere Abdeckung 408 mindestens ein weiteres Sichtfenster 408s aufweisen, durch welches hindurch Leergut, das mittels der Leergut-Transportvorrichtung 202t in der Kompaktoranordnung 202 transportiert wird, für einen Benutzer sichtbar ist.

Die obere Abdeckung 408 kann beispielsweise als obere Klappe eingerichtet sein derart, dass sich diese automatisch öffnet. Das Öffnen kann beispielsweise mittels Gestik-Steuerung erfolgen oder mittels einer anderen Steuerung, z.B. einem Taster, einem Berührungssensor, etc. Der Öffnungsmechanismus der oberen Klappe kann beispielsweise mechanisch mittels zweier Gasdruckfedern realisiert sein oder auf eine andere geeignete Weise. In der entsprechenden Geschlossen-Stellung kann die obere Klappe mittels eines Fangriegelverschlusses gehalten werden. Die obere Abdeckung 408 kann derart bereitgestellt sein, dass diese werkzeugfrei entnehmbar bzw. austauschbar ist.

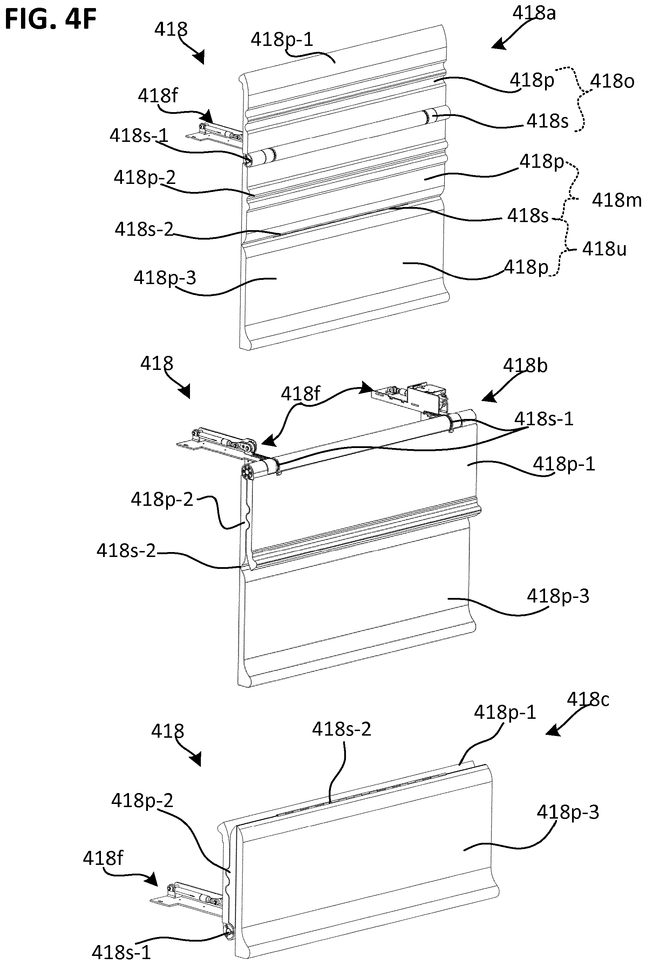

**Fig.4F** veranschaulicht beispielsweise eine untere Abdeckung 418 in verschiedenen Positionen 418a, 418b, 418c in einer beispielhaften Ansicht, gemäß verschiedenen Ausführungsformen.

Die untere Abdeckung 418 kann beispielsweise als eine Klappenanordnung 418 eingerichtet sein derart, dass diese mittels eines mehrteiligen Klappmechanismus in verschiedene Positionen 418a, 418b, 418c bewegt (z.B. geschwenkt bzw. geklappt) werden kann.

Gemäß verschiedenen Ausführungsformen kann die untere Abdeckung 418 eine mehrteilige (z.B. 3-teilige) Klappenanordnung 418 sein, wie nachfolgend im Detail beschrieben ist.

Wie in Fig.4F beispielhaft dargestellt ist, kann die Klappenanordnung 418 mehrere Abdeckplatten 418p aufweisen, z.B. eine erste Abdeckplatte 418p-1, eine zweite Abdeckplatte 418p-2 und eine dritte Abdeckplatte 418p-3. Die mehrere Abdeckplatten 418p können beispielsweise mittels mehrerer Scharnieranordnungen 418s, z.B. einer ersten Scharnieranordnung 418s-1 und einer zweiten Scharnieranordnung 418s-2, in verschiedene Positionen 418a, 418b, 418c bewegt werden.

Die Klappenanordnung 418 kann dabei mindestens eine Fixieranordnung 418f aufweisen. Die Fixieranordnung 418f kann beispielsweise die Klappenanordnung 418 in einer Geschlossen-Stellung 418a, in einer ersten Offen-Stellungen 418b, und/oder in einer zweiten Offen-Stellung 418c fixieren. Zum Fixieren der Klappenanordnung 418 in der jeweiligen Position kann zumindest eine der Abdeckplatten 418 Fixieranordnung 418f ortsfest gehalten werden.

In der Geschlossen-Stellung 418a können die zweite Abdeckplatte 418p-2 und die dritte Abdeckplatte 418p-3 aufgrund der Schwerkraft stabil gelagert sein (anschaulich können diese gemeinsam an der ersten Scharnieranordnung 418s-1 hängen).

Die dreiteilige Klappenanordnung 418 kann anschaulich zweiteilig gegliedert sein, d.h. beispielsweise anschaulich drei Klappen 418o, 418m, 418u aufweisen.

Die erste (z.B. obere) Abdeckplatte 418p-1 kann beispielsweise mit der zugehörigen ersten Scharnieranordnung 418s-1 eine obere Schwenkklappe 418o bilden. Die obere Schwenkklappe 418o kann beispielsweise derart eingerichtet sein, dass diese um ungefähr 180° geschwenkt werden kann, z.B. wenn die Klappenanordnung 418 aus der Geschlossen-Stellung 418a in die erste Offen-Stellung 418b gebracht werden soll und vice versa.

Die obere Schwenkklappe 418o kann beispielsweise in der Geschlossen-Stellung 418a mittels der Fixieranordnung 418f gehalten werden. Die obere Schwenkklappe 418o kann beispielsweise am Tragegestell 204a der Gestellanordnung 204 lösbar fixiert werden, siehe beispielsweise Fig.5A bis 5C.

Die obere Schwenkklappe 418o der Klappenanordnung 418 kann beispielsweise derart eingerichtet sein, dass diese nur geöffnet werden kann (siehe erste Offen-Stellung 418b), wenn die obere Abdeckung 408 bereits geöffnet ist.

Wie beispielsweise in Fig.4F veranschaulicht ist, kann die mittlere Abdeckplatte 418p-2 mit der zugehörigen zweiten Scharnieranordnung 418s-2 eine mittlere Schwenkklappe 418m bilden. Die untere Abdeckplatte 418p-3 kann beispielsweise mit der zugehörigen zweiten Scharnieranordnung 418s-2 eine untere Schwenkklappe 418u bilden.

In der Geschlossen-Stellung 418a können die Schwenkklappen bzw. Abdeckplatten 418 der Klappenanordnung 418 in einer gemeinsamen Ebene angeordnet sein. Die Schwenkklappen bzw. Abdeckplatten 418 der Klappenanordnung 418 bilden dann eine im Wesentlichen geschlossene Fläche.

In der ersten Offen-Stellung 418b können die mittlere Schwenkklappe 418m und die untere Schwenkklappe 418u (bzw. die zweite Abdeckplatte 418p-2 und die dritte Abdeckplatte 418p-3) der Klappenanordnung 418 in einer gemeinsamen Ebene angeordnet sein. Diese bilden dann eine im Wesentlichen geschlossene Fläche. In der ersten Offen-Stellung 418b kann die obere Schwenkklappe 418o (bzw. die erste Abdeckplatte 418p-1) über die mittlere Schwenkklappe 418m (bzw. die zweite Abdeckplatte 418p-2) geklappt sein.

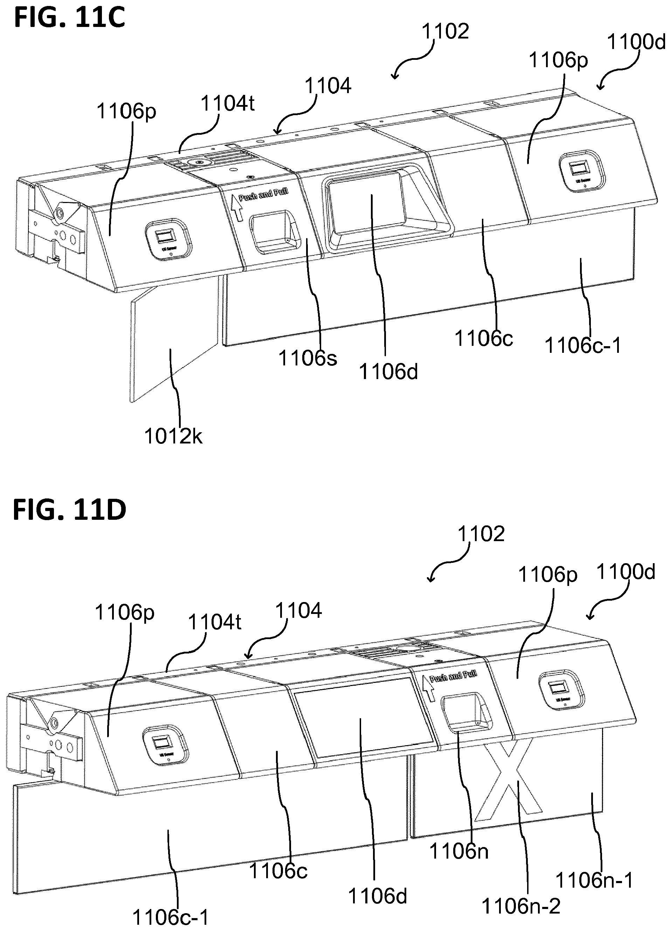

In der zweiten Offen-Stellung 418c, kann die obere Schwenkklappe 418o in der gleichen Stellung sein, wie in der Geschlossen-Stellung 418a. Die mittlere Schwenkklappe 418m sowie die untere Schwenkklappe 418u können einander entgegengesetzt eingeklappt werden und nach oben geschwenkt werden. In der zweiten Offen-Stellung 418c können die drei Schwenkklappen (bzw. Abdeckplatten 418) der Klappenanordnung 418 übereinander angeordnet sein. So wird ein geringer Platzbedarf beim Schwenken benötigt. Ferner wird ein geringer Platzbedarf in der zweiten Offen-Stellung 418c benötigt, so dass die Kompaktoranordnung 202 beispielsweise in diese Position platzsparend transportiert werden kann und gleichzeitig auf einfache Weise montiert werden kann (siehe Fig.11).

Die Klappenanordnung 418 kann beispielsweise derart eingerichtet sein, dass diese händisch unterstützt oder vollautomatisch geöffnet werden kann. Dazu kann die Klappenanordnung 418 eine geeignete Antriebssystematik aufweisen.

Die Klappenanordnung 418 kann beispielsweise derart eingerichtet sein, dass sich die untere Schwenkklappe 418u selbsttätig relativ zu der mittleren Schwenkklappe 418m bewegt, wenn die mittlere Schwenkklappe 418m bewegt wird. Somit kann es beispielsweise ausreichend sein, die mittlere Schwenkklappe 418m mittels eines Aktors zu bewegen um die Klappenanordnung 418 in die zweite Offen-Stellung 418c zu bringen.

Beispielsweise kann ein vollautomatischer Öffnungs- und Schließmechanismus bereitgestellt sein oder werden. Alternativ dazu kann ein vollautomatischer Öffnungsmechanismus und ein manueller Schließmechanismus bereitgestellt sein oder werden, ein manueller Öffnungsmechanismus und ein vollautomatischer Schließmechanismus, oder ein manueller Öffnungs- und Schließmechanismus.

Wie vorangehend beispielhaft beschrieben ist, kann die obere Abdeckung 408 derart eingerichtet sein, dass diese vollautomatisch geöffnet und/oder vollautomatisch geschlossen werden kann. Ferner kann die Klappenanordnung 418 derart eingerichtet sein, dass diese vollautomatisch geöffnet und/oder vollautomatisch geschlossen werden kann.

Dabei kann eine Kompaktoreinrichtung 300, die beispielsweise mehrere Kompaktoranordnungen 202 aufweist, eine zentrale Steuerung aufweisen (z.B. implementiert in der Elektrobaugruppe 428, z.B. implementiert in eine kompaktoranordnung-externe Steuervorrichtung, etc.), zum jeweiligen vollautomatischen Öffnen und/oder vollautomatischen Schließen der unteren Klappenanordnung 418 und/oder der oberen Abdeckung 408. Die jeweilige Bewegung zum Öffnen und/oder Schließen kann mittels eines Sensors ausgelöst werden, z.B. basierend auf Gestenerkennung eines Benutzers, einer Eingabe eines Benutzers an einem Bedienfeld, eines Schalters, etc. Alternativ dazu kann das Öffnen und/oder das Schließen zeitgesteuert erfolgen oder automatisch basierend auf einem Auslöseereignis (z.B. eines Fehlersignals, etc.).

Gemäß verschiedenen Ausführungsformen kann die Fixieranordnung 418f eine mechanische Halterung, eine elektromechanische Halterung, eine magnetische Halterung, eine elektromagnetische Halterung, etc. aufweisen.

Wie in Fig.4F beispielhaft veranschaulicht ist, kann eine Kompaktoranordnung 202, gemäß verschiedenen Ausführungsformen, eine Klappenanordnung 418 aufweisen. Die Klappenanordnung 418 kann an dem Tragegestell 204a montiert sein. Beispielsweise kann die erste Scharnieranordnung 418s-1 an dem Tragegestell 204a befestigt sein. Die zweite Scharnieranordnung 418s-2 kann beispielsweise nur die zweite Abdeckplatte 418p-2 und die dritten Abdeckplatte 418p-3 miteinander beweglich verbinden.

Die mehreren Scharnieranordnungen 418s der Klappenanordnung 418 können beispielsweise derart ausgestaltet sein, dass deren Dreh- bzw. Schwenkachsen im Wesentlichen parallel zueinander ausgerichtet sind.

Die erste Scharnieranordnung 418s-1 kann beispielsweise an einem ersten Endabschnitt der zweiten Abdeckplatte 418p-2 montiert sein und die zweite Scharnieranordnung 418s-2 kann an einem dem ersten Endanschnitt gegenüberliegenden zweiten Endabschnitt der zweiten Abdeckplatte 418p-2 montiert sein.

Wie beispielsweise vorangehend beschrieben ist, kann die Kompaktoranordnung 202 sechs Hauptbaugruppen (siehe Fig.4A, z.B. Tragegestell 204a; Abdeckungen 408, 418; Leergut-Transportvorrichtung 202t; Elektrobaugruppe 428; Fußbaugruppe 204f, 204b; Kompaktor 102) aufweisen. Kernbaugruppe ist dabei ein Tragegestell 204a, z.B. ein Stahlschweißgestell. An diesem Tragkonstrukt können beispielsweise alle anderen Baugruppen angebunden sein oder werden. In einigen Ausgestaltungen wird jede der Hauptbaugruppen mit vier oder weniger Verschraubungen an dem Tragegestell 204a montiert.

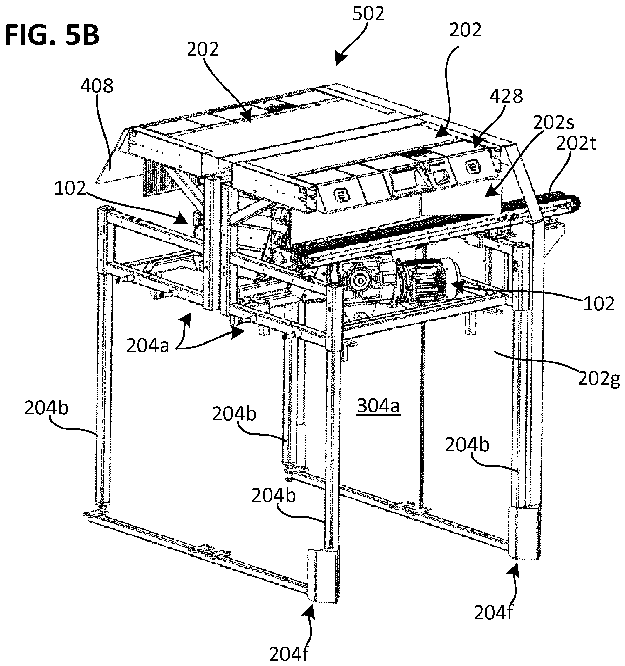

**Fig.5A** bis **Fig.5C** veranschaulichen jeweils einen Kompaktoranordnung-Verbund 502 mit mehreren Kompaktoranordnungen 202 in verschiedenen Darstellungen. Die Kompaktoranordnungen 202 können beispielsweise derart ausgestaltet sein, wie vorangehend beschrieben ist. Der Kompaktoranordnung-Verbund 502 kann anschaulich als ein Doppelmodul 202d ausgestaltet sein, wie in Fig.5A und Fig.5B beispielhaft dargestellt ist.

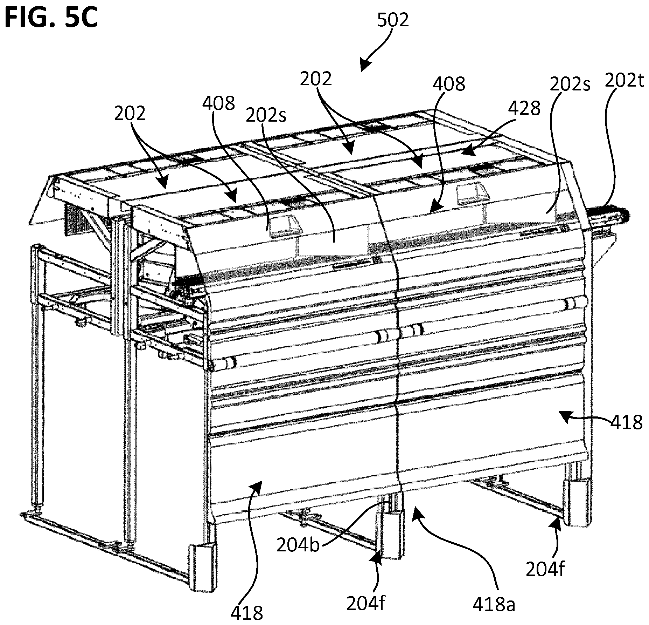

Ferner kann der Kompaktoranordnung-Verbund 502 mehrere Doppelmodule 202d aufweisen, z.B. zwei in Reihe angeordnete Doppelmodule 202d, wie in Fig.5C beispielhaft dargestellt ist. Andere Konfigurationen, z.B. eine einzeln aufgestellte Kompaktoranordnung 202, zwei einzelne in einer Reihe angeordnete Kompaktoranordnungen 202, etc. sind ebenfalls möglich. Dazu kann beispielsweise die jeweilige Gestellanordnung 204 entsprechend modifiziert werden, z.B. kann eine einzelne Kompaktoranordnung 202 mittels vier Stützbeinen 204b aufgestellt sein oder werden und ein Doppelmodul 202d mit zwei Kompaktoranordnungen 202 kann beispielsweise mittels mindestens vier (z.B. vier, sechs oder acht) Stützbeinen 204b aufgestellt sein oder werden.

Das jeweilige Doppelmodul 202d kann beispielsweise zwei Kompaktoranordnungen 202 aufweisen, die Rücken-an-Rücken zueinander angeordnet sind. Somit sind beispielsweise zwei Transportstrecken 306 jeweils von einander gegenüberliegenden Seiten des Doppelmoduls 202d zugänglich. Die Transportstrecken 306 werden von den jeweiligen Leergut-Transportvorrichtungen 202t der Kompaktoranordnungen 202 gebildet.

Mittels jeweils einer Selektiervorrichtung 202s kann Leergut selektiv von den Transportstrecken 306 in den jeweiligen Kompaktor 102 der Kompaktoranordnung 202 geführt werden. Nach dem Zerkleinern des Leerguts kann diese in einem Sammelbehälter gesammelt werden, der unterhalb des jeweiligen Kompaktors 102 in dem Aufnahmeraum 304a angeordnet sein oder werden kann. Zum Austauschen bzw. Einbringen des Sammelbehälters in den Aufnahmeraum 304a und/oder Herausnehmen des Sammelbehälters aus dem Aufnahmeraum 304a kann die Klappenanordnung 418 geöffnet werden, z.B. kann die Klappenanordnung 418 in die zweite Offen-Stellung 418c geklappt werden, wie vorangehend beschrieben ist. Ferner kann die Klappenanordnung 418 zum Warten und/oder Montieren des Kompaktors 102, der Leergut-Transportvorrichtungen 202t, etc. geöffnet werden, z.B. kann die Klappenanordnung 418 in die erste Offen-Stellung 418b geklappt werden, wie vorangehend beschrieben ist.

Wie beispielsweise in Fig.5A und Fig.5B veranschaulicht ist, kann die Klappenanordnung 418 derart eingerichtet sein, dass die zweite Abdeckplatte 418p-2 und die dritte Abdeckplatte 418p-3 den Aufnahmeraum 304a zum Aufnehmen des Sammelbehälters zumindest abschnittsweise abdecken, wenn diese in der Geschlossen-Stellung 418a ist.

Wie beispielsweise in Fig.5C veranschaulicht ist, kann sich eine gemeinsame Leergut-Transportvorrichtung 202t durch zwei einander benachbarte Kompaktoranordnungen 202 hindurch erstrecken. Ferner kann sich die Leergut-Transportvorrichtung 202t durch eine Öffnung in der Seitenwand des Gehäuses 202g hindurch erstrecken und derart eingerichtet sein, dass ein Abstand der Kompaktoranordnung 202 zu einer weiteren Kompaktoranordnung 202 oder zu einem anderen Transportsystem überbrückt werden kann.

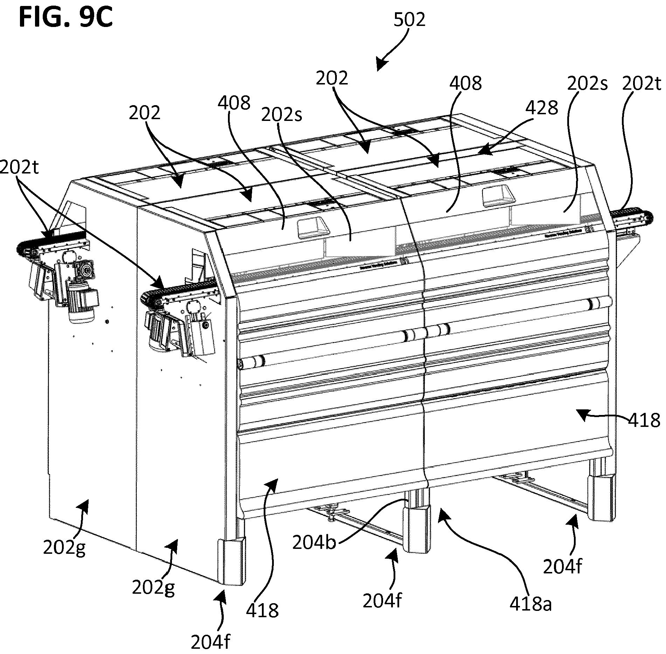

Ferner können weitere Gehäuseteile montiert werden, z.B. seitliche Gehäuseteile, obere Gehäuseteile, etc., wie beispielsweise in Fig.9C veranschaulicht ist.

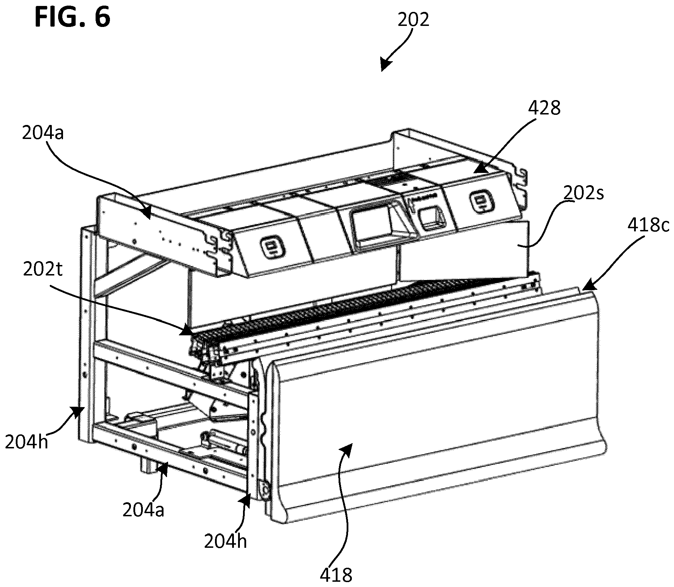

**Fig.6** veranschaulicht eine Kompaktoranordnung 202 in einer schematischen Darstellung, z.B. während des Transportierens, z.B. vor dem Aufstellen.

Dabei kann die Kompaktoranordnung 202 modular ausgestaltet sein, z.B. wie vorangehend beschrieben ist. Aufgrund einer modularen Ausgestaltung, insbesondere der Gestellanordnung 204 und/oder der Klappenanordnung 418, kann die Kompaktoranordnung 202 auf einfache Weise transportiert und aufgestellt werden. Während eines Transports kann die Kompaktoranordnung 202 mittels weniger Montageschritte auf ein geringes Volumen gebracht werden. In analoger Weise kann die Kompaktoranordnung 202 mittels weniger Montageschritte aufgestellt werden.

Wie beispielsweise in Fig.6 dargestellt ist, kann die Klappenanordnung 418, wie vorangehend beschrieben, in der zweiten Offen-Stellung 418c sein, während die Kompaktoranordnung 202 zu deren Aufstellort transportiert und/oder von deren Aufstellort abtransportiert wird.

In dieser Position können die Abdeckplatten 418 der Klappenanordnung 418 mittels der Fixieranordnung 418f oder mittels einer weiteren Fixieranordnung gehalten werden. Anschaulich kann eine Fixieranordnung oder können mehrere Fixieranordnungen zum Fixieren der drei Abdeckplatten 418 der Klappenanordnung 418 in der zweiten Offen-Stellung 418c eingerichtet sein.

In der zweiten Offen-Stellung 418c kann beispielsweise ein Bereich des Tragegestells 204a, in dem der Kompaktor 102 angeordnet ist oder aufgenommen werden kann, von mindestens der ersten Abdeckplatte 418p-1 zumindest abschnittsweise abgedeckt sein. Die Elektrobaugruppe 428 der Kompaktoranordnung 202 kann beispielsweise zugänglich sein, unabhängig von der Position der Klappenanordnung 418. Die Leergut-Transportvorrichtung 202t kann beispielsweise abschnittsweise abgedeckt sein, z.B. kann ein direkter Zugang von vorn mittels der Klappenanordnung 418 verhindert sein, wenn diese in der Geschlossen-Stellung 418a oder in der zweiten Offen-Stellung 408c ist, aber nicht verhindert sein, wenn die Klappenanordnung 418 in der ersten Offen-Stellung 408b ist.

Eine modulare Ausgestaltung der weiteren Komponenten der Kompaktoranordnung 202, insbesondere der Elektrobaugruppe 428, der Leergut-Transportvorrichtung 202t, des Kompaktors 102, etc. kann die Kompaktoranordnung 202 auf einfache Weise gewartet werden, zum Beispiel können defekte Bauteile auf einfache Weise ausgetauscht werden, verschmutzte Teile auf einfache Weise gereinigt werden, etc.

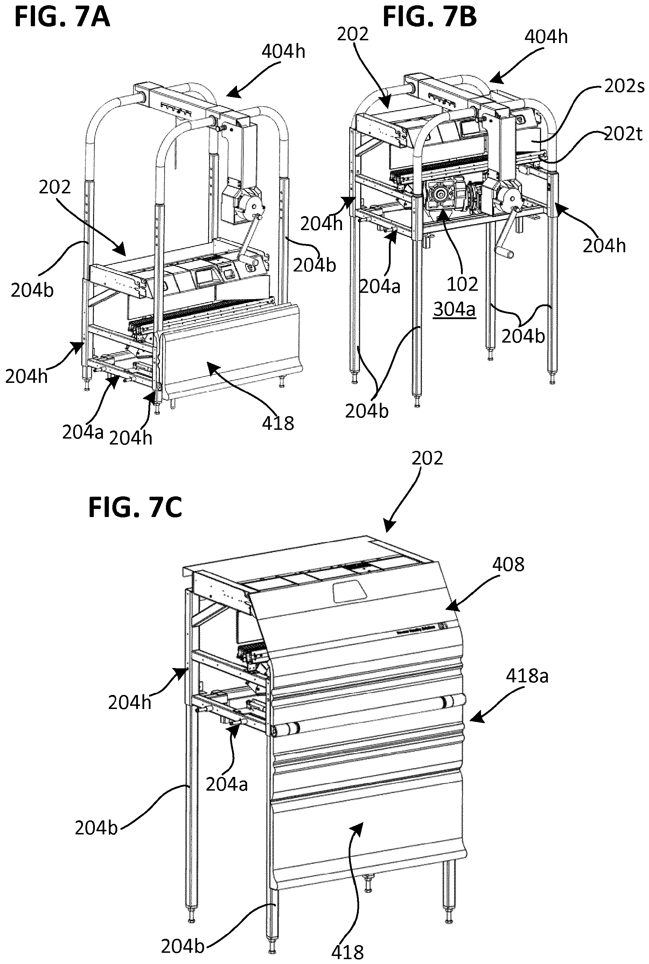

**Fig.7A** bis **Fig.7C** veranschaulichen eine Kompaktoranordnung 202 in verschiedenen Darstellungen, z.B. während des Aufstellens bzw. Montierens der mehreren Kompaktoranordnungen 202.

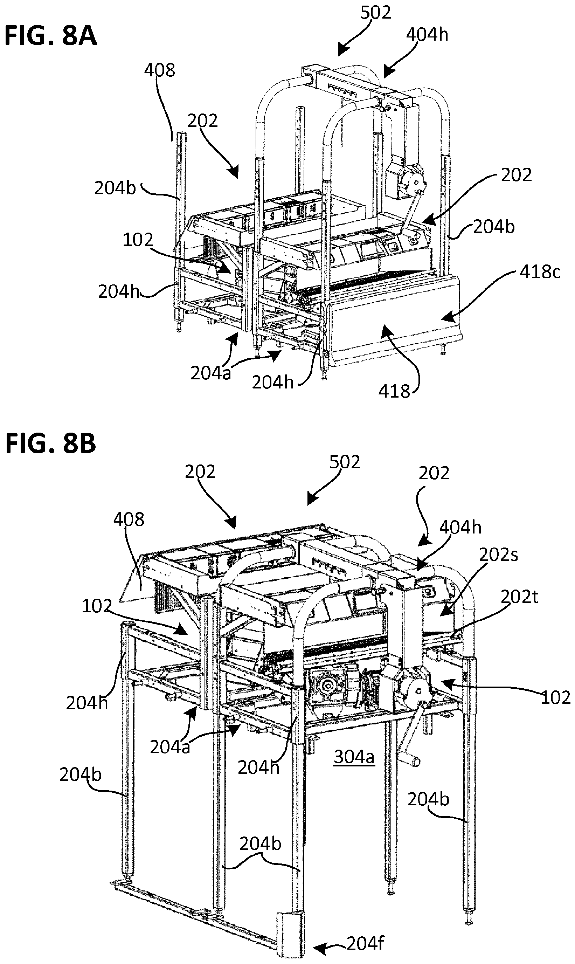

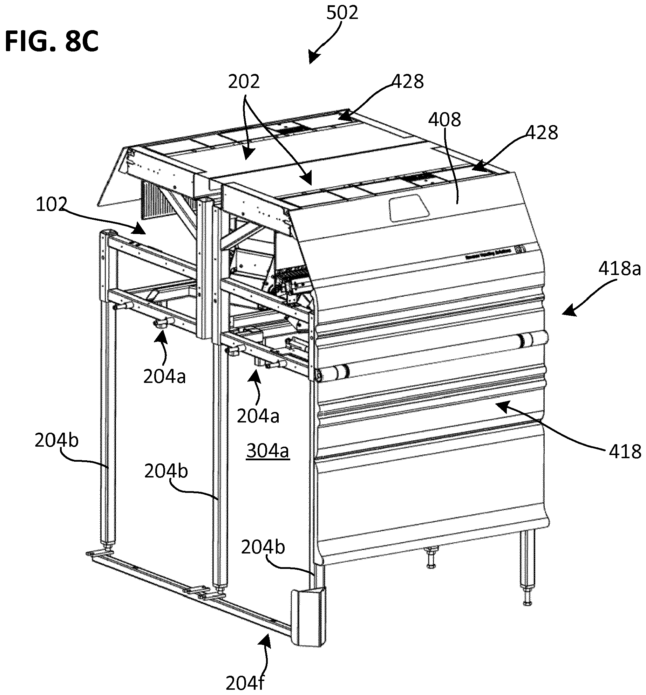

**Fig.8A** bis **Fig.8C** veranschaulichen zwei Kompaktoranordnungen 202 (z.B. ein Doppelmodul 202d bzw. ein Kompaktoranordnung-Verbund 502) in verschiedenen Darstellungen, z.B. während des Aufstellens bzw. Montierens der zwei Kompaktoranordnungen 202.

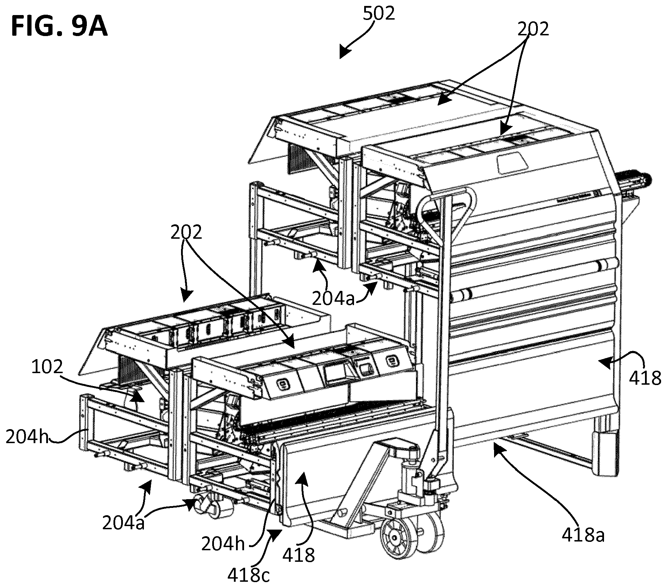

**Fig.9A** bis **Fig.9C** veranschaulichen vier Kompaktoranordnungen 202 (z.B. zwei Doppelmodule 202d bzw. ein Kompaktoranordnung-Verbund 502) in verschiedenen Darstellungen, z.B. während des Aufstellens bzw. Montierens der vier Kompaktoranordnungen 202.

Fig.7A, Fig.8A und Fig.9A zeigen jeweils beispielhaft eine oder mehrere auf dem Boden abgestellte Kompaktoranordnungen 202 (siehe ferner beispielsweise Fig.6). Dabei kann das Tragegestell 204a der Gestellanordnung 204 mehrere Hohlprofile 204h aufweisen. Diese Hohlprofile 204h sind beispielsweise derart passend zu den Stützbeinen 204b der Gestellanordnung 204 ausgestaltet, dass je ein Stützbein 204b durch je ein Hohlprofil 204h hindurch gesteckt werden kann zum Aufstellen des Tragegestells 204a auf dem Boden.

Die Stützbeine 204b können beispielsweise mittels einer Hubvorrichtung 404h durch die mehreren Hohlprofile 204h hindurch bewegt werden zum Anheben des Tragegestells 204a auf eine vordefinierte Höhe, wie beispielsweise jeweils in Fig.7B, Fig.8B und Fig.9B veranschaulicht ist.

Die Hubvorrichtung 404h kann beispielsweise derart eingerichtet sein, dass eine Kraft zwischen dem Tragegestell 204a und den Stützbeinen 204b übertragen wird zum Anheben des Tragegestells 204a. Die Hubvorrichtung 404h kann dazu beispielsweise auf den mehreren Stützbeinen 204b abgestützt (z.B. aufgesteckt oder aufgesetzt) sein oder werden. Das Tragegestell 204a kann beispielsweise eine Aufhängstruktur aufweisen zum Ankuppeln der Hubvorrichtung (zum Beispiel mittels eines Zugmittels, z.B. ein Seil, eine Kette, etc.), so dass das Tragegestell 204a mittels der Hubvorrichtung 404h angehoben werden kann.

Eine Verbindungsstruktur (z.B. Bolzen, Schrauben, etc.) kann zum Verbinden des Tragegestells 204a mit den mehreren Stützbeinen 204b verwendet werden, dass das Tragegestell 204a auf den Stützbeinen 204b in der vordefinierten Höhe abgestützt wird.

Ferner kann das Tragegestell 204a ein erstes Tragegestellteil und ein zweites Tragegestellteil (beispielsweise einen Tragrahmen 402t, wie vorangehend beschrieben ist) aufweisen. Dabei kann der Kompaktor 102 der Kompaktoranordnung 202 auf dem zweiten Tragegestellteil angeordnet sein. Das erste Tragegestellteil kann derart eingerichtet sein (siehe beispielsweise FIG.4A, Fig.4B und Fig.5B), dass dieses einen Aufnahmeraum zum Aufnehmen des auf dem zweiten Tragegestellteil angeordneten Kompaktors 102 bildet.

Anschaulich kann die Kompaktoranordnung 202 beispielsweise in folgender Weise montiert (z.B. aufgestellt) werden: Aufstellen eines Tragegestells 204a auf einen Untergrund, wobei das Tragegestell 204a mehrere Hohlprofile 204h aufweist; Einstecken mehrerer Stützbeine 204b in die mehreren Hohlprofile 204h hinein, wobei jeweils ein Stützbein 204b der mehreren Stützbeine 204b in ein Hohlprofil 204h der mehreren Hohlprofile 204h gesteckt ist; Durchschieben der jeweiligen Stützbeine 204b durch die zugehörigen Hohlprofile 204h zum Anheben des Tragegestells 204a auf eine vordefinierte Höhe; und Verbinden des Tragegestells 204a mit den mehreren Stützbeinen 204b, so dass das Tragegestell 204a auf den mehreren Stützbeinen 204b in der vordefinierten Höhe abgestützt wird. Dabei kann zum Durchschieben der Stützbeine 204b durch die Hohlprofile 204h hindurch eine Hubkraft (z.B. mittels eine Zugmittels erzeugt) zwischen den Stützbeinen 204b und dem Tragegestell 204a erzeugt werden.

Anschaulich kann das Tragegestell 204a mittels der Stützbeine 204b und der Hubvorrichtung 404h selbsthebend aufgestellt werden.

Fig.7C, Fig.BC und Fig.9C zeigen jeweils beispielhaft eine oder mehrere aufgestellte Kompaktoranordnungen 202 (siehe ferner beispielsweise Fig.5A bis 5C und Fig.6).

Nach dem Anheben der jeweiligen Kompaktoren 102 mittels des Tragegestells 204a und der Stützbeine 204b auf eine vordefinierte Höhe, können beispielsweise weitere Komponenten der Kompaktoranordnung 202 montiert werden. Beispielsweise kann die obere Abdeckung 408 der jeweiligen Kompaktoranordnung 202 montiert werden. Ferner kann eine gemeinsame Leergut-Transportvorrichtung 202t montiert werden. Ferner kann ein Gehäuse 202g montiert werden, z.B. können ein oder mehrere Gehäuseteile montiert werden. Das Gehäuse kann beispielsweise seitliche und/oder obere Gehäuseteile aufweisen.

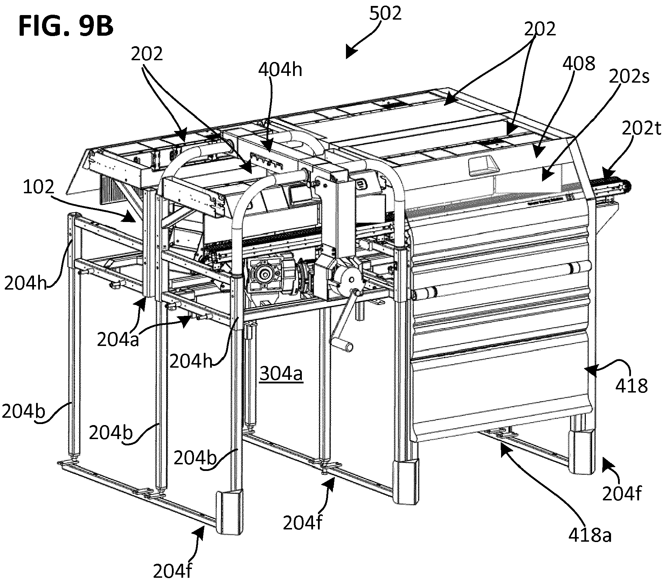

Wie in Fig.8B und 9B veranschaulicht ist, können mehrere Kompaktoranordnungen 202 mittels einer gemeinsamen Fußbaugruppe 204f montiert werden.

Wie in Fig.8B und 9B veranschaulicht ist, können beispielsweise zwei miteinander gekuppelte Tragegestelle 204a zweier Kompaktoranordnungen 202 gemeinsam angehoben werden. Dazu können sechs Stützbeine 204b verwendet werden. Anschließend können die mittleren zwei Stützbeine 204b wieder demontiert werden und die zwei Kompaktoranordnungen 202 können mittels vier Stützbeinen 204b aufgestellt sein.

Wie in Fig.9A veranschaulicht ist, kann die Kompaktoranordnung 202 mit demontierten Stützbeinen 204b geliefert werden und beispielsweise mittels eines Hubwagens transportiert werden.

Das Tragegestell 204a kann beispielsweise zweiteilig ausgestaltet sein, d.h. ein erstes und ein zweites Tragegestellteil aufweisen. Beispielsweise kann die Gestellanordnung 204 das Tragegestell 204a als erstes Tragegestellteil aufweisen, wie beispielsweise in Fig.4A dargestellt ist, und ferner kann die Gestellanordnung 204 den Tragrahmen 402t als zweites Tragegestellteil aufweisen, wie beispielsweise in Fig.4B dargestellt ist. Die beiden Tragegestellteile können beispielsweise lösbar miteinander gekuppelt sein oder werden, wie beispielsweise in Fig.6 und in den Figuren 7A bis 9C dargestellt ist.

Der Kompaktor 102 zum Kompaktieren von Leergut 104 kann beispielsweise auf dem zweiten Tragegestellteil angeordnet sein, wobei das erste Tragegestellteil 402t mit den Stützbeinen 204b verbunden werden kann. Somit kann beispielsweise der Kompaktor 102 ausgetauscht werden, ohne den Rest der Kompaktoranordnung 202 zu demontieren. Der Kompaktor 102 kann beispielsweise gemeinsam mit dem zweiten Tragegestellteil mittels einer Hubvorrichtung abgesenkt werden, während das erste Tragegestellteil mittels der Stützbeine aufgestellt bleibt.

Ein Montieren der Kompaktoranordnung 202 kann beispielsweise Folgendes aufweisen: Aufstellen eines ersten Tragegestellteils, wobei das erste Tragegestellteil einen Aufnahmeraum zum Aufnehmen eines zweiten Tragegestellteils aufweist; Anordnung des zweiten Tragegestellteils unterhalb des Aufnahmeraums, wobei ein Kompaktor auf dem zweiten Tragegestellteil angeordnet ist; Einbringen des auf dem zweiten Tragegestellteil angeordneten Kompaktors in den Aufnahmeraum des ersten Tragegestellteils; und anschließend Befestigen des zweiten Tragegestellteils an dem ersten Tragegestellteil mittels einer lösbaren Verbindung.

Wie beispielsweise vorangehend beschrieben ist (siehe beispielsweise Fig.2A bis Fig.3B), kann die Kompaktoranordnung 202, gemäß verschiedenen Ausführungsformen, eine Selektiervorrichtung 202s aufweisen. Die Selektiervorrichtung 202s kann, gemäß verschiedenen Ausführungsformen, beispielsweise an dem Tragegestell 204a montiert sein, z.B. oberhalb der Leergut-Transportvorrichtung 202t. Alternativ dazu kann die Selektiervorrichtung 202s, gemäß verschiedenen Ausführungsformen, als ein Funktionsmodul ausgestaltet sein (siehe beispielsweise Figuren 4D und 11A bis 11D).

Im Folgenden werden verschiedene Ausführungsformen der Selektiervorrichtung 202s in Kombination mit einer Schutzvorrichtung 1002 im Detail beschrieben. In dieser Ausgestaltung ergeben sich anschaulich zumindest zwei verschiedene Betriebsmodi für die Kompaktoranordnung 202, einen ersten Betriebsmodus (anschaulich ein Normalbetrieb), in welchem Leergut 104 mittels der Selektiervorrichtung 202s selektiert und kompaktiert wird, und einen zweiten Betriebsmodus (anschaulich ein Notbetrieb), in welchem beispielsweise eine Wartung der Kompaktoranordnung 202 erfolgen kann, wobei in dem Notbetrieb eine Schutzvorrichtung 1002 verwendet wird, um einen Eingriff in den Kompaktor 102 zu verhindern. Anschaulich kann im Notbetrieb ein Benutzer, welcher die Wartung der Kompaktoranordnung 202 durchführen soll, geschützt werden, indem ein Eingriffsschutz bereitgestellt wird. Somit kann die Kompaktoranordnung 202 im Notbetrieb weiterhin ausgewählte Funktionen beibehalten, z.B. kann die Leergut-Transportvorrichtung 202t weiterhin betrieben werden, um das Leergut 104 durch die Kompaktoranordnung 202 hindurch zu transportieren, so dass beispielsweise in Reihe angeordnete Kompaktoranordnungen 202 (siehe Fig.3A und Fig.3B) nicht komplett stillgelegt werden müssen, während eine der Kompaktoranordnungen 202 gewartet wird.

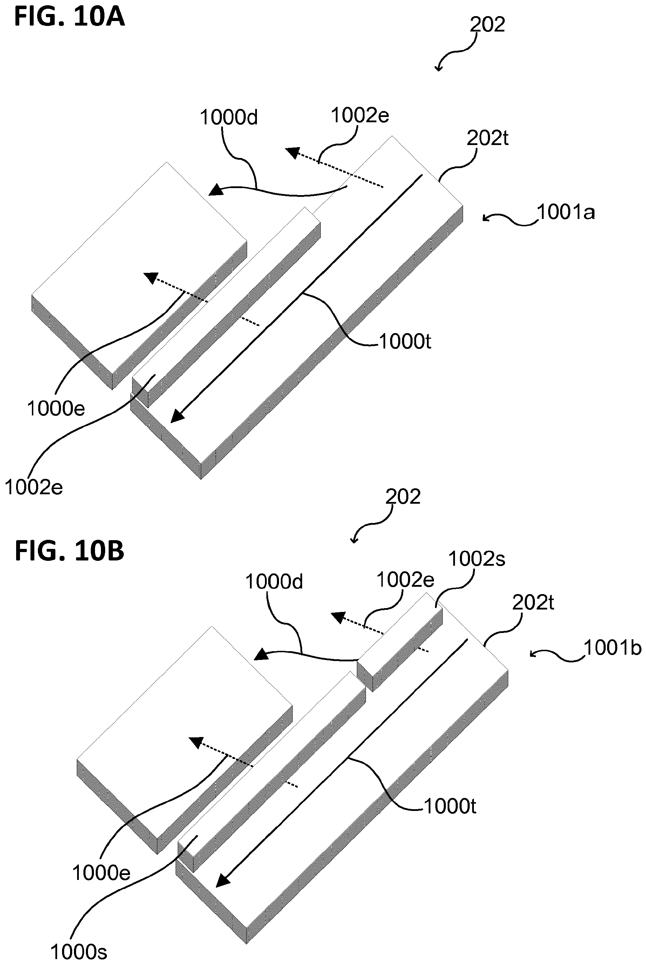

**Fig.10A** und **Fig.10B** veranschaulichen eine Kompaktoranordnung 202 in jeweils einer schematischen Ansicht, gemäß verschiedenen Ausführungsformen.

Die Kompaktoranordnung 202 kann beispielsweise einen Kompaktor 102 aufweisen. Ferner kann die Kompaktoranordnung 202 eine Leergut-Transportvorrichtung 202t aufweisen. Die Leergut-Transportvorrichtung 202t ist beispielsweise eingerichtet zum Transportieren von Leergut 104 in der Kompaktoranordnung 202 in einem Transportbereich 1000t oberhalb der Leergut-Transportvorrichtung 202t.

Ferner kann die Kompaktoranordnung 202 eine erste Eingriff-Schutzstruktur 1000s aufweisen. Die erste Eingriff-Schutzstruktur 1000s kann beispielsweise derart angeordnete sein, dass diese den Transportbereich 1000t abschnittsweise seitlich begrenzt. Die erste Eingriff-Schutzstruktur 1000s kann dabei zwischen dem Transportbereich 1000t und dem Kompaktor 102 bereitgestellt sein. Anschaulich kann die erste Eingriff-Schutzstruktur 1000s derart bereitgestellt sein, dass ausgehend von dem Transportbereich 1000t ein Eingriff 1000e (z.B. mit der Hand eines Benutzers) in Richtung des Kompaktors 102 verhindert werden kann. Dabei kann beispielsweise ein Eingriff in den Transportbereich 1000t dann möglich sein, wenn die obere Abdeckung 408 geöffnet ist (vgl. beispielsweise Fig.4E und Fig.9C).

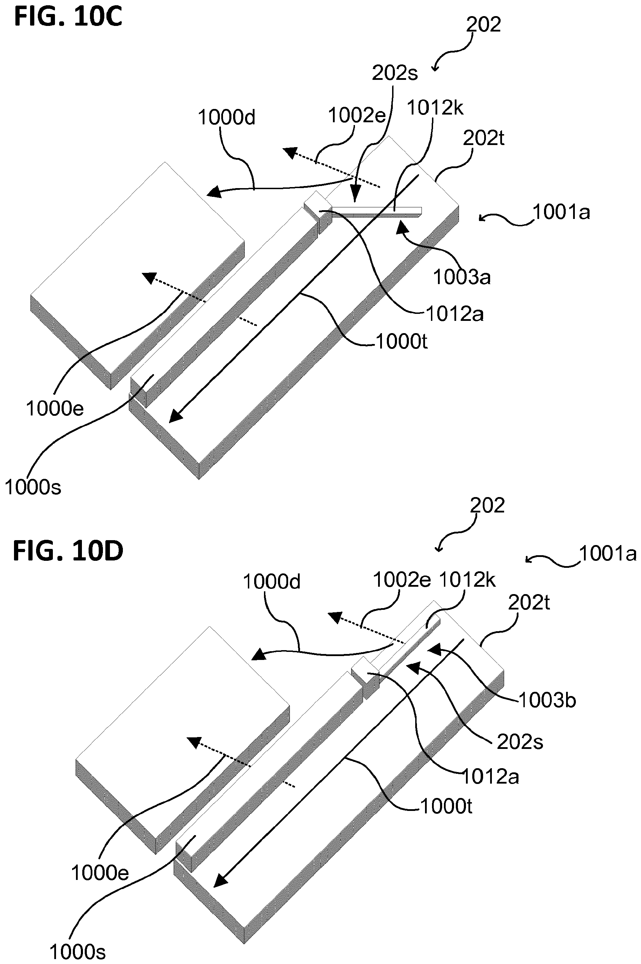

Die erste Eingriff-Schutzstruktur 1000s kann beispielsweise einen Zuführbereich 1000d definieren. Dieser dient zum Zuführen von Leergut 104 seitlich aus dem Transportbereich heraus 1000t heraus zu dem Kompaktor 102 hin. Wie hierin beschrieben ist, kann beispielsweise das Leergut 104 selektiv dem Kompaktor 102 zugeführt werden. Dazu kann eine Selektiervorrichtung 202s verwendet werden, wie beispielsweise in Fig.10C und Fig.10D veranschaulicht ist.

Ferner kann die Kompaktoranordnung 202 eine Schutzvorrichtung 1002, welche derart eingerichtet ist, dass wahlweise einen Eingriff 1002e aus Richtung des Transportbereichs 1000t in den Zuführbereich 1000d verhindern werden kann. Dazu kann die Schutzvorrichtung 1002 eine zweite Eingriff-Schutzstruktur 1002s aufweisen.

Fig.10A veranschaulicht beispielsweise einen Zustand der Kompaktoranordnung 202, in dem der Eingriff 1002e in den Zuführbereich 1000d nicht mittels einer Schutzvorrichtung 1002 verhindert ist, z.B. gemäß einem ersten Betriebsmodus 1001a (anschaulich einem Normalbetrieb); und Fig.10B veranschaulicht beispielsweise den Zustand der Kompaktoranordnung 202, in dem der Eingriff 1002e in den Zuführbereich 1000d mittels einer Schutzvorrichtung 1002 verhindert ist, z.B. gemäß einem zweiten Betriebsmodus 1001b (anschaulich einem Notbetrieb).

Anschaulich können sich die erste Eingriff-Schutzstruktur 1000s und die zweite Eingriff-Schutzstruktur 1002s der Schutzvorrichtung 1002 funktional ergänzen und somit einen vollständigen Eingriffsschutz ausgehend von dem Transportbereich 1000t in Richtung des Kompaktors 102 bilden. Ein Kompaktor 102, insbesondere dessen Schneidwerk und/oder andere rotierende Elemente, kann ein Sicherheitsrisiko sein, wenn dieser für die Hände eines Benutzers während des Betriebs des Kompaktors 102 frei zugänglich ist.

**Fig.10C** und **Fig.10D** veranschaulichen eine Kompaktoranordnung 202, wie beispielsweise vorangehend beschrieben ist, mit einer Selektiervorrichtung 202s in jeweils einer schematischen Ansicht, gemäß verschiedenen Ausführungsformen.

Dabei kann die Selektiervorrichtung 202s derart eingerichtet sein, dass Leergut 104 selektiv aus dem Transportbereich 1000t heraus und durch den Zuführbereich 1000d hindurch dem Kompaktor 102 zugeführt werden kann.

Zum selektiven Zuführen des Leerguts 104 zu dem Kompaktor 102 kann die Selektiervorrichtung 202s eine Selektierklappe 1012k und einen Stellantrieb 1012a zum Bewegen der Selektierklappe 1012k aufweisen. Die Selektierklappe 1012k kann beispielsweise in eine erste Stellung 1003a und in eine zweite Stellung 1003b gebracht werden. Die Selektierklappe 1012k kann beispielsweise schwenkbar gelagert sein und die die beiden Stellungen 1003a, 1003b geschwenkt werden. Dabei kann die Selektiervorrichtung 202s derart eingerichtet sein, dass, wenn die Selektierklappe 1012k in der ersten Stellung 1003a ist, Leergut 104, welches mittels der Leergut-Transportvorrichtung 202t transportiert wird, mittels der Selektierklappe 1012k durch den Zuführbereich 1000d hindurch dem Kompaktor 102 zugeführt werden kann (siehe beispielsweise Fig.10C). Ferner kann die Selektiervorrichtung 202s derart eingerichtet sein, dass, wenn die Selektierklappe 1012k in der zweiten Stellung 1003b ist, Leergut 104 mittels der Leergut-Transportvorrichtung 202t in dem Transportbereich 1000t durch die Kompaktoranordnung 202 hindurch transportiert werden kann (siehe beispielsweise Fig.10D).

Gemäß verschiedenen Ausführungsformen kann die Selektiervorrichtung 202s derart eingerichtet sein, dass der Zuführbereich 1000d mittels der Selektierklappe abgedeckt ist, wenn die Selektierklappe 1012k in der zweiten Stellung 1003b ist.

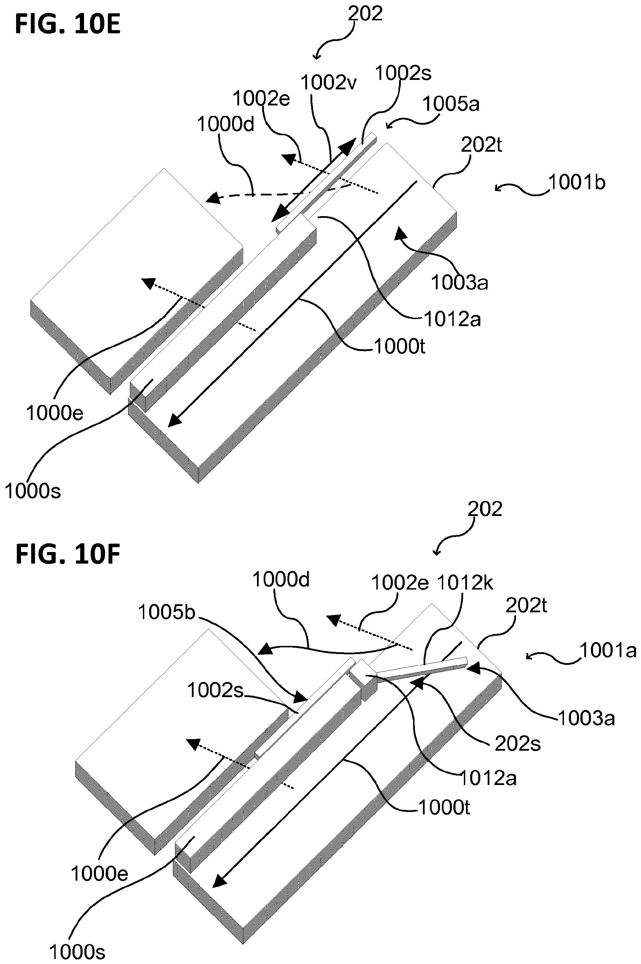

Gemäß verschiedenen Ausführungsformen kann die Schutzvorrichtung 1002 wahlweise zu der Selektiervorrichtung 202s montiert sein oder werden. Beispielsweise können diese modular ausgestaltet sein, und wahlweise verwendet werden, wie nachfolgend noch im Detail beschrieben ist. Alternativ dazu können die Schutzvorrichtung 1002 und die Selektiervorrichtung 202s unabhängig voneinander montiert sein oder werden, siehe beispielsweise Fig.10E und Fig.10F.

**Fig.10E** und **Fig.10F** veranschaulichen eine Kompaktoranordnung 202, wie beispielsweise vorangehend beschrieben ist, mit einer Schutzvorrichtung 1002 in jeweils einer schematischen Ansicht, gemäß verschiedenen Ausführungsformen.

Gemäß verschiedenen Ausführungsformen kann die zweite Eingriff-Schutzstruktur 1002s der Schutzvorrichtung 1002 als eine Schutzplatte ausgestaltet sein. Die Schutzplatte 1002s kann derart beweglich 1002v gelagert ist, dass diese in eine erste Position 1005a und eine zweite Position 1005b bewegt werden kann.

Dabei kann die Schutzvorrichtung 1002 derart eingerichtet sein, dass die Schutzplatte 1002s beispielsweise in der ersten Position 1005a den Zuführbereich 1000d abdeckt und/oder in dem Zuführbereich 1000d angeordnet ist zum Verhindern des Eingriffs aus Richtung des Transportbereichs 1000t in den Zuführbereich. In diesem Fall kann beispielsweise die Selektiervorrichtung 202s demontiert sein oder werden, während mittels die Schutzplatte 1002s der Schutzvorrichtung 1002 der Zuführbereich 1000d abgedeckt wird, wie in Fig.10E beispielhaft veranschaulicht ist.

Ferner kann die Schutzvorrichtung 1002 derart eingerichtet sein, dass die Schutzplatte 1002s beispielsweise in der zweiten Position 1005b den Zuführbereich 1000d freigibt bzw. den Zuführbereich 1000d nicht abdeckt oder nicht in dem Zuführbereich 1000d angeordnet ist. In diesem Fall kann beispielsweise die Selektiervorrichtung 202s montiert sein oder werden, während die Schutzplatte 1002s den Betrieb der Selektiervorrichtung 202s nicht stört, wie in Fig.10F beispielhaft veranschaulicht ist.

Gemäß verschiedenen Ausführungsformen kann die Schutzplatte 1002s der Schutzvorrichtung 1002 derart eingerichtet sein, dass diese manuell oder automatisch bewegt 1002v werden kann.

Gemäß verschiedenen Ausführungsformen kann die Kompaktoranordnung 202 in zwei verschiedenen Betriebsmodi 1001a, 1001b betrieben werden (siehe beispielsweise Fig.10A bis 10F). Dabei kann die Konfiguration 1003a, 1003b, 1005a, 1005b der Kompaktoranordnung 202 entsprechend angepasst sein oder werden. In dem ersten Betriebsmodus 1001a kann beispielsweise das Leergut 104 mittels der Leergut-Transportvorrichtung 202t in dem Transportbereich 1000t transportiert werden, und mittels einer Selektiervorrichtung 202s selektiv aus dem Transportbereich 1000t heraus und durch den Zuführbereich 1000d hindurch zu dem Kompaktor 102 geführt werden. In dem zweiten Betriebsmodus 1001b kann das Leergut 104 mittels der Leergut-Transportvorrichtung 202t in dem Transportbereich 1000t durch die Kompaktoranordnung 202 hindurch transportiert werden (z.B. in einen nachfolgende Kompaktoranordnung 202 hinein, wie beispielsweise in Fig.3A und 3B veranschaulicht ist), und der Zuführbereich 1000d kann mittels einer Eingriff-Schutzstruktur 1002s einer Schutzvorrichtung 1002 vor einem Eingriff aus Richtung des Transportbereichs 1000t geschützt werden.

Gemäß verschiedenen Ausführungsformen kann die Selektiervorrichtung 202s als ein Funktionsmodul einer Funktionsmodulanordnung ausgestaltet. Gemäß verschiedenen Ausführungsformen können die Selektiervorrichtung 202s und die Schutzvorrichtung 1002 als Funktionsmodule einer Funktionsmodulanordnung ausgestaltet sein, wie nachfolgend im Detail beschrieben ist.

Wie beispielsweise vorangehend beschrieben ist (siehe beispielsweise Fig.4D), kann die Kompaktoranordnung 202, gemäß verschiedenen Ausführungsformen, eine Funktionsmodulanordnung (auch als Frontbaugruppe 428f bezeichnet) aufweisen, welche Teil der Elektrobaugruppe 428 sein kann oder mit der Elektrobaugruppe gekoppelt sein kann. Die Funktionsmodulanordnung kann beispielsweise an dem Tragegestell 204a montiert sein, z.B. oberhalb der Leergut-Transportvorrichtung 202t.

Die Funktionsmodulanordnung kann zumindest ein Funktionsmodul aufweisen, welches die Funktion der vorangehend beschriebenen Selektiervorrichtung 202s übernimmt (hierin als Selektiermodul bezeichnet). Somit kann die Selektiervorrichtung 202s auf einfache Weise montiert bzw. demontiert werden, z.B. mittels Einsteckens in eine passende Modulaufnahme. Dabei kann die Schutzvorrichtung 1002 beispielsweise eine beweglich gelagerte zweite Eingriff-Schutzstruktur 1002s (z.B. in Form einer Schutzplatte) aufweisen (siehe beispielsweise Fig.10E und Fig.10F). Alternativ dazu kann die Funktionsmodulanordnung zumindest zwei Funktionsmodule aufweisen, wobei eines die Funktion der vorangehend beschriebenen Selektiervorrichtung 202s übernimmt (hierin als Selektiermodul bezeichnet) und ein anderes die Funktion der vorangehend beschriebenen Schutzvorrichtung 1002 übernimmt (hierin als Schutzmodul bezeichnet).

Im Folgenden werden verschiedene Ausführungsformen der Modulaufnahme und der Funktionsmodule Funktionsmodulanordnung im Detail beschrieben.

**Fig.11A** veranschaulicht beispielhaft eine Modulaufnahme 1104 einer Funktionsmodulanordnung 1102 in einer schematischen Ansicht, gemäß verschiedenen Ausführungsformen. **Fig.11B** bis **Fig.11D** veranschaulichen jeweils beispielhaft eine Funktionsmodulanordnung 1102 mit der Modulaufnahme 1104 und entsprechend in dieser aufgenommenen Funktionsmodulen 1106 in verschiedenen beispielhaften Konfigurationen 1100b bis 1100d.

Gemäß verschiedenen Ausführungsformen kann die Funktionsmodulanordnung 1102 eine Modulaufnahme 1104 aufweisen. Die Modulaufnahme 1104 kann eingerichtet sein, dass mehrere Funktionsmodule 1106 in der Modulaufnahme 1104 aufgenommen werden können.

Ferner kann die Funktionsmodulanordnung 1102 die mehreren Funktionsmodule 1106 aufweisen, welche derart eingerichtet sind, dass diese in der Modulaufnahme 1104 aufgenommen werden können. Anschaulich kann ein Satz an Funktionsmodulen 1106 bereitgestellt sein, wobei ein oder mehrere der Funktionsmodule 1106 aus dem jeweiligen Satz an Funktionsmodulen 1106 wahlweise in der Modulaufnahme 1104 aufgenommen werden können.

Dabei sind die Modulaufnahme 1104 und die mehreren Funktionsmodule 1106 (z.B. die Funktionsmodule 1106 aus dem Satz an Funktionsmodulen 1106) derart bereitgestellt, dass die Funktionsmodule 1106 gemäß verschiedenen Konfigurationen in die Modulaufnahme 1104 aufgenommen werden können. Anschaulich kann beispielsweise die Anzahl der bereitgestellten Funktionsmodule 1106 größer sein, als in einer Konfiguration in die Modulaufnahme 1104 aufgenommen werden, so dass sich daraus unterschiedliche Möglichkeiten der Konfiguration ergeben. Ferner kann die Modulaufnahme 1104 verschiedene Aufnahmepositionen 1104p aufweisen, in welchen jeweils ein Funktionsmodul 1106 aufgenommen werden kann. Somit können sich beispielsweise verschiedene Konfigurationen daraus ergeben, dass ein jeweiliges Funktionsmodul in verschiedenen Aufnahmepositionen 1104p in dem Modulaufnahme 1104 aufgenommen werden kann.

Gemäß verschiedenen Ausführungsformen kann die Modulaufnahme 1104 eine Halterung aufweisen zum jeweiligen Halten der Funktionsmodule 1106 in eine vordefinierten Aufnahmepositionen 1104p. Die Modulaufnahme 1104 kann beispielsweise in Form eines vorkonfigurierten oder eines konfigurierbaren Trägers 1104t bereitgestellt sein, wie in Fig.11A beispielhaft veranschaulicht ist. An diesem Träger 1104t können beispielsweise zwei äußere Halteelemente 1104r fest oder lösbar montiert sein. Ferner kann der Träger 1104t beispielsweise vordefinierte Aussparungen 1104a (z.B. Durchgangslöcher) aufweisen. Mittels der Aussparungen 1104a in dem Träger 1104t können ein oder mehrere Halteelemente 1104h in verschiedenen Positionen an dem Träger 1104t montiert sein oder werden. Das jeweilige Halteelement 1104h kann mittels einer selbsttätig einrastenden Verbindung 1104v oder in einer anderen geeigneten Weise, z.B. mittels einer Schraubverbindung, etc., mit dem Träger 1104t verbunden sein oder werden.

Ferner kann der Träger 1104t beispielsweise vordefinierte weitere Aussparungen 1104b (z.B. weitere Durchgangslöcher) aufweisen. Mittels der weiteren Aussparungen 1104b in dem Träger 1104t können ein oder mehrere Elemente 1104e einer elektrischen Steckverbindung in verschiedenen Positionen an dem Träger 1104t montiert sein oder werden. Das jeweilige Element 1104e der elektrischen Steckverbindung kann beispielsweise mittels einer selbsttätig einrastenden Verbindung oder in einer anderen geeigneten Weise, z.B. mittels einer Schraubverbindung, etc., mit dem Träger 1104t verbunden sein oder werden.

Anschaulich kann die Modulaufnahme 1104 entsprechende elektrische Steckverbindungselemente aufweisen zum elektrischen Kontaktieren der in der Modulaufnahme 1104 aufgenommenen Funktionsmodule 1106. Anschaulich kann die Modulaufnahme 1104 eine oder mehrere elektrische Schnittstellen aufweisen zum Versorgen der jeweils in der Modulaufnahme 1104 aufgenommenen Funktionsmodule 1106 und/oder zum Kommunizieren (z.B. Auslesen, Ansteuern, etc.) mit den jeweiligen in der Modulaufnahme 1104 aufgenommenen Funktionsmodulen 1106.

Wie beispielsweise in Fig.11A veranschaulicht ist, kann die Modulaufnahme 1104 entsprechend zwischen den Halteelementen 1104r, 1104h mehrere Aufnahmepositionen 1104p zum Aufnehmen (z.B. Einsteckpositionen zum Einstecken) mehrerer Funktionsmodule 1106 aufweisen, wobei jeweils nur ein Funktionsmodul 1106 in einer der Aufnahmepositionen 1104p aufgenommen sein kann oder werden kann. Dabei sind die Modulaufnahme 1104 und die Funktionsmodule 1106 passend zueinander ausgestaltet. Die Aufnahmepositionen 1104p der Modulaufnahme 1104 können beispielsweise an die aufzunehmenden Funktionsmodule 1106 angepasst sein oder werden, z.B. mittels Anpassens der Haltelemente 1104h und/oder der Elemente 1104e der elektrischen Steckverbindung.

Gemäß verschiedenen Ausführungsformen können die Funktionsmodule 1106 jeweils ein weiteres Element der elektrischen Steckverbindung aufweisen, so dass die Funktionsmodule 1106 entsprechend mittels der elektrischen Steckverbindung in den Aufnahmepositionen 1104p elektrisch kontaktiert sein können oder werden können.

Gemäß verschiedenen Ausführungsformen können die Elemente 1104e der elektrischen Steckverbindung derart eingerichtet sein, dass Funktionsmodule 1106 unterschiedlichen Typs (z.B. alle Funktionsmodule 1106 des Satzes an Funktionsmodulen 1106) an diese angesteckt sein können oder werden können.

Gemäß verschiedenen Ausführungsformen kann die Modulaufnahme 1104 entsprechende elektrische Schnittstellen zum elektrischen Kontaktieren der in der Modulaufnahme 1104 aufgenommenen Funktionsmodule 1106 aufweisen, z.B. basierend auf den Elementen 1104e der elektrischen Steckverbindung. Mittels der elektrischen Schnittstellen kann eine Kommunikation zwischen mindestens einem Prozessor (z.B. einer geeigneten Steuervorrichtung) und den jeweiligen Funktionsmodulen 1106 und/oder eine Kommunikation zwischen den Funktionsmodulen 1106 selbst bereitgestellt sein oder werden (anschaulich können die elektrischen Schnittstellen als Daten- bzw. Kommunikations-Schnittstellen eingerichtet sein). Alternativ dazu kann die Kommunikation zwischen den jeweiligen Funktionsmodulen 1106 selbst und/oder zwischen mindestens einem Prozessor und den jeweiligen Funktionsmodulen 1106 mittels einer Drahtlos-Schnittstelle (z.B. mittels einer Funkschnittstelle) bereitgestellt sein oder werden.

Ferner kann mittels der elektrischen Schnittstellen eine Leistungsversorgung für die jeweils in der Modulaufnahme 1104 aufgenommenen Funktionsmodule 1106 bereitgestellt sein oder werden.

Gemäß verschiedenen Ausführungsformen kann mindestens ein Prozessor verwendet werden, welcher eingerichtet sein kann, eine Ist-Konfigurationen der mehreren Konfigurationen zu ermitteln und die Funktionsmodulanordnung 1102 wahlweise in einem Betriebsmodus aus mehreren Betriebsmodi zu betreiben basierend auf der ermittelten Ist-Konfiguration. Gemäß verschiedenen Ausführungsformen kann jeder Konfiguration die sich für die Funktionsmodulanordnung 1102 basierend auf den verschiedenen Kombinationen von in der Modulaufnahme 1104 aufgenommenen Funktionsmodulen 1106 ergibt, ein Betriebsmodus zugeordnet sein.

Anschaulich kann mittels des mindestens einen Prozessors ermittelt werden, welche Konfiguration der Funktionsmodule 1106 in der Modulaufnahme 1104 jeweils vorliegt, nachdem die entsprechenden Funktionsmodule 1106 in der Modulaufnahme 1104 aufgenommen wurden. Dieser jeweiligen Konfiguration kann einen Betriebsmodus zugeordnet sein, welcher basierend auf dem Ermitteln der Konfiguration ausgewählt werden kann.

Der mindestens eine Prozessor kann beispielsweise in einen Elektrokasten 428e der Kompaktoranordnung 202 angeordnet sein, Teil einer Steuerelektronik sein, etc. Der Elektrokasten 428e kann beispielsweise hinter der Funktionsmodulanordnung 1102 angeordnet sein, wie vorangehend beschrieben ist. Alternativ dazu kann der mindestens eine Prozessor in mindestens einem der Funktionsmodule 1106 integriert sein. Ferner kann der mindestens eine Prozessor in eine externe Steuervorrichtung integriert sein, die mit der Funktionsmodulanordnung 1102 kommunikativ gekoppelt ist.

Gemäß verschiedenen Ausführungsformen kann beispielsweise mindestens ein Funktionsmodul oder können mehrere Funktionsmodule oder alle Funktionsmodule der mehreren Funktionsmodule 1106 gemäß dessen Funktion eine Betriebsinformation zugeordnet sein. Somit kann der mindestens eine Prozessor derart eingerichtet sein, die Betriebsinformation des mindestens einen Funktionsmoduls (bzw. der mehreren Funktionsmodule oder aller Funktionsmodule) der mehreren Funktionsmodule 1106 zu ermitteln, wenn (z.B. sobald) dieses in der Modulaufnahme 1104 aufgenommen ist. Somit kann die Funktionsmodulanordnung 1102 beispielsweise basierend auf der ermittelten mindestens einen Betriebsinformation betrieben werden.

Gemäß verschiedenen Ausführungsformen kann der mindestens eine Prozessor derart eingerichtet sein, dass dieser in einem vordefinierten Zeitintervall die Ist-Konfiguration überprüft bzw. Änderungen der Konfiguration erkennt. Wenn eine Änderung der Konfiguration erkannt wird, kann der Betriebsmodus entsprechend geändert werden, sofern erforderlich.

Wie in Fig.11A beispielhaft dargestellt ist, kann die Modulaufnahme 1104 zum Aufnehmen mehrerer Funktionsmodule 1106 eingerichtet sein. Die Modulaufnahme 1104 kann eingerichtet sein, die Funktionsmodule 1106 mechanisch zu halten und in einer vordefinierten Position zu fixieren. Gemäß verschiedenen Ausführungsformen können die Modulaufnahme 1104 und die Funktionsmodule 1106 als Stecksystem ausgestaltet sein, wobei die Modulaufnahme 1104 mehrere Einsteckpositionen 1104p aufweist, in welche die jeweiligen Funktionsmodule 1106 eingesteckt werden können. Dabei kann ein eingestecktes Funktionsmodul 1106 mittels eines Schnellverschlusses (z.B. mittels einer selbsttätig einrastenden Verbindung, welche beispielsweise manuell gelöst werden kann) in der jeweiligen Einsteckposition fixiert sein oder werden.

Anschaulich kann die Funktionsmodulanordnung 1102 derart eingerichtet sein, dass diese basierend auf der Kombination verschiedener Funktionsmodule 1106 in verschiedene Konfigurationen gebracht werden kann. Die jeweils eingestellte Konfiguration (die einem Betriebsmodus entsprechen kann) kann dabei automatisch erkannt werden und der Betrieb der Funktionsmodulanordnung 1102 kann entsprechend der erkannten Konfiguration erfolgen. Somit kann beispielsweise vermieden werden, dass nach einer Änderung der Konfiguration der Funktionsmodulanordnung 1102 und/oder nach einem ersten Aufbau der Funktionsmodulanordnung 1102 diese manuell programmiert werden muss oder dass manuell ein Betriebsmodus ausgewählt werden muss.

Gemäß verschiedenen Ausführungsformen kann die Funktionsmodulanordnung 1102 derart eingerichtet sein, dass der Betriebsmodus basierend auf den verwendeten (d.h. in der Modulaufnahme 1104 aufgenommenen) Funktionsmodule 1106 automatisch eingestellt wird. Dies ermöglich beispielsweise eine Änderung der Konfiguration in einfacher Weise, z.B. ohne dass geschultes Fachpersonal benötigt wird. Die Funktionsmodule 1106 können derart eingerichtet sein, dass ein fehlerhafter Betrieb der Funktionsmodulanordnung 1102 ausgeschlossen ist.

Gemäß verschiedenen Ausführungsformen kann die Konfiguration der Funktionsmodulanordnung 1102 dadurch geändert werden, dass beispielsweise ein Funktionsmodul 1106 eines ersten Funktionsmodultyps, der in der Modulaufnahme 1104 aufgenommen ist, gegen ein Funktionsmodul 1106 eines (von dem ersten Funktionsmodultyp verschiedenen) zweiten Funktionsmodultyps ausgetauscht wird. Anschaulich wird somit die Konfiguration der Funktionsmodulanordnung 1102 dadurch verändert, dass zumindest eine Funktion der Funktionsmodulanordnung 1102 geändert wird. Gemäß verschiedenen Ausführungsformen kann die Konfiguration der Funktionsmodulanordnung 1102 dadurch geändert werden, dass beispielsweise die relative Anordnung der Funktionsmodule 1106 zueinander (zum Beispiel deren Reihenfolge) verändert wird. Anschaulich kann beispielsweise eine Betriebsrichtung der Funktionsmodulanordnung 1102 gewechselt werden, z.B. von einem Rechts-Betrieb auf einen Links-Betrieb (siehe beispielsweise Fig.11B und Fig.11C). Dies kann beispielsweise hilfreich sein, wenn die Kompaktoranordnung 202 in eine Kompaktoreinrichtung 300 mit mehreren Kompaktoranordnungen 202 integriert werden soll, wie vorangehend beschrieben. Beispielsweise können zwei Rücken-an-Rücken angeordnete Kompaktoranordnung 202 entgegengesetzte Betriebsrichtungen aufweisen, d.h. einer der beiden Kompaktoranordnung 202 ist im Links-Betrieb und der andere der beiden Kompaktoranordnung 202 ist im Rechts-Betrieb.

Zum automatischen Anpassen bzw. zum automatischen Auswählen eines Betriebsmodus der Funktionsmodulanordnung 1102 basierend auf der jeweiligen Konfiguration, welche durch die jeweils in der Modulaufnahme 1104 aufgenommenen Funktionsmodule 1106 definiert sein kann, kann mindestens ein Prozessor verwendet werden. Als Prozessor kann jede beliebig geeignete elektronische Schaltung (basierend auf analoger oder digitaler Datenverarbeitung) verwendet werden, z.B. ein konventioneller Computerprozessor, eine anwendungsspezifische integrierte Schaltung (ASIC), etc. Anschaulich kann ein geeignetes Computersystem als eine zentrale oder dezentrale Steuerung bzw. Regelung verwendet werden. Im Allgemeinen können die jeweils hierin beschriebenen Funktionen mittels eines einzelnen Prozessors implementiert sein oder werden oder unter Verwendung mehrerer Prozessoren. Dabei kann dem mindestens einen Prozessor auch mindestens ein Speicher zugeordnet sein bzw. der mindestens eine Prozessor kann einen Speicher aufweisen.

Gemäß verschiedenen Ausführungsformen kann die Betriebsinformation in geeigneter Weise in dem jeweiligen Funktionsmodul 1106 kodiert oder abgespeichert sein. Die Betriebsinformation kann beispielsweise einen Funktionsmodultyp des jeweiligen Funktionsmoduls 1106 repräsentieren, so dass diese identifiziert werden kann. Ferner kann die Betriebsinformation eine Steuerinformation repräsentieren, welche bei der Steuerung der Kompaktoranordnung 202, z.B. bei der Ansteuerung der jeweiligen Funktionsmodule 1106, bei der Ansteuerung eines Kompaktors 102 der Kompaktoranordnung 202, etc., berücksichtigt wird.

Fig.11B und Fig.11C veranschaulichen jeweils eine Funktionsmodulanordnung 1102 in einer schematischen Ansicht, gemäß verschiedenen Ausführungsformen. Die Funktionsmodulanordnung 1102 kann beispielsweise mehrere voneinander verschiedene Typen von Funktionsmodulen 1106 aufweisen, die gleichzeitig in der Modulaufnahme 1104 aufgenommen sind, z.B. gemäß einer ersten Konfiguration 1100b und in einer zweiten Konfiguration 1100c.

Die Funktionsmodulanordnung 1102 weist beispielsweise ein Selektiermodul 1106s (auch als Sortiermodul oder modulare Sortierbaugruppe bezeichnet) auf, z.B. als ein Funktionsmodul 1106 eines ersten Funktionsmodultyps. Gemäß verschiedenen Ausführungsformen kann das Selektiermodul 1106s derart eingerichtet sein, dass Leergut 104, welches mittels der Leergut-Transportvorrichtung 202t in der Kompaktoranordnung 202 geführt wird, selektiert werden, z.B. zum selektiven Zuführen des Leerguts 104 in den Kompaktor 102. Dabei kann das Leergut 104 beispielsweise klassifiziert sein oder werden und entsprechend selektiert werden, wie es vorangehend mit Bezug auf die Selektiervorrichtung 202s beschrieben ist.

Das Selektiermodul 1106s kann beispielsweise in die Modulaufnahme 1104 eingesteckt sein oder werden. Dabei kann die Steckbewegung mittels einer Sperrverriegelung fixiert gegen unbeabsichtigtes herausziehen gesichert sein. Das Selektiermodul 1106s kann beispielsweise oberhalb der Leergut-Transportvorrichtung 202t angeordnet sein, wenn diese in die Modulaufnahme 1104 eingesteckt ist.

Dabei kann Leergut 104 mittels einer schwenkbar gelagerten Selektierklappe 1012k (auch als Sortierflügel oder Sortierklappe bezeichnet) des Selektiermoduls 1106s selektiv von der Leergut-Transportvorrichtung 202t in den Kompaktor 102 der Kompaktoranordnung 202 geführt werden. Die Selektierklappe 1012k kann beispielsweise mittels eines Elektromotors als Stellantrieb 1012a angetrieben werden, z.B. zwischen einer Ersten-Stellung (siehe Fig.11B und Fig.11C) und einer Zweiten-Stellung (vgl. Fig.11D) geschwenkt werden.

Das Selektiermodul 1106s kann mittels einer elektrischen Steckverbindung kontaktiert sein, wenn dieses in der Modulaufnahme 1104 aufgenommen ist, siehe Fig.11B. Die elektrische Steckverbindung kann dabei beispielsweise mehrere Funktionen gewährleisten. Zum einen kann die Leistungsversorgung und die Ansteuerung der Selektierklappe 1012k des Selektiermodul 1106s selbst mittels der elektrischen Steckverbindung erfolgen. Zum anderen kann beispielsweise eine Betriebsinformation des Selektiermoduls 1106s übermittelt werden (z.B. an den mindestens einen Prozessor oder an ein anderes der in der Modulaufnahme 1104 aufgenommenen Funktionsmodule 1106), wie vorangehend beschrieben ist. Die Betriebsinformation kann dabei beispielsweise die Anwesenheit des Selektiermoduls 1106s und/oder deren Typ repräsentieren.

Basierend auf der Betriebsinformation des Selektiermoduls 1106s kann beispielsweise das Schneidwerk des Kompaktors 102 der Kompaktoranordnung 202 abgeschaltet werden, z.B., wenn das Selektiermodul 1106s nicht in der Modulaufnahme 1104 aufgenommen ist (anschaulich, wenn das Selektiermodul 1106s nicht anwesend ist). Basierend auf der Betriebsinformation des Selektiermoduls 1106s kann beispielsweise ein Betriebszustand der Funktionsmodulanordnung 1102 ausgewählt und eingestellt werden. Dabei kann basierend auf der Betriebsinformation ferner der Betrieb der Funktionsmodulanordnung 1102 dahingehend angepasst werden, ob es ein Rechts-Betrieb (z.B. mit dem in Fig.11C dargestellten Selektiermodultyp in Rechts-Konfiguration) oder ein Links-Betrieb (z.B. mit dem in Fig.11B dargestellten Selektiermodultyp in Links-Konfiguration).

Gemäß verschiedenen Ausführungsformen können die Modulaufnahme 1104 und die Funktionsmodule 1106 bezüglich der Anordnung des Selektiermoduls 1106s einen symmetrischen Aufbau aufweisen, so dass beispielsweise auf einfache Weise zwischen den beiden in Fig.11B und Fig.11C dargestellten Konfigurationen 1100b, 1100c (anschaulich zwischen der Rechts- und der Links-Konfiguration) gewechselt werden kann. Anschaulich kann ein Selektiermodul 1106s in der Links-Konfiguration in einer anderen Aufnahmeposition 1104p der Modulaufnahme 1104 angeordnet sein als in der Rechts-Konfiguration, wobei beispielsweise auch das Selektiermodul 1106s selbst entsprechend als Links-Selektiermodul 1106s (z.B. ein Selektiermodul eines ersten Selektiermodultyps) oder Rechts-Selektiermodul 1106s (z.B. ein Selektiermodul eines zweiten Selektiermodultyps) ausgestaltet sein kann.

Anschaulich können sich die Rechts- und die Links-Konfiguration in der Ausschleuse-Richtung für das Leergut 104 unterscheiden. Dabei kann die Funktionsmodulanordnung 1102 entweder in der Rechts-Konfiguration oder in der Links-Konfiguration betrieben werden, was basierend auf dem jeweiligen Selektiermodultyp des in der Modulaufnahme 1104 aufgenommenen Selektiermodul 1106s ermittelt werden kann.

Ferner kann die Funktionsmodulanordnung 1102 ein Selektierinformationsmodul 1106c (auch als Codier-Modul oder modulare Codierbaugruppe bezeichnet) aufweisen.

Basierend auf der Rechts/Links-Konfiguration bezüglich des Selektiermoduls 1106s kann, gemäß verschiedenen Ausführungsformen, die Aufnahmeposition 1104p für das Selektierinformationsmodul 1106c vorgegeben sein, wenn ein symmetrischer Aufbau realisiert sein soll. Anschaulich kann die gleiche Aufnahmeposition 1104p der Modulaufnahme 1104 sowohl für das Selektiermodul 1106s als auch für das Selektierinformationsmodul 1106c verwendet werden.

Gemäß verschiedenen Ausführungsformen kann das Selektierinformationsmodul 1106c eine Selektierinformation als Betriebsinformation bereitstellen, welche das Ansteuern bzw. das Betreiben des Selektiermoduls 1106s spezifizieren kann. Beispielsweise kann die von dem Selektierinformationsmodul 1106c bereitgestellte Selektierinformation definieren, welche Klasse (Art, Material, Farbe, etc.) von Leergut 104 mittels des Selektiermoduls 1106s selektiert werden soll. Gemäß verschiedenen Ausführungsformen kann der Satz an Funktionsmodulen 1106 für jede Klasse des Leerguts 104, die unterschieden werden soll, ein der Klasse zugeordnetes Selektierinformationsmodul 1106c aufweisen. Somit kann beispielsweise mittels Einbringens des jeweiligen Selektierinformationsmoduls 1106c in die Modulaufnahme 1104 eingestellt werden, welche Klasse von Leergut 104 mittels des Kompaktors 102 der Kompaktoranordnung 202 kompaktiert werden soll.

Mittels der elektrischen Steckverbindung, wie vorangehend beschrieben ist, kann eine elektrische Leistungsversorgung für das Selektierinformationsmodul 1106c bereitgestellt sein oder werden, sofern erforderlich. Ferner kann beispielsweise eine Betriebsinformation des Selektierinformationsmoduls 1106c übermittelt werden (z.B. an den mindestens einen Prozessor oder an ein anderes der in der Modulaufnahme 1104 aufgenommenen Funktionsmodule 1106). Die Betriebsinformation kann dabei beispielsweise die Anwesenheit des Selektierinformationsmoduls 1106c und/oder deren Selektierinformation repräsentieren.

Gemäß verschiedenen Ausführungsformen kann das Selektierinformationsmodul 1106c optional eine visuelle Anzeige 1106c-1 aufweisen. Somit kann beispielsweise angezeigt werden, welche Klasse des Leerguts 104 jeweils selektiert wird, z.B. Kunststoff klar, Kunststoff bunt, Dosen, Glas, etc. Die visuelle Anzeige 1106c-1 des Selektierinformationsmoduls 1106c kann beispielsweise mittels einer Platte bereitgestellt sein, welche Beleuchtungskanäle aufweist, um den Betriebszustand anzuzeigen. Gemäß verschiedenen Ausführungsformen kann mittels der visuellen Anzeige 1106c-1 einen Füllstand eines Sammelbehälters 152, welcher der Funktionsmodulanordnung 1102 zugeordnet ist, angezeigt werden.

Gemäß verschiedenen Ausführungsformen kann die Platte 1006c-1 die hierin beschriebene erste Eingriff-Schutzstruktur 1000s sein oder zumindest einen Teil der ersten Eingriff-Schutzstruktur 1000s bilden. Somit kann beispielsweise auch die erste Eingriff-Schutzstruktur 1000s modulartig ausgetauscht werden bzw. entsprechend auf einfache Weise an eine Änderung der Konfiguration der Kompaktoranordnung 202 angepasst werden.

Gemäß verschiedenen Ausführungsformen kann die Funktionsmodulanordnung 1102 ein Peripheriemodul 1106p oder zwei (z.B. symmetrisch angeordnete) Peripheriemodule 1106p aufweisen. Dabei kann das eine Peripheriemodul 1106p oder zumindest eines der zwei Peripheriemodule 1106p mindestens einen Sensor aufweisen (hierin auch als Sensor-Modul 1106p bezeichnet).

Gemäß verschiedenen Ausführungsformen können zwei Peripheriemodule 1106p, wie beispielsweise in Fig.11B und 11C dargestellt ist, am äußeren Rand der Modulaufnahme 1104 positioniert sein oder werden. Die zwei Peripheriemodule 1106p können spiegelsymmetrisch angeordnet und identisch aufgebaut sein.

Das jeweilige Peripheriemodul 1106p kann beispielsweise Sensorik (z.B. einen oder mehrere Sensoren) aufweisen. Die Sensorik kann eingerichtet sein, einen Durchlauf eines Leerguts 104 zu erkennen, z.B. basierend auf Ultraschall und/oder Durchlicht.

Die Sensorik kann, gemäß verschiedenen Ausführungsformen, in dem Peripheriemodul 1106p von einem Modulgehäuse umgeben sein, d.h. diese liegt anschaulich nicht frei bzw. ist somit zugriffsgeschützt.

Gemäß verschiedenen Ausführungsformen kann ferner Sensorik für ein automatisches Öffnen und/oder Schließen der oberen Abdeckung 408 (z.B. basierend auf Gestensteuerung, etc.), wie vorangehend beschrieben ist, in zumindest einem der Peripheriemodule 1106p bereitgestellt sein.

Mittels der elektrischen Steckverbindung, wie vorangehend beschrieben ist, kann eine elektrische Leistungsversorgung für das jeweilige Peripheriemodul 1106p bereitgestellt sein oder werden, sofern erforderlich. Ferner kann beispielsweise eine Betriebsinformation des jeweiligen Peripheriemoduls 1106p übermittelt werden (z.B. an den mindestens einen Prozessor oder an ein anderes der in der Modulaufnahme 1104 aufgenommenen Funktionsmodule 1106). Die Betriebsinformation kann dabei beispielsweise die Anwesenheit des jeweiligen Peripheriemoduls 1106p und/oder deren Sensordaten, etc., repräsentieren.

Gemäß verschiedenen Ausführungsformen kann das jeweilige Peripheriemodul 1106p die jeweils benachbarte Baugruppe, z.B. kann die Funktion des Selektiermoduls 1106s, funktional ergänzen. Beispielsweise kann der Betrieb des jeweiligen Selektiermoduls 1106s basierend auf den mittels der Sensorik des benachbarten Peripheriemoduls 1106p ermittelten Sensordaten ergänzt werden. Somit kann beispielsweise Leergut 104 gemäß der von dem Selektierinformationsmodul 1106c definierten Klasse und basierend auf den Sensordaten selektiv kompaktiert werden kann.

Das jeweilige Peripheriemodul 1106p kann, gemäß verschiedenen Ausführungsformen, Bauraum für weitere funktionale Elemente (z.B. einen Sensor, eine Steuerung, eine Regelung, einen Sicherheitsschaltkreis, etc.) aufweisen, sowie, bei Bedarf, die jeweiligen weiteren funktionalen Elemente.

Gemäß verschiedenen Ausführungsformen kann das jeweilige Peripheriemodul 1106p derart ausgestaltet sein, dass dieses die Funktionen des Selektierinformationsmodul 1106c übernimmt. In diesem Fall können beispielsweise zwei Peripheriemodule 1106p verwendet werden, wobei ein Peripheriemodul 1106p derart ausgestaltet ist, dass dieses die Funktion des Selektierinformationsmoduls 1106c, wie vorangehend beschrieben ist, übernimmt. Dabei kann das Peripheriemodul 1106p, welches die Funktion des Selektierinformationsmoduls 1106c übernimmt, in der für das Selektierinformationsmodul 1106c vorgesehenen Aufnahmeposition 1104p angeordnet sein.

Gemäß verschiedenen Ausführungsformen kann das jeweilige Peripheriemodul 1106p eine Beleuchtung aufweisen, welche derart ausgestaltet sein kann, dass ein Betriebsmodus der Funktionsmodulanordnung 1102 oder der Kompaktoranordnung 202 angezeigt werden kann, zum Beispiel farbkodiert.

Gemäß verschiedenen Ausführungsformen kann die erste Eingriff-Schutzstruktur 1000s oder zumindest ein Teil der ersten Eingriff-Schutzstruktur 1000s an dem Peripheriemodul 1106p montiert sein oder werden.

Gemäß verschiedenen Ausführungsformen kann die Funktionsmodulanordnung 1102 ein Anzeigemodul 1106d aufweisen. Das Anzeigemodul 1106d kann beispielsweise mittig in der Modulaufnahme 1104 angeordnet sein oder werden, z.B. unabhängig von den verschiedenen Konfigurationen 1100b bis 1100f der Funktionsmodulanordnung 1102.

Gemäß verschiedenen Ausführungsformen kann das Anzeigemodul 1106d ein Display (z.B. ein TFT-Display, etc.) oder zumindest ein oder mehrere beleuchtete Felder aufweisen zum Anzeigen eines Systemstatus eines einzelnen Funktionsmoduls 1106 der Funktionsmodulanordnung 1102 und/oder eines Systemstatus der gesamten Funktionsmodulanordnung 1102.

Gemäß verschiedenen Ausführungsformen kann die erste Eingriff-Schutzstruktur 1000s oder zumindest ein Teil der ersten Eingriff-Schutzstruktur 1000s an dem Anzeigemodul 1106d montiert sein oder werden.

Anstelle des Anzeigemoduls 1106d kann alternativ ein Peripheriemodul 1106p in der Modulaufnahme 1104 aufgenommen sein oder werden. Dabei kann, gemäß verschiedenen Ausführungsformen, die gleiche elektrische Schnittstelle unabhängig vom Typ des aufgenommenen Funktionsmoduls 1106 verwendet werden.

Fig.11D veranschaulicht eine Funktionsmodulanordnung 1102 in einer weiteren Konfiguration 1100d, z.B. als Alternative zu der in Fig.11B dargestellten Konfiguration 1100b bzw. in analoger Weise als Alternative zu der in Fig.11C dargestellten Konfiguration 1100c.

Gemäß verschiedenen Ausführungsformen kann die Funktionsmodulanordnung 1102 ein Schutzmodul 1106n aufweisen. Das Schutzmodul 1106n kann, gemäß verschiedenen Ausführungsformen, anstelle eines Selektiermoduls 1106s in der Modulaufnahme 1104 aufgenommen sein oder werden. Anschaulich kann das Schutzmodul 1106n ein Dummy-Modul sein als Platzhalter für ein entnommenes Selektiermodul 1106s. Dabei kann das Schutzmodul 1106n derart eingerichtet sein, dass dieses die Funktion der hierin beschriebenen Schutzvorrichtung übernimmt.

Gemäß verschiedenen Ausführungsformen kann das Schutzmodul 1106n derart eingerichtet sein, dass dieses einen Zugang (auch als Zuführbereich 1000d bezeichnet) zu einem Kompaktor 102 der Kompaktoranordnung 202 (z.B. zu dessen Schneidwerk) blockiert. Somit kann beispielsweise ein versehentlicher Eingriff in das Schneidwerk eines Kompaktors 102 der Kompaktoranordnung 202 verhindert werden, wenn beispielsweise das Selektiermodul 1106s nicht in der Modulaufnahme 1104 aufgenommen ist. Ferner kann das Schutzmodul 1106n derart eingerichtet sein, dass dieses einen Transportbereich 1000t oberhalb der Leergut-Transportvorrichtung 202t (z.B. seitlich) begrenzt. Dazu kann das Schutzmodul 1106n beispielsweise eine Schutzplatte 1106n-1 aufweisen, welche im Wesentlichen die gleiche Position einnimmt, wie die schwenkbar gelagerte Klappe 1012k des Selektiermoduls 1106s, wenn diese nicht über die Leergut-Transportvorrichtung 202t geschwenkt ist. Die Schutzplatte 1106n-1 kann beispielsweise starr montiert sein. Die Schutzplatte 1106n-1 des Schutzmoduls 1106n kann, gemäß verschiedenen Ausführungsformen, die zweite Eingriff-Schutzstruktur 1002s sein oder zumindest einen Teil der zweiten Eingriff-Schutzstruktur 1002s bilden.

Gemäß verschiedenen Ausführungsformen kann das Schutzmodul 1106n eine Betriebsinformation bereitstellen, welche das Ansteuern bzw. das Betreiben eines Kompaktors 102 der Kompaktoranordnung 202 spezifiziert. Beispielsweise kann die von dem Schutzmodul 1106n bereitgestellte Betriebsinformation definieren, dass ein Betrieb des Kompaktors 102 (z.B. das rotieren des Schneidwerks des Kompaktors 102) blockiert sein soll, wenn (z.B. sobald und solange) das Schutzmodul 1106n in der Modulaufnahme 1104 aufgenommen ist.

Mittels der elektrischen Steckverbindung, wie vorangehend beschrieben ist, kann beispielsweise die Betriebsinformation des Schutzmoduls 1106n übermittelt werden (z.B. an den mindestens einen Prozessor oder an ein anderes der in der Modulaufnahme 1104 aufgenommenen Funktionsmodule 1106). Die Betriebsinformation kann dabei beispielsweise die Anwesenheit des Schutzmoduls 1106n sein bzw. repräsentieren.

Somit kann beispielsweise in dem Fall, dass der Kompaktor 102 der Kompaktoranordnung 202 einen Fremdkörper eingezogen hat, welcher einen Defekt am Schneidwerk verursacht hat, das Schneidwerk mittels des Einsetzens des Schutzmoduls 1106d in die Modulaufnahme 1104 abgeschaltet werden, so dass die Kompaktoranordnung 202 an sich weiterhin sicher im Durchlaufbetrieb betrieben werden kann.

Gemäß verschiedenen Ausführungsformen kann die Funktionsmodulanordnung 1102 derart eingerichtet sein, dass die Anwesenheit des Schutzmoduls 1106n signalisiert wird, z.B. mittels des Anzeigemoduls 1106d, etc. Ferner kann eine Nachricht an Wartungspersonal ausgelöst werden, wenn das Schutzmodul 1106n in die Modulaufnahme 1104 eingebracht wird.

Betriebszustand der Funktionsmodulanordnung 1102 bei Anwesenheit des Schutzmoduls 1106n kann beispielsweise durch das Schutzmodul 1106n selbst angezeigt werden. Dazu kann das Schutzmodul 1106n auf der Schutzplatte 1106n-1 ein Leuchtelement 1106n-2 aufweisen.

Gemäß verschiedenen Ausführungsformen kann ein in der Modulaufnahme 1104 aufgenommenes Funktionsmodul 1106, können mehrere oder alle in der Modulaufnahme 1104 aufgenommenen Funktionsmodule 1106 mittels einer Schnittstelle (z.B. einer elektrischen Steckverbindung, wie vorangehend beschrieben ist) mit einer Steuerelektronik (z.B. aufweisend den mindestens einen Prozessor oder implementiert in den mindestens einen Prozessor) verbunden sein oder werden, welche beispielsweise in einem Elektrokasten angeordnet sein kann oder werden kann.

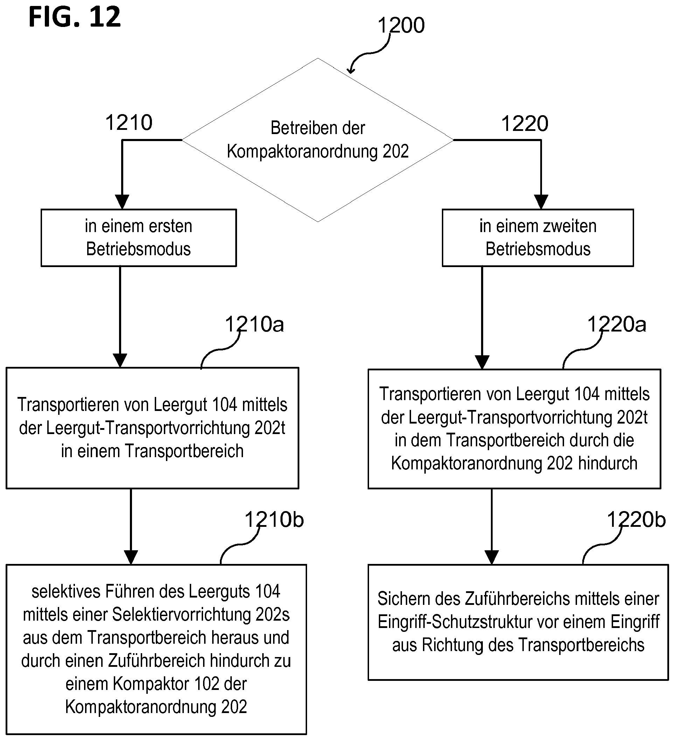

**Fig.12** veranschaulicht ein schematisches Ablaufdiagramm eines Verfahrens 1200 zum Betreiben einer Kompaktoranordnung 202, gemäß verschiedenen Ausführungsformen. Das Verfahren 1200 kann beispielsweise aufweisen: in 1210, Betreiben der Kompaktoranordnung 202 in einem ersten Betriebsmodus, aufweisend: in 1210a, Transportieren von Leergut 104 mittels der Leergut-Transportvorrichtung 202t in einem Transportbereich, und, in 1210b, selektives Führen des Leerguts 104 mittels einer Selektiervorrichtung 202s aus dem Transportbereich 1000t heraus und durch einen Zuführbereich 1000d hindurch zu einem Kompaktor 102 der Kompaktoranordnung 202; und, z.B. zuvor und/oder anschließend, in 1220, Betreiben der Kompaktoranordnung 202 in einem zweiten Betriebsmodus, aufweisend: in 1220a, Transportieren von Leergut 104 mittels der Leergut-Transportvorrichtung 202t in dem Transportbereich 1000t durch die Kompaktoranordnung 202 hindurch, und, in 1220b, Sichern des Zuführbereichs 1000d mittels einer Eingriff-Schutzstruktur 1002s vor einem Eingriff aus Richtung des Transportbereichs 1000t.

Ferner kann das Verfahren 1200 aufweisen: Wechseln von dem ersten Betriebsmodus in den zweiten Betriebsmodus, wobei das Wechseln aufweist: Entfernen der Selektiervorrichtung 202s, und Montieren der Eingriff-Schutzstruktur 1002s derart, dass eine Schutzplatte der Eingriff-Schutzstruktur 1002s den Zuführbereich 1000d abdeckt und/oder in dem Zuführbereich 1000d angeordnet ist.

Ferner kann das Verfahren 1200 aufweisen: Wechseln von dem zweiten Betriebsmodus in den ersten Betriebsmodus, wobei das Wechseln aufweist: Entfernen der Eingriff-Schutzstruktur 1002s, und Montieren der Selektiervorrichtung 202s.

Ferner kann das Verfahren 1200 aufweisen: Wechseln von dem ersten Betriebsmodus in den zweiten Betriebsmodus, wobei das Wechseln aufweist: Verschieben einer Schutzplatte der Eingriff-Schutzstruktur 1002s derart, dass diese den Zuführbereich 1000d abdeckt und/oder in dem Zuführbereich 1000d angeordnet ist.

Ferner kann das Verfahren 1200 aufweisen: Wechseln von dem zweiten Betriebsmodus in den ersten Betriebsmodus, wobei das Wechseln aufweist: Verschieben einer Schutzplatte der Eingriff-Schutzstruktur 1002s derart, dass der Zuführbereich 1000d freigegeben wird.

Dabei kann das Verfahren 1200 - in 1210 - ferner aufweisen: Betreiben des Kompaktors 102 zum Kompaktieren des Leerguts 104, welches mittels der Selektiervorrichtung 202s dem Kompaktor 102 durch den Zuführbereich 1000d hindurch zugeführt wird. Dabei kann das Verfahren 1200 - in 1220 - ferner aufweisen: Deaktivieren des Kompaktors 102.

Gemäß verschiedenen Ausführungsformen kann der Kompaktor 102 (z.B. dessen Schneidwerk) ausgeschaltet werden, sobald die Selektiervorrichtung 202s (z.B. das Selektiermodul 1106s) demontiert bzw. entfernt wird. Anschließend kann die Schutzvorrichtung 1002 (z.B. das Schutzmodul 1106n) anstelle der Selektiervorrichtung 202s montiert werden (z.B. in die frei gewordene Aufnahmeposition gesteckt werden).

Nach dem Schließen der oberen Abdeckung 408 (und z.B. auch der unteren Abdeckung 418), kann die Kompaktoranordnung 202 (oder kann ein Doppelmodul 202d mit zwei Kompaktoranordnungen 202, siehe beispielsweise Fig.3A und Fig.3B) wieder teilweise betriebsbereit sein. Anschaulich kann beispielsweise bei einem Doppelmodul 202d der Kompaktor 102 auf der gegenüberliegenden Seite noch funktionstüchtig sein und auch betrieben werden. Dabei kann eine Befüllung und Nutzung des Sammelbehälters 152 sichergestellt sein oder werden. Bei einem Schneidwerkwechsel bzw. Kompaktorwechsel eines Doppelmoduls 202d kann auch auf der gegenüberliegenden Seite die Selektiervorrichtung 202s mittels der Schutzvorrichtung 1002 ersetzt werden. Dadurch kann das gesamte Doppelmodul 202d in einem Notbetrieb (z.B. in einem Bypass-Betrieb) geschaltet werden. Ein Schneidwerkwechsel bzw. Kompaktorwechsel kann somit im laufenden Betrieb der Kompaktoreinrichtung 300 durchgeführt werden.

Gemäß verschiedenen Ausführungsformen kann ein nur eine Kompaktoranordnung 202 eines Doppelmoduls 202d in dem Bypass-Betrieb sein. In dem Bypass-Betrieb kann beispielsweise Leergut nicht mittels der Kompaktoranordnung 202 kompaktiert werden aber zumindest zu einer nachfolgenden Kompaktoranordnung 202 weitergeleitet werden und dann dort kompaktiert werden.

Ferner kann das Verfahren derart eingerichtet sein, wie es in Bezug auf die Kompaktoranordnung 202 sowie deren Funktionsweise hierin beschrieben ist.

Gemäß verschiedenen Ausführungsformen kann ein Funktionsmodul 1106 der Funktionsmodulanordnung 1102 oder können mehrere oder alle Funktionsmodule 1106 der Funktionsmodulanordnung 1102 basierend auf einer Betriebsinformation identifiziert werden. Anschaulich kann beispielsweise der jeweilige Typ des verwendeten Funktionsmoduls 1106 (anschaulich dessen Funktion) basierend auf der Betriebsinformation ermittelt werden. Basierend darauf kann ein entsprechender Betriebsmodus für die Funktionsmodulanordnung 1102 gewählt werden bzw. kann die Funktionsmodulanordnung 1102 in dem entsprechenden Betriebsmodus betrieben werden.

Die Betriebsinformation kann in jeder Form bereitgestellt sein oder werden, anhand derer die Funktionsmodule 1106 identifiziert werden können. Gemäß verschiedenen Ausführungsformen kann die Betriebsinformation derart bereitgestellt sein oder werden, dass die jeweilige Funktion bzw. der jeweilige Typ der Funktionsmodule 1106 eindeutig identifiziert werden kann.

Gemäß verschiedenen Ausführungsformen kann die Betriebsinformation ein Pointer sein, welcher auf eine zugeordnete Tabelle verweist, in welcher die Betriebsinformation gespeichert sind.

Gemäß verschiedenen Ausführungsformen kann die Betriebsinformation mittels einer entsprechend eingerichteten elektronischen Schaltung (z.B. einer Steuerschaltung) in dem jeweiligen Funktionsmodul 1106 implementiert sein. Dabei kann die Funktionsmodulanordnung 1102 derart eingerichtet sein, dass diese basierend auf der Steuerschaltung eines in der Modulaufnahme 1104 aufgenommenen Funktionsmoduls 1106 betrieben wird.

**Fig.13A** und **Fig.13B** veranschaulichen eine Kompaktoranordnung 202 mit einer Manipulationsschutzvorrichtung 1302 in verschiedenen schematischen Darstellungen, gemäß verschiedenen Ausführungsformen.

Die Manipulationsschutzvorrichtung 1302 kann beispielsweise zum Schützen einer Kompaktoranordnung 202 verwendet werden, welche mit einem Glas-Crusher 102-2 als Kompaktor 102 betrieben wird.

Gemäß verschiedenen Ausführungsformen kann die Kompaktoranordnung 202 Folgendes aufweisen: einen Kompaktor 102 (z.B. einen Glas-Crusher 102-2), eine Leergut-Transportvorrichtung 202t zum Transportieren von Leergut 104 in der Kompaktoranordnung 202 in einem Transportbereich 1000t oberhalb der Leergut-Transportvorrichtung 202t, eine Selektiervorrichtung 202s, welche derart eingerichtet ist, dass Leergut 104 selektiv aus dem Transportbereich 1000t heraus dem Kompaktor 102 zugeführt werden kann.

Gemäß verschiedenen Ausführungsformen kann die Kompaktoranordnung 202 einen Zuführkanal 1300k aufweisen, welcher derart zwischen dem Kompaktor 102 und der Leergut-Transportvorrichtung 202t bereitgestellt ist, dass das Leergut 104, welches mittels der Selektiervorrichtung 202s aus dem Transportbereich 1000t selektiv dem Kompaktor 102 zugeführt werden soll, durch eine Öffnung 1300o hindurch aus dem Transportbereich 1000t in den Zuführkanal 1300k geführt werden kann. Aus dem Zuführkanal 1300k kann das Leergut 104, z.B. durch eine weitere Öffnung hindurch, in den Kompaktor 102 geführt werden. Dabei kann der Zuführkanal 1300k im Wesentlichen geschlossen sein derart, dass beispielsweise Scherben kompaktierten Leerguts 104 aus Glas nicht nach außen (zum Beispiel in einen für einen Benutzer der Kompaktoranordnung 202 zugänglichen Bereich) gelangen können.

Innerhalb des Zuführkanals 1300k kann das Leergut 104 beispielsweise mittels einer angetriebenen Transportvorrichtung zu dem Kompaktor 102 transportiert werden. Alternativ oder zusätzlich dazu kann innerhalb des Zuführkanals 1300k und/oder mittels des Zuführkanals 1300k ein vordefinierter Pfad 1300d bereitgestellt sein, auf dem das Leergut 104 beispielsweise aufgrund der Gravitationskraft bewegt wird. Anschaulich kann der Zuführkanal 1300k eine Rutsche aufweisen oder sein. Alternativ dazu kann der Zuführkanal 1300k derart eingerichtet sein, dass das Leergut 104 in diesen hineinfallen kann, z.B. in freiem Fall.

Der Zuführkanal 1300k kann beispielsweise in Form einer entsprechend ausgestalteten Blechkonstruktion bereitgestellt sein oder werden.

Zum Selektieren des Leerguts 104 aus dem Transportbereich 1000t heraus kann die Selektiervorrichtung 202s eine Selektierklappe 1012k und einen Stellantrieb 1012a aufweisen. Mittels des Stellantriebs 1012a kann die Selektierklappe 1012k in voneinander verschiedenen Stellungen bzw. Positionen bewegt, z.B. geschwenkt, werden. Die Selektierklappe 1012k kann beispielsweise in eine erste Stellung 1301b und in eine zweite Stellung 1301a bewegt, z.B. geschwenkt, werden (wie beispielsweise vorangehend mit Bezug auf die Stellungen 1003a, 1003b der Selektierklappe 1012k der Selektiervorrichtung 202s beschrieben ist). Anschaulich kann die Selektierklappe 1012k geöffnet und geschlossen werden, wobei die erste Stellung 1301b anschaulich eine Offen-Stellung ist, in welcher die Öffnung 1300o des Zuführkanals 1300k nicht von der Selektierklappe 1012k abgedeckt ist, und wobei die zweite Stellung 1301a anschaulich eine Geschlossen-Stellung ist, in welcher die Öffnung 1300o des Zuführkanals 1300k von der Selektierklappe 1012k abgedeckt ist.

Gemäß verschiedenen Ausführungsformen kann die Kompaktoranordnung 202 eine Manipulationsschutzvorrichtung 1302 aufweisen. Diese kann beispielsweise mindestens einen Sensor 1302s aufweisen zum Detektieren eines Durchführens von Leergut 104 aus dem Transportbereich 1000t durch die Öffnung 1300o hindurch in den Zuführkanal 1300k hinein.

Gemäß verschiedenen Ausführungsformen kann für den Kompaktor 102 (z.B. einen Glas-Crusher 102-2) eine Kompaktiererüberwachung erfolgen mittels zweier optischer Sensoren. Diese können derart angeordnet sein, dass das zu kompaktierende Leergut 104 von jedem der zwei Sensoren einmal in der richtigen Reihenfolge detektiert werden kann. Zwischen mittels der beiden Sensoren kann eine zeitliche Korrelation berechnet und ausgewertet werden. Die Sensoren sind beispielsweise manipulationssicher verbaut.

Gemäß verschiedenen Ausführungsformen kann die Manipulationsschutzvorrichtung 1302 derart eingerichtet sein, dass verifiziert werden kann, ob Leergut 104, welches mittels der Selektiervorrichtung 202s dem Kompaktor 102 zugeführt werden soll, tatsächlich in den Zuführkanal 1300k hineingelangt. Ferner kann die Manipulationsschutzvorrichtung 1302 derart eingerichtet sein, dass verhindert bzw. erschwert wird, Leergut 104, welches in den Zuführkanal 1300k geführt wurde, wieder (anschaulich in entgegengesetzte Richtung) aus dem Zuführkanal 1300k herausgebracht werden kann.

Gemäß verschiedenen Ausführungsformen kann die Kompaktoranordnung 202 mindestens einen Prozessor zum Ansteuern der Selektiervorrichtung 202s (z.B. basierend auf Ansteuerdaten) und zum Empfangen (z.B. zum Auslesen) von Sensordaten des mindestens einen Sensors 1302s aufweisen. Dabei kann der mindestens eine Prozessor eingerichtet sein, ein erwartetes Durchführen von Leergut 104 durch die Öffnung 1300o hindurch in den Zuführkanal 1300k basierend auf den Ansteuerdaten zu ermitteln. Anschaulich kann die Selektierklappe 1012k geöffnet werden (d.h. nicht in der zweiten Stellung 1301a verbleiben bzw. in der ersten Stellung 1301b gebracht werden), um Leergut 104 von der Transportvorrichtung 202t zu selektieren und durch die Öffnung 1300o in den Zuführkanal 1300k zu führen. Ferner kann der mindestens eine Prozessor eingerichtet sein, das erwartete Durchführen von Leergut 104 durch die Öffnung 1300o hindurch in den Zuführkanal 1300k anhand mittels des mindestens einen Sensors 1302s (z.B. anhand der Sensordaten) zu verifizieren.

Gemäß verschiedenen Ausführungsformen kann mittels des mindestens einen Prozessors eine Verifikationsnachricht erzeugt werden, wenn ein erwartetes Durchführen von Leergut 104 durch die Öffnung 1300o hindurch in den Zuführkanal 1300k verifiziert wird, und/oder es kann eine Manipulationsnachricht erzeugt werden, wenn ein erwartetes Durchführen von Leergut 104 durch die Öffnung 1300o hindurch in den Zuführkanal 1300k nicht verifiziert werden kann. Basierend auf dem Verifizieren bzw. der Verifikationsnachricht können verschiedene Aktionen ausgelöst werden. Beispielsweise kann der Betrieb der Kompaktoranordnung 202 gestoppt werden, ein Alarmsignal erzeugt werden, etc.

**Fig.13C** und **Fig.13D** veranschaulichen eine Kompaktoranordnung 202 mit einer Manipulationsschutzvorrichtung 1302 in verschiedenen schematischen Darstellungen, gemäß verschiedenen Ausführungsformen.

Gemäß verschiedenen Ausführungsformen kann die Manipulationsschutzvorrichtung 1302 eine Manipulationsschutzklappe 1302k aufweisen. Gemäß verschiedenen Ausführungsformen kann die Manipulationsschutzklappe 1302k derart beweglich gelagert sein, dass diese bei einem Durchführen von Leergut 104 durch die Öffnung 1300o hindurch in den Zuführkanal 1300k hinein von einer ersten Stellung 1303a in eine zweite Stellung 1303b bewegt wird. Gemäß verschiedenen Ausführungsformen kann die Manipulationsschutzklappe 1302k anschaulich aufgrund eines körperlichen Kontakts mit dem Leergut 104, wenn dieses mittels der Selektiervorrichtung 202s aus dem Transportbereich 1000t in den Zuführkanal 1300k geführt wird, bewegt werden. Dabei kann der mindestens eine Sensor 1302s der Manipulationsschutzvorrichtung 1302 eingerichtet sein, das Detektieren des Durchführens von Leergut 104 durch die Öffnung 1300o basierend auf der Bewegung der Manipulationsschutzklappe 1302k von der ersten Stellung 1303a in die zweite Stellung 1303b zu detektieren.

Gemäß verschiedenen Ausführungsformen kann der mindestens eine Prozessor eingerichtet sein, eine Stellung 1301a, 1301b der Selektierklappe 1012k zu ermitteln und eine Stellung 1303a, 1303b der Manipulationsschutzklappe 1302k zu ermitteln. Ferner kann der mindestens eine Prozessor eingerichtet sein, basierend auf der ermittelten Stellung 1301a, 1301b der Selektierklappe 1012k sowie der ermittelten Stellung 1303a, 1303b der Manipulationsschutzklappe 1302k ein Durchführen von Leergut 104 durch die Öffnung 1300o zu verifizieren. Anschaulich kann es das tatsächliche Hindurchführen von Leergut 104 durch die Öffnung 1300o hindurch erforderlich machen, dass die Manipulationsschutzklappe 1302k bewegt wird, während die Selektierklappe 1012k geöffnet (d.h. in der ersten Stellung 1301b bzw. nicht in der zweiten Stellung 1301a) ist.

Dabei kann beispielsweise die zweite Stellung 1303b der Manipulationsschutzklappe 1302k variabel sein, zum Beispiel kann die Manipulationsschutzklappe 1302k entsprechend der Größe des Leerguts 104 bewegt werden.

Gemäß verschiedenen Ausführungsformen kann die Manipulationsschutzklappe 1302k schwenkbar gelagert sein und in einer Ruhelage die Öffnung 1300o abdecken. Mittels des mindestens einen Sensors 1302s kann ein Auslenken der Manipulationsschutzklappe 1302k aus der Ruhelage ermittelt (detektiert bzw. festgestellt) werden. Dabei kann der mindestens einen Prozessor eingerichtet sein, in dem Zeitintervall, in dem die Selektierklappe 1012k der Selektiervorrichtung 202s geöffnet (d.h. in der ersten Stellung 1301b bzw. nicht in der zweiten Stellung 1301a) ist, ein Durchführen von Leergut 104 durch die Öffnung 1300o hindurch zu verifizieren basierend auf einem mittels des mindestens einen Sensors 1302s detektierten Auslenkens der Manipulationsschutzklappe 1302k.

Die Manipulationsschutzklappe 1302k ist in den Figuren lediglich beispielhaft als eine seitlich schwenkende Klappe veranschaulicht. Diese kann beispielsweise mittels einer mechanischen Feder oder einer anderen Rückstellstruktur in eine Ruhelage (d.h. in die erste Stellung 1303a) gebracht werden. Ferner kann die Manipulationsschutzklappe 1302k beispielsweise senkrecht freihängend gelagert sein und über deren Eigenmasse austariert sein. In diesem Fall kann sich die Manipulationsschutzklappe 1302k aufgrund deren Eigengewicht in eine Ruhelage (d.h. in die erste Stellung 1303a) bewegen.

Die Manipulationsschutzklappe 1302k kann beispielsweise ein entsprechend geringes Gewicht aufweisen (z.B. aus einem Kunststoff gefertigt sein) und leichtgängig gelagert sein, so dass diese von dem Leergut 104 selbst ausgelenkt werden kann.

Gemäß verschiedenen Ausführungsformen kann die Manipulationsschutzklappe 1302k derart gelagert sein oder werden, dass diese aus der ersten Stellung 1303a nicht in Richtung des Transportbereichs 1000t ausgelenkt werden kann, so dass ein Zurückführen des Leerguts 104 aus dem Zuführkanal 1300k heraus in Richtung des Transportbereichs 1000t verhindert werden kann.

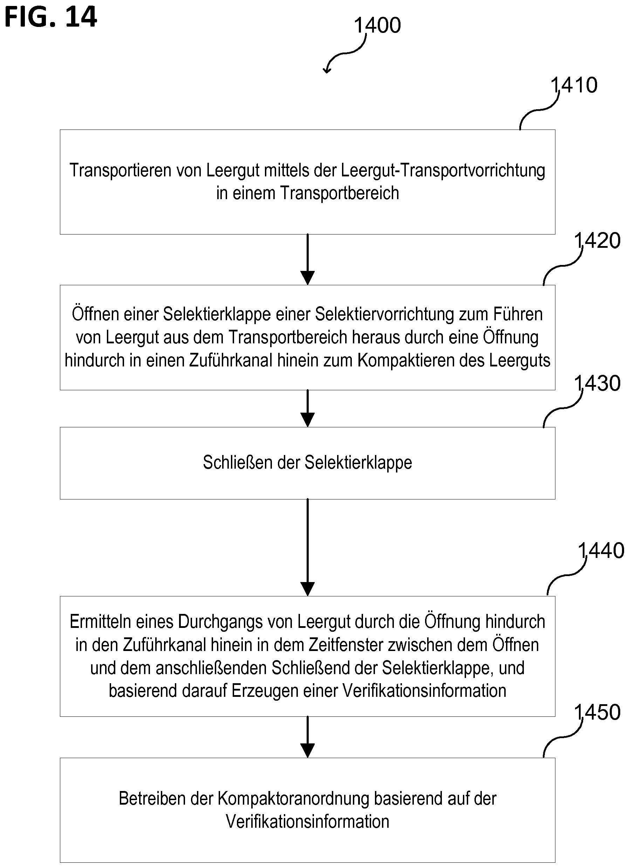

**Fig.14** veranschaulicht ein schematisches Ablaufdiagramm eines Verfahrens 1400 zum Betreiben einer Kompaktoranordnung 202, gemäß verschiedenen Ausführungsformen. Das Verfahren 1400 kann beispielsweise aufweisen: in 1410, Transportieren von Leergut 104 mittels der Leergut-Transportvorrichtung 202t in einem Transportbereich 1000t (z.B. oberhalb der Leergut-Transportvorrichtung 202t), und, in 1420, Öffnen einer Selektierklappe 1012k einer Selektiervorrichtung 202s zum Führen von Leergut 104 aus dem Transportbereich 1000t heraus durch eine Öffnung 1300o hindurch in einen Zuführkanal 1300k hinein zum Kompaktieren des Leerguts 104, anschließend, in 1430, Schließen der Selektierklappe 1012k (z.B. zum Führen von Leergut 104 in dem Transportbereich 1000t durch die Kompaktoranordnung 202 hindurch); ferner, in 1440, Ermitteln eines Durchgangs von Leergut 104 durch die Öffnung 1300o hindurch in den Zuführkanal 1300k hinein in dem Zeitfenster zwischen dem Öffnen und dem anschließenden Schließen der Selektierklappe 1012k, und, basierend darauf, in Erzeugen einer Verifikationsinformation; und, in 1450, Betreiben der Kompaktoranordnung 202 basierend auf der Verifikationsinformation.

Die Verifikationsinformation kann in Form eines geeigneten Signals bereitgestellt werden, welches zumindest zwei Zustände (z.B. verifiziert und manipuliert) repräsentieren kann.

Dabei kann das Betreiben der Kompaktoranordnung 202 basierend auf der Verifikationsinformation aufweisen: Senden einer Verifikationsnachricht, wenn ein Durchgang von Leergut 104 durch die Öffnung 1300o hindurch in den Zuführkanal 1300k hinein in dem Zeitfenster zwischen dem Öffnen und dem anschließenden Schließen der Selektierklappe ermittelt wird, und/oder Senden einer Manipulationsnachricht, wenn kein Durchgang von Leergut 104 durch die Öffnung 1300o hindurch in den Zuführkanal 1300k hinein in dem Zeitfenster zwischen dem Öffnen und dem anschließenden Schließen der Selektierklappe ermittelt wird.

Ferner kann das Ermitteln eines Durchgangs von Leergut 104 durch die Öffnung 1300o hindurch in den Zuführkanal 1300k hinein aufweisen: Ermitteln einer Bewegung einer Manipulationsschutzklappe 1302k, welche beweglich gelagert ist und in einer Ruhelage die Öffnung 1300o des Zuführkanals 1300k abdeckt.

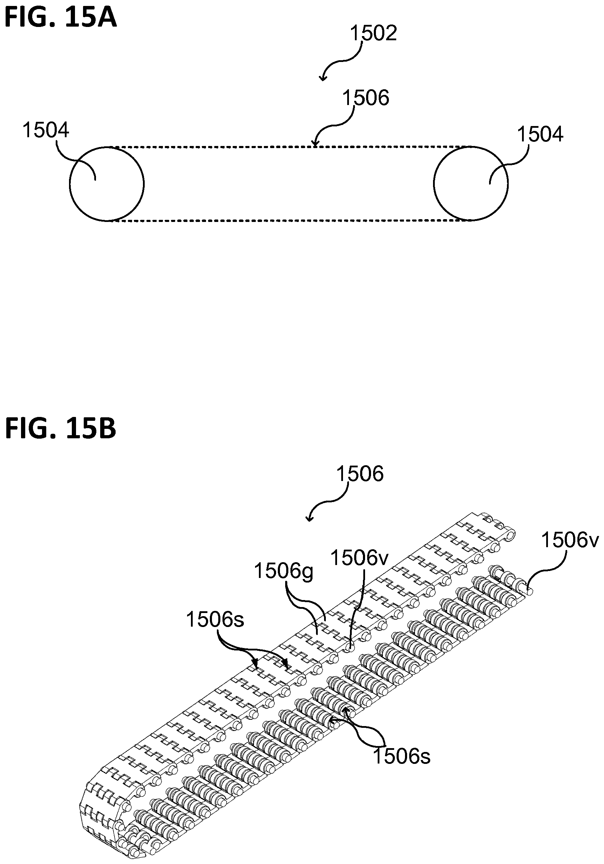

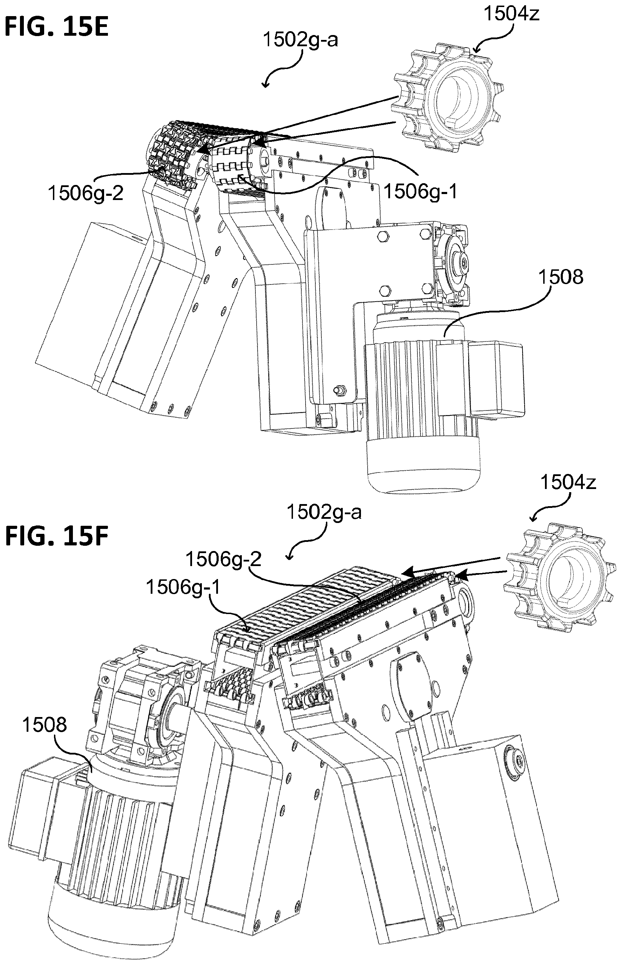

**Fig.15A** bis **Fig.15H** veranschaulichen einen Gurtgliedförderer 1502 einer Kompaktoranordnung 202 in verschiedenen schematischen Darstellungen, gemäß verschiedenen Ausführungsformen. Gemäß verschiedenen Ausführungsformen kann der Gurtgliedförderer 1502 als die Leergut-Transportvorrichtung 202t oder als Teil der Leergut-Transportvorrichtung 202t verwendet werden, wie beispielsweise vorangehend beschrieben ist (siehe beispielsweise Figuren 2A, 2B und 4C). Ferner kann der Gurtgliedförderer 1502 in gleicher oder ähnlicher Weise als Vorbandbaugruppe 402v bzw. Zuführvorrichtung 112t eines Kompaktors 102 verwendet werden, wie beispielsweise vorangehend beschrieben ist (siehe beispielsweise Figuren 1A, 1B und 4B).

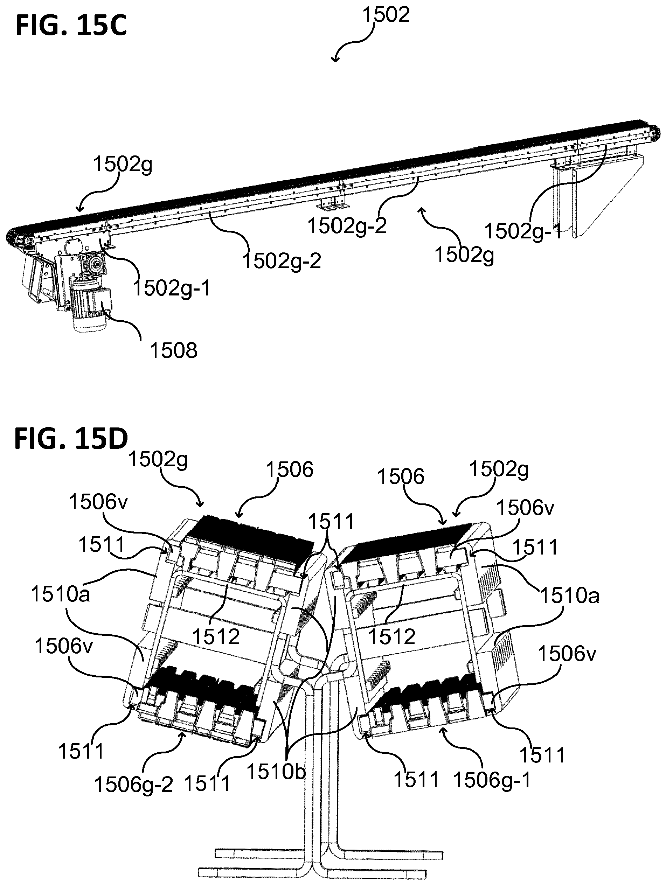

Gemäß verschiedenen Ausführungsformen kann der Gurtgliedförderer 1502 eine oder mehrere Förderbaugruppen 1502g aufweisen zum Transportieren von Leergut 104 in der Kompaktoranordnung 202. Der in den Figuren 15C bis 15H dargestellte Gurtgliedförderer 1502 weist beispielsweise zwei Förderbaugruppen 1502g auf, welche zueinander verkippt angeordnet sind, so dass Leergut 104 in einer im Wesentlichen V-förmigen Transportfläche stabil transportiert werden kann. Ferner kann der Gurtgliedförderer 1502 nur eine Förderbaugruppe 1502g aufweisen, welche beispielsweise eine ebene Transportfläche bereitstellt, wie beispielsweise in Fig.1A, 1B, und Fig.4B mit Bezug auf die Vorbandbaugruppe 402v bzw. Zuführvorrichtung 112t des Kompaktors 102 dargestellt ist. Alternativ dazu kann der Gurtgliedförderer 1502 auch mehr als zwei Förderbaugruppen 1502g aufweisen. Somit können beispielsweise Transportflächen mit komplexeren Geometrien bereitgestellt werden.

Gemäß verschiedenen Ausführungsformen kann die jeweilige Förderbaugruppe 1502g Folgendes aufweisen: mindestens zwei Umlenkrollen 1504, welche in einem Abstand voneinander angeordnet sind und mindestens einen Transportgurt 1506, welcher mittels der mindestens zwei Umlenkrollen 1504 endlos umlaufend gelagert ist, wie beispielsweise in Fig.15A veranschaulicht ist.

Der Transportgurt 1506 kann beispielsweise eine Vielzahl von Gurtgliedern 1506g aufweisen. Zum Bilden des Transportgurts 1506 können jeweils zwei einander benachbarte Gurtglieder der Vielzahl von Gurtgliedern 1506g mittels jeweils eines Verbindungselements 1506v mechanisch miteinander verbunden sein oder werden, wie beispielsweise in Fig.15B veranschaulicht ist.

Der Transportgurt 1506 kann somit derart bereitgestellt sein oder werden, dass dessen Länge auf einfach Weise angepasst werden kann, z.B. auf die Breite der Kompaktoranordnung 202, auf einen Abstand zwischen zwei einander benachbarten Kompaktoranordnungen 202, etc. Die Länge des Transportgurts 1506 kann mittels Anpassens der verwendeten Anzahl an Gurtgliedern 1506g (z.B. bei einer vordefinierten Größe der jeweils verwendeten Gurtglieder 1506g) auf eine vordefinierte Länge gebracht werden.

Gemäß verschiedenen Ausführungsformen kann die jeweilige Förderbaugruppe 1502g modular eingerichtet sein. Diese kann beispielsweise zwei Umlenkmodule 1502g-1 und mindestens ein (z.B. lineares) Streckenmodul 1502g-2 aufweisen. Dabei ist beispielsweise mindestens eine der mindestens zwei Umlenkrollen 1504 in jedem der zwei Umlenkmodule 1502g-1 angeordnet zum endlos umlaufenden Führen des Transportgurts 1506 zwischen den jeweiligen Umlenkrollen 1504. Dabei ist das mindestens eine Streckenmodul 1502g-2 zwischen den zwei Umlenkmodulen 1502g-1 angeordnet. Gemäß verschiedenen Ausführungsformen kann die Anzahl der verwendeten Streckenmodul 1502g-2 verändert werden, je nach Anzahl der verwendeten Kompaktoranordnungen 202. Wenn beispielsweise zwei Kompaktoranordnungen 202 aneinander angrenzend angeordnet sind, wie beispielsweise in Fig. 9C veranschaulicht ist, kann die Förderbaugruppe 1502g zwei Streckenmodule 1502g-2 aufweisen. Anschaulich kann ein Streckenmodul 1502g-2 pro Kompaktoranordnung 202 verwendet werden zum Transportieren von Leergut 104 in der Kompaktoranordnung 202 bzw. durch die Kompaktoranordnung 202 hindurch.

Wie beispielsweise in Fig.15C veranschaulicht ist, kann die Förderbaugruppe 1502g zwei Streckenmodule 1502g-2 aufweisen, die zwischen den zwei Umlenkmodulen 1502g-1 angeordnet sind. Dabei kann eines der zwei Umlenkmodule 1502g-1 als Antriebsmodul 1502g-a ausgestaltet sein zum Antreiben des Transportgurts 1506 (siehe Fig.15E bis Fig.15G). Das Antriebsmodul 1502g-a kann mindestens einen Elektromotor 1508 aufweisen oder mit mindestens einem Elektromotor gekuppelt sein zum Antreiben des Transportgurts 1506. Gemäß verschiedenen Ausführungsformen kann eine der mindestens zwei Umlenkrollen eine Antriebsrolle sein, auf welche mittels des mindestens einen Elektromotors 1508 ein Drehmoment übertragen werden kann.

Die jeweilige Förderbaugruppe 1502g kann ferner beispielsweise zwei seitliche Führungsschienen 1510a, 1510b aufweisen. Diese können beispielsweise derart eingerichtet sein, dass die Verbindungselemente 1506v des Transportgurts 1506 mittels der zwei Führungsschienen 1510a, 1510b endlos umlaufend geführt bzw. abgestützt werden. Jede der zwei Führungsschienen 1510a, 1510b kann beispielsweise eine endlos umlaufende Aussparung 1511 aufweisen, in welche die Verbindungselemente 1506v jeweils abschnittsweise eingreifen zum formschlüssigen Führen der Verbindungselemente 1506v, wie beispielsweise in Fig.15D veranschaulicht ist.

Gemäß verschiedenen Ausführungsformen kann die jeweilige Förderbaugruppe 1502g ferner eine Abdeckung 1512 aufweisen. Die Abdeckung 1512 kann beispielsweise zwischen den zwei Führungsschienen 1510a, 1510b und zwischen dem Lasttrum (dem jeweils oberen Abschnitt des Transportgurts 1506) und dem Leertrum (dem jeweils unteren Abschnitt des Transportgurts 1506) angeordnet sein. Somit kann beispielsweise der Leertrum abgedeckt sein, z.B. vor einer Verschmutzung von oben (z.B. ausgehend von transportiertem Leergut 104) geschützt sein.

Dabei kann die Abdeckung 1512 derart eingerichtet sein, dass der Transportgurt 1506 auf der Abdeckung 1512 gleitend abgestützt ist. Dabei können beispielsweise die jeweiligen Gurtglieder 1506g des Transportgurts 1506 und/oder die jeweiligen Verbindungselemente 1506v des Transportgurts 1506 auf der jeweiligen Abdeckung (im Lasttrum) aufliegen.

Gemäß verschiedenen Ausführungsformen können eine erste Förderbaugruppe 1502g und eine zweite Förderbaugruppe 1502g des Gurtgliedförderers 1502 jeweils eine Transportfläche bereitstellen zum Transportieren des Leerguts 104 auf den zwei Transportflächen.

Wie beispielsweise in Fig.15D veranschaulicht ist, können die erste Förderbaugruppe 1502g und die zweite Förderbaugruppe 1502g derart relativ zueinander angeordnet sind, dass die zwei Transportflächen in einem Winkel zueinander ausgerichtete sind, z.B. V-förmig.

Gemäß verschiedenen Ausführungsformen kann die erste Förderbaugruppe 1502g eine Vielzahl von Gurtgliedern 1506g eines ersten Gurtglied-Typs 1506g-1 und die zweite Förderbaugruppe 1502g eine Vielzahl von Gurtgliedern 1506g eines zweiten Gurtglied-Typs 1506g-2 aufweisen, wobei die beiden Gurtglied-Typen 1506g-1, 1506g-2 verschieden voneinander sind.

Dabei kann beispielsweise die erste Förderbaugruppe 1502g (aufweisend die Vielzahl von Gurtgliedern 1506g des ersten Gurtglied-Typs 1506g-1) dem Kompaktor 102 zugewandt und die zweite Förderbaugruppe 1502g (aufweisend die Vielzahl von Gurtgliedern 1506g des zweiten Gurtglied-Typs 1506g-2) dem Kompaktor 102 abgewandt sein (siehe beispielsweise Fig.15D und Fig.5B). Dabei können die Gurtglieder 1506g des ersten Gurtglied-Typs 1506g-1 eine nach außen hin freiliegende erste Gurtglied-Oberfläche und die Gurtglieder 1506g des zweiten Gurtglied-Typs 1506g-2 eine nach außen hin freiliegende zweite Gurtglied-Oberfläche aufweisen, wobei der erste Gurtglied-Oberfläche derart eingerichtet ist, dass diese einen geringeren Reibungskoeffizienten als die zweite Gurtglied-Oberfläche aufweist. Somit kann das Selektieren des Leerguts 104 mittels der Selektiervorrichtung 202s zuverlässiger bzw. einfacher erfolgen. Beispielsweise können die Gurtglieder 1506g des zweiten Gurtglied-Typs 1506g-2 eine Haftstruktur aufweisen, wobei die Haftstruktur die zweite Gurtglied-Oberfläche bildet. Die Haftstruktur kann beispielsweise ein Polymer aufweisen oder daraus bestehen, z.B. ein Elastomer wie beispielsweise Gummi, etc. Dabei kann die Haftstruktur beispielsweise nur an der nach außen hin freilegenden Seite der Gurtglieder 1506g bereitgestellt sein, so dass ein gleiten der Gurtglieder 1506g auf der Abdeckung 1512 nicht von der Haftstruktur negativ beeinflusst wird.

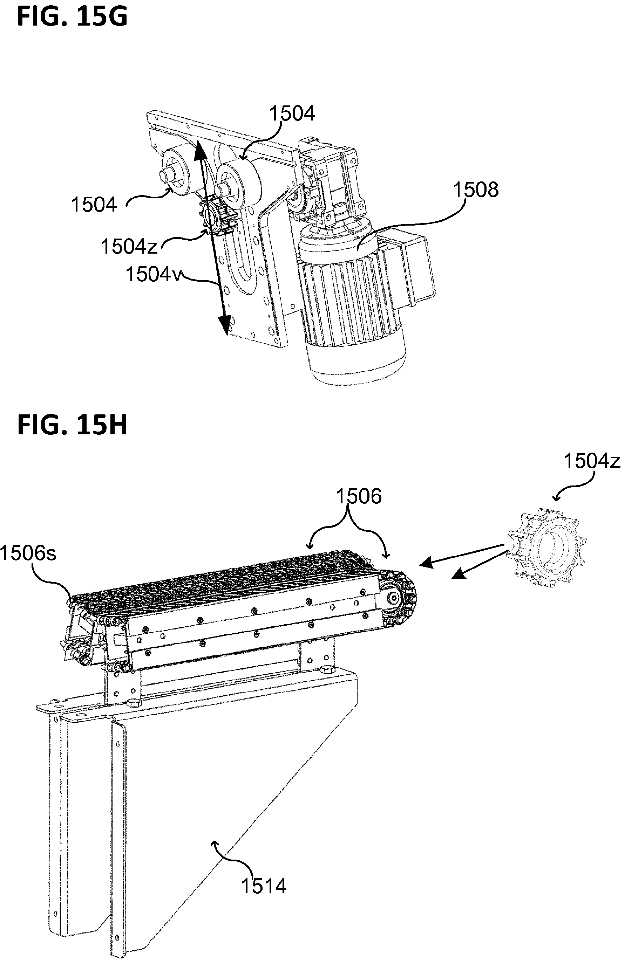

Wie beispielsweise in Fig.15B und Fig.15H veranschaulicht ist, kann jedes der Gurtglieder 1506g zwei Verbindungsstrukturen 1506s aufweisen, welche an einander gegenüberliegenden Endabschnitten des Gurtglieds 1506g gebildet sind, zum Verbinden jeweils zweier einander benachbarter Gurtglieder 1506g zu dem Transportgurt 1506. Als Verbindungelement 1506v kann beispielsweise ein Stift, ein Bolzen, ein Splint, etc., verwendet werden.

Gemäß verschiedenen Ausführungsformen können die Verbindungsstrukturen 1506s derart ausgestaltet sein, dass jeweils eine Verbindungsstruktur 1506s zweier einander benachbarter Gurtglieder 1506g zumindest formschlüssig mittels des Verbindungselements 1506v miteinander verbunden werden können.

In Fig.15E bis Fig.15G ist jeweils ein Antriebsmodul 1502g-a einer Förderbaugruppe 1502g in verschiedenen Darstellungen veranschaulicht, gemäß verschiedenen Ausführungsformen.

Gemäß verschiedenen Ausführungsformen kann mindestens eine der mindestens zwei Umlenkrollen 1504 eine Verzahnungsstruktur 1504z (anschaulich eine Aussparungsstruktur zum formschlüssigen Eingreifen von entsprechend passend dazu ausgestalteten Abschnitten des Transportgurts 1506) aufweisen, in welche der Transportgurt 1506 abschnittsweise eingreifen kann zum Antreiben des Transportgurts 1506. Dabei kann die Antriebsvorrichtung 1508 derart eingerichtet sein, dass diese die mindestens eine Umlenkrolle mit der Verzahnungsstruktur 1504z der mindestens zwei Umlenkrollen 1504 antreibt.

Gemäß verschiedenen Ausführungsformen können beispielsweise die Verbindungselemente 1506v des Transportgurts 1506 und die Verzahnungsstruktur 1504z derart eingerichtet sein, dass die Verbindungselemente 1506v in die Verzahnungsstruktur 1504z abschnittsweise eingreifen können zum Antreiben des Transportgurts 1506. Gemäß verschiedenen Ausführungsformen können beispielsweise die Gurtglieder 1506g (z.B. deren Verbindungsstrukturen) des Transportgurts 1506 und die Verzahnungsstruktur 1504z derart eingerichtet sein, dass die Gurtglieder 1506g in die Verzahnungsstruktur 1504z abschnittsweise eingreifen können zum Antreiben des Transportgurts 1506.

Gemäß verschiedenen Ausführungsformen kann die jeweilige Breite der mindestens zwei Umlenkrollen 1504 geringer sein als die Breite des Transportgurts 1506. Anschaulich kann der Transportgurt 1506 an dessen Außenseiten mittels der jeweiligen Führungsschiene 1510a, 1510b zumindest abschnittsweise geführt sein oder werden. Die jeweiligen Führungsschiene 1510a, 1510b kann beispielsweise segmentiert sein und/oder mittels einer Mehrzahl von Führungselementen bereitgestellt sein oder werden.

Gemäß verschiedenen Ausführungsformen kann ein Elektromotor verwendet werden, um jeweils nur eine der Förderbaugruppen 1502g separat zu betreiben (z.B. können die jeweiligen Antriebsrollen miteinander drehmomentgekoppelt sein, z.B. mittels eines Wellengelenks) oder um mehrere der Förderbaugruppen 1502g gleichzeitig zu betreiben.

Gemäß verschiedenen Ausführungsformen kann der Antrieb zum Antreiben des Transportgurts 1506 in Omega-Konfiguration (auch als Omega-Antrieb bezeichnet) bereitgestellt sein, wie beispielsweise in Fig.15G veranschaulicht ist. Dabei kann der Transportgurt 1506 mehrmals umgelenkt werden. Dabei kann mindestens eine der Umlenkrollen 1504 verschiebbar 1504v gelagert sein, z.B. zum Spannen des Transportgurts 1506 und/oder zum Ausgleichen einer Längenänderung des Transportgurts 1506, etc.

In Fig.15H ist ein Umlenkmodul 1502g-1 in einer schematischen Ansicht dargestellt, gemäß verschiedenen Ausführungsformen. Gemäß verschiedenen Ausführungsformen kann das Umlenkmodul 1502g-1 derart eingerichtet sein, dass mittels des Umlenkmoduls 1502g-1 ein Abstand der Kompaktoranordnung 202 und einer angrenzenden Anordnung überbrückt werden kann. Anschaulich kann ein Ausleger 1514 am Tragegestell 204a der Kompaktoranordnung 202 montiert werden, wobei der Ausleger 1514 den Abschnitt des Gurtgliedförderers 1502 trägt, welcher aus der Kompaktoranordnung 202 herausragt, siehe beispielsweise Fig.9C. Die Länge des Abschnittes des Gurtgliedförderers 1502, welcher aus der Kompaktoranordnung 202 herausragt, kann angepasst werden, z.B. in einem Bereich von bis zu einem Meter.

Gemäß verschiedenen Ausführungsformen kann ein mehrteiliger (z.B. ein zweiteiliger V-förmiger) Gurtgliedförderer 1502 in einer Kompaktoranordnung 202 zum Transportieren von Leergut 104 verwendet werden. Gemäß verschiedenen Ausführungsformen kann bei einer V-förmigen Ausgestaltung des Gurtgliedförderers 1502 eine Flüssigkeitsableitung verwendet werden, welche mittig zwischen den beiden Förderbaugruppen 1502g des Gurtgliedförderers 1502 angeordnet sein kann.

Gemäß verschiedenen Ausführungsformen kann die dem Kompaktor 102 abgewandte Förderbaugruppe 1502g einen Transportgurt 1506 mit gummierten Gurtgliedern 1506g aufweisen.

Die jeweilige Förderbaugruppe 1502g kann eine Leertrumunterstützung aufweisen, z.B. bereitgestellt mittels einer Führungsgeometrie (z.B. den jeweiligen Führungsschienen 1510a, 1510b) und den jeweiligen Verbindungselementen 1506v (z.B. Gurtgliedverbindungsbolzen).

Ein Längenausgleich für den Transportgurt 1506 kann beispielsweise mittels eines schwerkraftunterstützten Omega-Antriebs bereitgestellt sein oder werden. Dabei kann mindestens eine Umlenkrolle beweglich gelagert sein und in den Transportgurt 1506 eingehängt sein, so dass diese mittels einer Kraft den Transportgurt 1506 entsprechend spannt, siehe Fig.15G.

Mittels einer Abdeckung 1512 (z.B. einer geschlossenen Gleitstruktur) kann der Leertrum oberseitig vollständig abgedeckt sein.

Gemäß verschiedenen Ausführungsformen kann der Gurtgliedförderer 1502 an dem Tragegestell 204a der Kompaktoranordnung 202 montiert sein oder werden, siehe beispielsweise Fig.4A. Dabei kann eine schwingungshemmende Anbindung des Gurtgliedförderers 1502 an das Tragegestell 204a bereitgestellt sein oder werden, z.B. können schwingungsdämpfende Elemente zum Montieren des Gurtgliedförderers 1502 an dem Tragegestell 204a verwendet werden.

Aufgrund des modularen Aufbaus, wie beispielsweise in Fig.15C veranschaulicht ist, kann der Gurtgliedförderer 1502 auf einfache Weise ausgetauscht, gewartet, und/oder gereinigt werden.

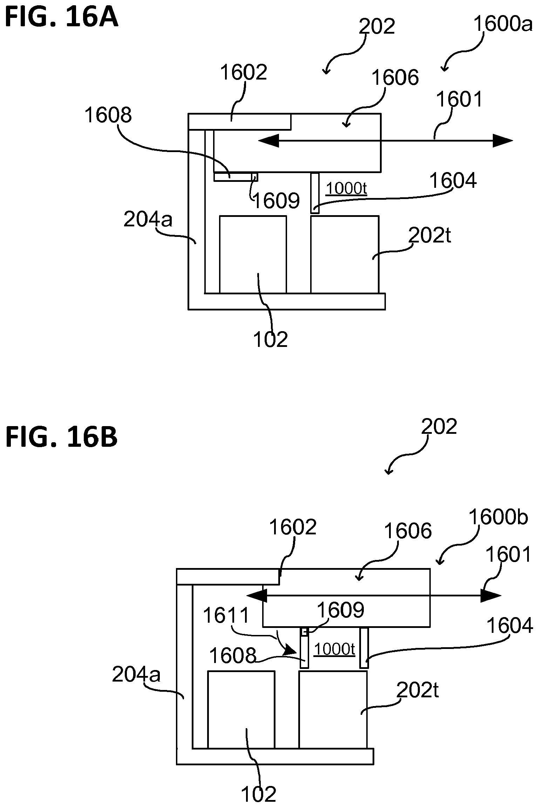

**Fig.16A** und **Fig.16B** veranschaulichen eine Kompaktoranordnung 202 in verschiedenen schematischen Darstellungen, gemäß verschiedenen Ausführungsformen.

Gemäß verschiedenen Ausführungsformen kann die Kompaktoranordnung 202 einen Kompaktor 102 aufweisen zum Kompaktieren von Leergut 104, z.B. wie vorangehend beschrieben ist. Ferner kann die Kompaktoranordnung 202 ein Tragegestell 204a aufweisen zum Tragen des Kompaktors 102, z.B. wie vorangehend beschrieben ist. Ferner kann die Kompaktoranordnung 202 eine Leergut-Transportvorrichtung 202t zum Transportieren von Leergut 104 in der Kompaktoranordnung 202 aufweisen.

Ferner kann die Kompaktoranordnung 202 eine Baugruppenanordnung 1606 aufweisen. Die Baugruppenanordnung 1606 kann beispielsweise oberhalb des Kompaktors 102 und/oder oberhalb der Leergut-Transportvorrichtung 202t an dem Tragegestell 204a montiert sein.

Ferner kann die Baugruppenanordnung 1606 mindestens eine erste Abdeckstruktur 1604 und eine zweite Abdeckstruktur 1608 aufweisen, welche in einem Abstand voneinander angeordnet sind.

Gemäß verschiedenen Ausführungsformen kann die Elektrobaugruppe 428, wie beispielsweise vorangehend beschrieben ist (siehe beispielsweise Fig.4D), als Baugruppenanordnung 1606 verwendet werden. Die Baugruppenanordnung 1606 kann somit beispielsweise einen oder mehrere Elektrokästen 428e und/oder eine Frontbaugruppe 428f bzw. eine Funktionsmodulanordnung 1102 aufweisen.

Ferner kann die Baugruppenanordnung 1606 eine Selektiervorrichtung 202s aufweisen, z.B. in Form eines Selektiermoduls 1106s der Funktionsmodulanordnung 1102.

Gemäß verschiedenen Ausführungsformen kann die Selektierklappe der Selektiervorrichtung 202s (z.B. die Selektierklappe 1012k eines Selektiermoduls 1106s) einen ersten Abschnitt der ersten Abdeckstruktur 1604 bilden (z.B., wenn das Selektiermodul 1106s in der Modulaufnahme 1104 der Funktionsmodulanordnung 1102 aufgenommen ist), siehe Fig.10D Fig.13A und Fig.13C. Ferner kann anstelle des Selektiermoduls 1106s ein Schutzmodul 1106n verwendet werden, siehe beispielsweise Fig.11D. Dabei kann die Schutzplatte 1106n-1 des Schutzmoduls 1106n einen ersten Abschnitt der ersten Abdeckstruktur 1604 bilden (z.B. wenn das Schutzmodul 1106n in der Modulaufnahme 1104 der Funktionsmodulanordnung 1102 aufgenommen ist).

Ferner kann die erste Abdeckstruktur 1604 eine Eingriff-Schutzstruktur aufweisen, z.B. eine erste Eingriff-Schutzstruktur 1000s wie vorangehend beschrieben ist, siehe beispielsweise Fig.10A bis Fig.10D Beispielsweise kann eine Platte 1106c-1 des Selektierinformationsmoduls 1106c Teil der ersten Abdeckstruktur 1604 sein. Anschaulich bildet die erste Abdeckstruktur 1604 eine Eingriff-Schutzstruktur zum Verhindern eines Eingriffs von einem Transportbereich 1000t oberhalb der Leergut-Transportvorrichtung 202t in Richtung des Kompaktors 102, in ähnlicher Weise wie vorangehend beschrieben ist. Die Abdeckstruktur 1604 kann beispielsweise mittels zweier Eingriff-Schutzstrukturen 1000s, 1002s (siehe beispielsweise Fig.10B und Fig.10E oder mittels einer Eingriff-Schutzstruktur 1000s und der Selektierklappe 1012k (siehe beispielsweise Fig.10D) bereitgestellt sein oder werden, siehe beispielsweise Fig.10B.

Die Baugruppenanordnung 1606 kann beispielsweise mittels einer oder mehrerer Lageranordnungen 1602 verschiebbar an dem Tragegestell 204a montiert sein. Dabei kann die Baugruppenanordnung 1606 derart gelagert und eingerichtet sein, dass diese oberhalb der Leergut-Transportvorrichtung 202t verschoben 1601 werden kann, wie beispielsweise in Fig.16A und Fig.16B beispielhaft dargestellt ist.

Gemäß verschiedenen Ausführungsformen kann die Baugruppenanordnung 1606 derart gelagert sein, dass diese in eine Betriebsposition 1600a (siehe beispielsweise Fig.16A) und in eine Montageposition 1600b (siehe beispielsweise Fig.16B) bewegt werden kann.

Die Baugruppenanordnung 1606 kann dabei derart eingerichtet sein, dass in der Betriebsposition 1600a mittels der Leergut-Transportvorrichtung 202t transportiertes Leergut 104 selektiv dem Kompaktor 102 zugeführt werden kann, und dass die Baugruppenanordnung 1606 in der Montageposition 1600b die Leergut-Transportvorrichtung 202t bzw. den Transportbereich 1000t oberhalb der Leergut-Transportvorrichtung 202t zumindest teilweise abdeckt.

Gemäß verschiedenen Ausführungsformen kann die zweite Abdeckstruktur 1608 mittels mindestens eines Gelenks 1609 schwenkbar 1611 gelagert sein. In der Betriebsposition 1600a ist die zweite Abdeckstruktur 1608 derart angeordnet, dass diese einen Zugang vom Transportbereich 1000t in den Kompaktor 102 nicht behindert, so dass Leergut 104 dem Kompaktor 102 zugeführt werden kann. Beim Bewegen der Baugruppenanordnung 1606 in die Montageposition 1600b, kann die zweite Abdeckstruktur 1608 selbsttätig nach unten Klappen, so dass diese den Transportbereich 1000t seitlich begrenzt und zwischen dem Transportbereich 1000t und dem Kompaktor 102 angeordnet ist. In der Montageposition 1600b können die beiden Abdeckstrukturen 1604, 1608 beispielsweise den Transportbereich 1000t beidseitig begrenzen.

In der Montageposition 1600b bildet die zweite Abdeckstruktur 1608 anschaulich einen Eingriffsschutz in Richtung des Kompaktors 102 bzw. deckt einen Zuführbereich 1000d oder einen Pfad 1300d in Richtung des Kompaktors 102 ab.

Gemäß verschiedenen Ausführungsformen können die beiden Abdeckstrukturen 1604, 1608, wenn die Baugruppenanordnung 1606 in der Montageposition 1600b ist, im Wesentlichen parallel zueinander ausgerichtet sein. Anschaulich wird mittels der beiden Abdeckstrukturen 1604, 1608 der Baugruppenanordnung 1606 ein Transportkanal um den Transportbereich 1000t herum gebildet, in welchem Leergut 104 in diesem Betriebsmodus durch die Kompaktoranordnung 202 hindurch transportiert werden kann. Anschaulich kann somit ein Notbetrieb bereitgestellt werden, in welchem beispielsweise der Kompaktor 102 repariert, ausgetauscht, gereinigt, etc., werden kann, wobei gleichzeitig die Betriebssicherheit gewährleistet ist.

Gemäß verschiedenen Ausführungsformen kann eine Kompaktoranordnung 202 Folgendes aufweisen: einen Kompaktor 102; ein Tragegestell 204a zum Tragen des Kompaktors 102; eine Leergut-Transportvorrichtung 202t zum Transportieren von Leergut 104 in einem Transportbereich 1000t der Kompaktoranordnung 202; eine Baugruppenanordnung 1606, welche oberhalb des Kompaktors 102 und/oder oberhalb der Leergut-Transportvorrichtung 202t angeordnet ist und eine erste Abdeckstruktur 1604 und eine schwenkbar gelagerte zweite Abdeckstruktur 1608 aufweist, wobei die Baugruppenanordnung 1606 zwischen einer ersten Position 1600a (anschaulich einer Betriebsposition) und einer zweiten Position 1600b (anschaulich einer Montageposition) beweglich (z.B. an dem Tragegestell 204a) gelagert ist, und wobei die Baugruppenanordnung 1606 derart eingerichtet ist, dass, in der zweiten Position 1600b, die erste Abdeckstruktur 1604 den Transportbereich 1000t auf einer ersten Seite abdeckt und die zweite Abdeckstruktur 1608 den Transportbereich 1000t auf einer der ersten Seite gegenüberliegenden zweiten Seite abdeckt; und dass, in der ersten Position 1600a, die erste Abdeckstruktur 1604 den Transportbereich 1000t auf der zweiten Seite abdeckt. Dabei kann die zweite Seite des Transportbereichs 1000t dem Kompaktor 102 zugewandt sein.

Gemäß verschiedenen Ausführungsformen kann ein Verfahren zum Betreiben einer Kompaktoranordnung 202 Folgendes aufweisen: Transportieren von Leergut 104 in einem Transportbereich 1000t der Kompaktoranordnung 202 mittels einer Leergut-Transportvorrichtung 202t; wahlweises Betreiben der Kompaktoranordnung 202 in einem Betriebsmodus oder in einem Montagemodus (anschaulich in zwei voneinander verschiedenen Betriebsmodi), wobei in dem Betriebsmodus eine Baugruppenanordnung 1606 in einer ersten Position oberhalb der Leergut-Transportvorrichtung 202t ist und Leergut 104 mittels einer Selektiervorrichtung 202s der Baugruppenanordnung 1606 selektiv einem Kompaktor 102 der Kompaktoranordnung 202 zugeführt wird, und wobei in dem Montagemodus die Baugruppenanordnung 1606 in eine zweite Position gebracht (z.B. verschoben) wird und mittels zweier Abdeckstrukturen 1604, 1608 der Baugruppenanordnung 1606 der Transportbereich 1000t beidseitig abgedeckt wird.

Gemäß verschiedenen Ausführungsformen kann ein Verfahren zum Betreiben einer Kompaktoranordnung 202 Folgendes aufweisen: Betreiben der Kompaktoranordnung 202 in einem Betriebsmodus, aufweisend: Transportieren von Leergut 104 mittels der Leergut-Transportvorrichtung 202t in einem Transportbereich 1000t, und selektives Führen des Leerguts 104 mittels einer Selektiervorrichtung 202s, die Teil einer beweglich gelagerten Baugruppenanordnung ist, aus dem Transportbereich 1000t heraus und durch einen Zuführbereich 1000d hindurch zu einem Kompaktor 102 der Kompaktoranordnung 202; und, zuvor und/oder anschließend, Betreiben der Kompaktoranordnung 202 in einem zweiten Betriebsmodus, aufweisend: Transportieren von Leergut 104 mittels der Leergut-Transportvorrichtung 202t in dem Transportbereich 1000t durch die Kompaktoranordnung 202 hindurch, und Sichern des Zuführbereichs 1000d mittels mindestens einer Abdeckstruktur 1608, die Teil der beweglich gelagerten Baugruppenanordnung ist, vor einem Eingriff aus Richtung des Transportbereichs 1000t. Dabei kann die Baugruppenanordnung 1606 in dem ersten Betriebsmodus in einer ersten Betriebsposition 1600a sein und in dem zweiten Betriebsmodus (anschaulich in einem Montagemodus) in einer zweiten Betriebsposition 1600b (anschaulich in einer Montageposition) sein, siehe beispielsweise Fig.16A und Fig.16B.

Ferner kann das Verfahren aufweisen: Wechseln von dem ersten Betriebsmodus in den zweiten Betriebsmodus, aufweisend: Verschieben der Baugruppenanordnung 1606 derart, dass eine erste Abdeckstruktur 1604 der Baugruppenanordnung 1606 den Transportbereich 1000t auf einer ersten Seite abdeckt, und Schwenken einer zweiten Abdeckstruktur 1608 der Baugruppenanordnung 1606 in eine Stellung, in welcher die zweite Abdeckstruktur 1608 den Transportbereich 1000t auf einer der ersten Seite gegenüberliegenden zweiten Seite abdeckt. Dabei kann die zweite Seite des Transportbereichs 1000t dem Kompaktor 102 zugewandt sein.

Gemäß verschiedenen Ausführungsformen wird bei dem Wechseln von dem ersten Betriebsmodus in den zweiten Betriebsmodus die zweite Abdeckstruktur 1608 aus einer im Wesentlichen horizontalen Stellung in eine im Wesentlichen vertikale Stellung geschwenkt. Dabei kann die Baugruppenanordnung 1606 derart eingerichtet sein, dass die zweite Abdeckstruktur 1608 aufgrund ihres Eigengewichts und deren Lagerung selbsttätig in die vertikale Stellung schwenkt. Bei dem Wechsel von dem zweiten Betriebsmodus in den ersten Betriebsmodus kann die zweite Abdeckstruktur 1608 selbsttätig in die horizontale Stellung schwenken, gekoppelt mit der Bewegung der Baugruppenanordnung 1606. Beispielsweise kann die zweite Abdeckstruktur 1608 gegen eine entsprechend ausgestaltete Führungsstruktur geschoben werden, so dass die zweite Abdeckstruktur 1608 selbsttätig aufgrund der Führungsstruktur in die horizontale Stellung geschwenkt wird.

Gemäß verschiedenen Ausführungsformen können die jeweiligen Funktionen, die hierin beschrieben sind (z.B. mit Bezug auf den mindestens einen Prozessor) in Hardware, z.B. in jeder geeigneten elektronischen Schaltung, und/oder in Software, z.B. auf einem Datenträger gespeichert (z.B. als Steuerprogramm) und ausgeführt von mindestens einem Prozessor, implementier sein.

Im Folgenden werden verschiedene Beispiele beschrieben, die sich auf das vorangehend Beschriebene und Dargestellte beziehen.

Beispiel 1 ist eine Kompaktoranordnung 202, aufweisend: einen Kompaktor 102; eine Leergut-Transportvorrichtung 202t zum Transportieren von Leergut 104 in der Kompaktoranordnung 202 in einem Transportbereich 1000t oberhalb der Leergut-Transportvorrichtung 202t; eine erste Eingriff-Schutzstruktur 1000s, welche den Transportbereich 1000t seitlich begrenzt und zwischen dem Transportbereich 1000t und dem Kompaktor 102 bereitgestellt ist, wobei die erste Eingriff-Schutzstruktur 1000s einen Zuführbereich 1000d definiert, durch welchen hindurch Leergut 104 seitlich aus dem Transportbereich 1000t heraus dem Kompaktor 102 zugeführt werden kann; und eine Schutzvorrichtung 1002 aufweisend eine zweite Eingriff-Schutzstruktur 1002s, welche derart eingerichtet ist, dass wahlweise ein Eingriff 1002e aus Richtung des Transportbereichs 1000t in den Zuführbereich 1000d verhindert werden kann.

In Beispiel 2 kann die Kompaktoranordnung 202 gemäß Beispiel 1 ferner aufweisen: eine Selektiervorrichtung 202s, welche derart eingerichtet ist, dass Leergut 104 selektiv aus dem Transportbereich 1000t heraus und durch den Zuführbereich 1000d hindurch dem Kompaktor 102 zugeführt werden kann.

In Beispiel 3 kann die Kompaktoranordnung 202 gemäß Beispiel 2 ferner aufweisen, dass die Selektiervorrichtung 202s eine Selektierklappe 1012k und einen Stellantrieb 1012a zum Bewegen der Selektierklappe 1012k in eine erste Stellung 1003a und in eine zweite Stellung 1003b aufweist. Ferner kann die Selektiervorrichtung 202s derart eingerichtet sein, dass,
wenn die Selektierklappe 1012k in der ersten Stellung 1003a ist, Leergut 104, welches mittels der Leergut-Transportvorrichtung 202t transportiert wird, mittels der Selektierklappe 1012k durch den Zuführbereich 1000d hindurch dem Kompaktor 102 zugeführt werden kann, und, wenn die Selektierklappe 1012k in der zweiten Stellung 1003b ist, Leergut 104 mittels der Leergut-Transportvorrichtung 202t in dem Transportbereich 1000t durch die Kompaktoranordnung 202 hindurch transportiert werden kann.

In Beispiel 4 kann die Kompaktoranordnung 202 gemäß einem der Beispiele 1 bis 3 ferner aufweisen, dass die zweite Eingriff-Schutzstruktur 1002s der Schutzvorrichtung 1002 eine Schutzplatte aufweist. Dabei kann die Schutzplatte derart beweglich 1002v gelagert sein, dass diese in eine erste Position 1005a und eine zweite Position 1005b bewegt werden kann. Dabei kann die Schutzplatte nur in der ersten Position 1005a den Zuführbereich 1000d abdecken und/oder in dem Zuführbereich 1000d angeordnet sein zum Verhindern des Eingriffs 1002e aus Richtung des Transportbereichs 1000t in den Zuführbereich 1000d.

In Beispiel 5 kann die Kompaktoranordnung 202 gemäß einem der Beispiele 1 bis 3 ferner aufweisen: eine Funktionsmodulanordnung 1102, welche oberhalb der Leergut-Transportvorrichtung 202t angeordnet ist. Dabei kann die Funktionsmodulanordnung 1102 aufweisen: eine Modulaufnahme 1104 zum Aufnehmen von mehreren Funktionsmodulen 1106, die mehreren Funktionsmodule 1106, welche passend zu der Modulaufnahme 1104 ausgestaltet sind derart, dass die mehreren Funktionsmodule 1106 jeweils wahlweise in der Modulaufnahme 1104 aufgenommen werden können, wobei die Selektiervorrichtung 202s als ein Selektiermodul 1106s der mehreren Funktionsmodule 1106 bereitgestellt ist, und wobei die Schutzvorrichtung 1002 als ein Schutzmodul 1106n der mehreren Funktionsmodule 1106 bereitgestellt ist.

In Beispiel 6 kann die Kompaktoranordnung 202 gemäß Beispiel 5 ferner aufweisen, dass das Schutzmodul 1106n eine Schutzplatte 1106n-1 aufweist. Dabei kann das Schutzmodul 1106n derart eingerichtet sein, dass, wenn das Schutzmodul 1106n in der Modulaufnahme 1104 aufgenommen ist, die Schutzplatte 1106n-1 den Zuführbereich 1000d abdeckt und/oder in dem Zuführbereich 1000d angeordnet ist zum Verhindern des Eingriffs 1002e aus Richtung des Transportbereichs 1000t in den Zuführbereich 1000d.

In Beispiel 7 kann die Kompaktoranordnung 202 gemäß Beispiel 5 oder 6 ferner aufweisen, dass die Modulaufnahme 1104 zumindest eine Aufnahmeposition 1104p aufweist derart, dass wahlweise entweder das Selektiermodul 1106s oder das Schutzmodul 1106n in der Aufnahmeposition 1104p aufgenommen werden kann.

In Beispiel 8 kann die Kompaktoranordnung 202 gemäß einem der Beispiele 5 bis 7 ferner aufweisen: mindestens einen Prozessor, welcher eingerichtet ist, den Kompaktor 102 zu deaktivieren, wenn das Schutzmodul 1106n in der Modulaufnahme 1104 aufgenommen ist.

In Beispiel 9 kann die Kompaktoranordnung 202 gemäß Beispiel 8 ferner aufweisen, dass der mindestens eine Prozessor ferner eingerichtet ist, die Leergut-Transportvorrichtung 202t derart anzusteuern, dass Leergut 104 mittels der Leergut-Transportvorrichtung 202t durch die Kompaktoranordnung 202 hindurch transportiert wird, wenn das Schutzmodul 1106n in der Modulaufnahme 1104 aufgenommen ist.

In Beispiel 10 kann die Kompaktoranordnung 202 gemäß Beispiel 8 oder 9 ferner aufweisen, dass der mindestens eine Prozessor ferner eingerichtet ist, das Selektiermodul 1106s, wenn dieses in der Modulaufnahme 1104 aufgenommen ist, derart anzusteuern, dass Leergut 104 aus dem Transportbereich 1000t selektiv dem Kompaktor 102 durch den Zuführbereich 1000d hindurch zugeführt werden kann.

In Beispiel 11 kann die Kompaktoranordnung 202 gemäß einem der Beispiele 8 bis 10 ferner aufweisen, dass das Selektiermodul 1106s als ein Selektiermodul eines ersten Selektiermodultyps oder eines zweiten Selektiermodultyps bereitgestellt ist, wobei der mindestens eine Prozessor eingerichtet ist, die Leergut-Transportvorrichtung 202t derart anzusteuern, dass die Leergut-Transportvorrichtung 202t in eine erste Transportrichtung bewegt wird, wenn ein Selektiermodul des ersten Selektiermodul-Typs in der Modulaufnahme 1104 aufgenommen ist. Ferner kann der mindestens eine Prozessor eingerichtet sein, die Leergut-Transportvorrichtung 202t derart anzusteuern, dass die Leergut-Transportvorrichtung 202t in eine zweite Transportrichtung, welche verschieden von der ersten Transportrichtung ist, bewegt wird, wenn ein Selektiermodul des zweiten Selektiermodul-Typs in der Modulaufnahme 1104 aufgenommen ist.

In Beispiel 12 kann die Kompaktoranordnung 202 gemäß einem der Beispiele 1 bis 11 ferner aufweisen: eine obere Abdeckung 408, welche derart eingerichtet ist, dass mittels der oberen Abdeckung 408 wahlweise ein Eingriff (z.B. von außerhalb der Kompaktoranordnung 202) in den Transportbereich 1000t hinein verhindern werden kann.

Beispiel 13 ist eine Kompaktoranordnung 202, aufweisend: ein Tragegestell 204a zum Tragen eines Kompaktors 102, eine Leergut-Transportvorrichtung 202t zum Transportieren von Leergut 104 in der Kompaktoranordnung 202, eine Funktionsmodulanordnung 1102, welche an dem Tragegestell 204a oberhalb der Leergut-Transportvorrichtung 202t montiert ist. Die Funktionsmodulanordnung 1102 kann beispielsweise Folgendes aufweisen: eine Modulaufnahme 1104 zum Aufnehmen von mehreren Funktionsmodulen 1106, die mehreren Funktionsmodule 1106, welche passend zu der Modulaufnahme 1104 ausgestaltet sind derart, dass die mehreren Funktionsmodule 1106 jeweils wahlweise in der Modulaufnahme 1104 aufgenommen werden können, wobei die Selektiervorrichtung 202s als ein Selektiermodul 1106s der mehreren Funktionsmodule 1106 bereitgestellt ist, und wobei die zweite Eingriff-Schutzstruktur 1002s als ein Schutzmodul 1106n der mehreren Funktionsmodule 1106 bereitgestellt ist.

Beispiel 14 ist eine Kompaktoreinrichtung 300, aufweisend: mehrere Kompaktoranordnungen 202 gemäß einem der Beispiele 1 bis 12, wobei die Kompaktoranordnungen 202 derart relativ zueinander angeordnet sind, dass Leergut 104 entlang einer Transportstrecke 306 durch die Kompaktoranordnungen 202 hindurch transportiert werden kann.

Beispiel 15 ist ein Verfahren 1200 zum Betreiben einer Kompaktoranordnung 202, das Verfahren 1200 aufweisend: Betreiben der Kompaktoranordnung 202 in einem ersten Betriebsmodus 1001a, aufweisend: Transportieren von Leergut 104 mittels der Leergut-Transportvorrichtung 202t in einem Transportbereich 1000t, und selektives Führen des Leerguts 104 mittels einer Selektiervorrichtung 202s aus dem Transportbereich 1000t heraus und durch einen Zuführbereich 1000d hindurch zu einem Kompaktor 102 der Kompaktoranordnung 202; und, zuvor und/oder anschließend, Betreiben der Kompaktoranordnung 202 in einem zweiten Betriebsmodus, aufweisend: Transportieren von Leergut 104 mittels der Leergut-Transportvorrichtung 202t in dem Transportbereich 1000t durch die Kompaktoranordnung 202 hindurch, und Sichern des Zuführbereichs 1000d mittels mindestens einer Eingriff-Schutzstruktur 1002s vor einem Eingriff 1002e aus Richtung des Transportbereichs 1000t.

In Beispiel 16 kann das Verfahren 1200 gemäß Beispiel 15 ferner aufweisen: Wechseln von dem ersten Betriebsmodus 1001a in den zweiten Betriebsmodus 1001b, das Wechseln aufweisend: Demontieren der Selektiervorrichtung 202s, und Montieren der mindestens einen Eingriff-Schutzstruktur 1002s derart, dass diese den Zuführbereich 1000d abdeckt und/oder in dem Zuführbereich 1000d angeordnet ist.

In Beispiel 17 kann das Verfahren 1200 gemäß Beispiel 15 oder 16 ferner aufweisen: Wechseln von dem zweiten Betriebsmodus 1001b in den ersten Betriebsmodus 1001a, das Wechseln aufweisend: Demontieren der mindestens einen Eingriff-Schutzstruktur 1002s, und Montieren der Selektiervorrichtung 202s.

In Beispiel 18 kann das Verfahren 1200 gemäß Beispiel 15 ferner aufweisen: Wechseln von dem ersten Betriebsmodus 1001a in den zweiten Betriebsmodus 1001b, das Wechseln aufweisend: Verschieben der Eingriff-Schutzstruktur 1002s derart, dass diese den Zuführbereich 1000d abdeckt und/oder in dem Zuführbereich 1000d angeordnet ist.

In Beispiel 19 kann das Verfahren 1200 gemäß Beispiel 15 oder 18 ferner aufweisen: Wechseln von dem zweiten Betriebsmodus 1001b in den ersten Betriebsmodus 1001a, das Wechseln aufweisend: Verschieben der Eingriff-Schutzstruktur 1002s derart, dass der Zuführbereich 1000d freigegeben wird.

In Beispiel 20 kann das Verfahren 1200 gemäß einem der Beispiele 15 bis 19 ferner aufweisen, dass das Betreiben der Kompaktoranordnung 202 in dem ersten Betriebsmodus 1001a ferner aufweist: Betreiben des Kompaktors 102 zum Kompaktieren des Leerguts 104, welches mittels der Selektiervorrichtung 202s dem Kompaktor 102 durch den Zuführbereich 1000d hindurch zugeführt wird; und dass das Betreiben der Kompaktoranordnung 202 in dem zweiten Betriebsmodus 1001b ferner aufweist: Deaktivieren des Kompaktors 102.

Beispiel 21 ist eine Kompaktoranordnung 202, aufweisend: einen Kompaktor 102; eine Leergut-Transportvorrichtung 202t zum Transportieren von Leergut 104 in der Kompaktoranordnung 202 in einem Transportbereich 1000t (z.B. oberhalb der Leergut-Transportvorrichtung 202t); einen Zuführkanal 1300k zum Führen von Leergut 104 von der Leergut-Transportvorrichtung 202t zu dem Kompaktor 102; eine Selektiervorrichtung 202s, welche derart eingerichtet ist, dass Leergut 104 selektiv aus dem Transportbereich 1000t heraus durch eine Öffnung 1300o hindurch in den Zuführkanal 1300k geführt werden kann; und eine Manipulationsschutzvorrichtung 1302. Die Manipulationsschutzvorrichtung 1302 kann beispielsweise Folgendes aufweisen: eine Manipulationsschutzklappe 1302k, welche derart beweglich gelagert ist, dass diese bei einem Durchführen von Leergut 104 durch die Öffnung 1300o bewegt wird. Ferner kann die Kompaktoranordnung 202 mindestens einen Prozessor aufweisen, welcher eingerichtet ist, eine Bewegung der Manipulationsschutzklappe 1302k zu überwachen und basierend darauf, die Kompaktoranordnung 202 zu betreiben.

Beispiel 22 ist eine Kompaktoranordnung 202, aufweisend: einen Kompaktor 102; eine Leergut-Transportvorrichtung 202t zum Transportieren von Leergut 104 in der Kompaktoranordnung 202 in einem Transportbereich 1000t oberhalb der Leergut-Transportvorrichtung 202t; einen Zuführkanal 1300k zum Führen von Leergut 104 von der Leergut-Transportvorrichtung 202t zu dem Kompaktor 102; eine Selektiervorrichtung 202s, welche derart eingerichtet ist, dass Leergut 104 selektiv aus dem Transportbereich 1000t heraus durch eine Öffnung 1300o hindurch in den Zuführkanal 1300k geführt werden kann; und eine Manipulationsschutzvorrichtung 1302 aufweisend mindestens einen Sensor 1302s zum Detektieren eines Durchführens von Leergut 104 durch die Öffnung.

In Beispiel 23 kann die Kompaktoranordnung 202 gemäß Beispiel 22 ferner aufweisen, dass die Selektiervorrichtung 202s eine Selektierklappe 1012k und einen Stellantrieb 1012a aufweist zum Bewegen der Selektierklappe 1012k in eine erste Stellung 1003a und in eine zweite Stellung 1003b. Die Selektiervorrichtung 202s kann dabei ferner derart eingerichtet sein, dass, wenn die Selektierklappe 1012k in der ersten Stellung 1301b ist, Leergut 104, welches mittels der Leergut-Transportvorrichtung 202t transportiert wird, mittels der Selektierklappe 1012k durch den Zuführbereich 1000d hindurch dem Kompaktor 102 zugeführt werden kann, und, wenn die Selektierklappe 1012k in der zweiten Stellung 1301a ist, Leergut 104 mittels der Leergut-Transportvorrichtung 202t in dem Transportbereich 1000t durch die Kompaktoranordnung 202 hindurch transportiert werden kann. Anschaulich wird das Leergut 104 nicht dem Kompaktor 102 der Kompaktoranordnung 202 zugeführt, wenn die Selektierklappe 1012k in der zweiten Stellung 1301a ist.

In Beispiel 24 kann die Kompaktoranordnung 202 gemäß Beispiel 22 oder 23 ferner aufweisen, dass die Manipulationsschutzvorrichtung 1302 eine Manipulationsschutzklappe 1302k aufweist. Die Manipulationsschutzklappe 1302k kann derart beweglich gelagert sein, dass diese bei einem Durchführen von Leergut 104 durch die Öffnung 1300o hindurch von einer ersten Stellung 1303a in eine zweite Stellung 1303b bewegt wird. Dabei kann der mindestens eine Sensor 1302s eingerichtet sein, das Detektieren eines Durchführens von Leergut 104 durch die Öffnung 1300o hindurch basierend auf einer Bewegung der Manipulationsschutzklappe 1302k von der ersten Stellung 1303a in die zweite Stellung 1303b zu detektieren.

In Beispiel 25 kann die Kompaktoranordnung 202 gemäß einem der Beispiele 22 bis 24 ferner aufweisen: mindestens einen Prozessor zum Ansteuern der Selektiervorrichtung 202s basierend auf Ansteuerdaten und zum Empfangen von Sensordaten des mindestens einen Sensors 1302s. Dabei kann der mindestens eine Prozessor eingerichtet sein, ein erwartetes Durchführen von Leergut 104 durch die Öffnung basierend auf den Ansteuerdaten zu ermitteln und das erwartete Durchführen von Leergut 104 durch die Öffnung anhand der Sensordaten zu verifizieren.

In Beispiel 26 kann die Kompaktoranordnung 202 gemäß Beispiel 25 ferner aufweisen, dass der mindestens eine Prozessor eingerichtet ist eine Verifikationsnachricht zu erzeugen, wenn ein erwartetes Durchführen von Leergut 104 durch die Öffnung verifiziert wird, und/oder eine Manipulationsnachricht zu erzeugen, wenn ein erwartetes Durchführen von Leergut 104 durch die Öffnung nicht verifiziert wird.

In Beispiel 27 kann die Kompaktoranordnung 202 gemäß den Beispielen 23 und 24 ferner aufweisen: mindestens einen Prozessor, welcher eingerichtet ist, eine Stellung der Selektierklappe zu ermitteln, eine Stellung der Manipulationsschutzklappe 1302k zu ermitteln, und basierend darauf, ein Durchführen von Leergut 104 durch die Öffnung 1300o zu verifizieren.

In Beispiel 28 kann die Kompaktoranordnung 202 gemäß Beispiel 27 ferner aufweisen, dass der mindestens eine Prozessor eingerichtet ist, eine Verifikationsnachricht auszugeben, wenn ein erwartetes Durchführen von Leergut 104 durch die Öffnung 1300o verifiziert wird, und/oder eine Manipulationsnachricht auszugeben, wenn ein erwartetes Durchführen von Leergut 104 durch die Öffnung 1300o nicht verifiziert wird.

In Beispiel 29 kann die Kompaktoranordnung 202 gemäß Beispiel 28 ferner aufweisen, dass der mindestens eine Prozessor eingerichtet ist, die Verifikationsnachricht auszugeben, wenn ermittelt wird, dass die Manipulationsschutzklappe 1302k in dem Zeitintervall zwischen einem Bewegen der Selektierklappe 1012k von der zweiten Stellung 1301a in die erste Stellung 1301b und einem anschießenden Bewegen der Selektierklappe 1012k von der ersten Stellung 1301b in die zweite Stellung 1301a zumindest einmal aus der ersten Stellung 1303a in die zweite Stellung 1303b bewegt wird.

Beispiel 30 ist eine Kompaktoranordnung 202, aufweisend: einen Kompaktor 102; eine Leergut-Transportvorrichtung 202t zum Transportieren von Leergut 104 in der Kompaktoranordnung 202 in einem Transportbereich 1000t oberhalb der Leergut-Transportvorrichtung 202t; einen Zuführkanal 1300k zum Führen von Leergut 104 von der Leergut-Transportvorrichtung 202t zu dem Kompaktor 102; eine Selektiervorrichtung 202s, welche eingerichtet ist, in einem ersten Zeitintervall (zu-kompaktierendes) Leergut 104 aus dem Transportbereich 1000t heraus durch eine Öffnung 1300o hindurch in den Zuführkanal 1300k zu führen und in einem zweiten Zeitintervall (nicht-zu-kompaktierendes) Leergut 104 in dem Transportbereich 1000t durch die Kompaktoranordnung 202 hindurch zu führen; eine Manipulationsschutzvorrichtung 1302 aufweisend eine Manipulationsschutzklappe 1302k, welche schwenkbar gelagert ist und in einer Ruhelage 1303a die Öffnung 1300o abdeckt, und mindestens einen Sensor 1302s zum Detektieren eines Auslenkens der Manipulationsschutzklappe 1302k aus der Ruhelage 1303a; und mindestens einen Prozessor, welcher eingerichtet ist in dem ersten Zeitintervall ein Durchführen von Leergut 104 durch die Öffnung 1300o hindurch zu verifizieren basierend auf einem mittels des mindestens einen Sensors 1302s detektierten Auslenken der Manipulationsschutzklappe 1302k.

In Beispiel 31 kann die Kompaktoranordnung 202 gemäß Beispiel 30 ferner aufweisen, dass die Manipulationsschutzklappe 1302k im Wesentlichen senkrecht freihängend gelagert ist. Dabei kann die Manipulationsschutzklappe 1302k über deren Eigenmasse austariert sein.

In Beispiel 32 kann die Kompaktoranordnung 202 gemäß Beispiel 30 oder 31 ferner aufweisen, dass die Manipulationsschutzklappe 1302k einen Kunststoff, vorzugsweise Polycarbonat, aufweist oder daraus besteht.

In Beispiel 33 kann die Kompaktoranordnung 202 gemäß einem der Beispiele 30 bis 32 ferner aufweisen, dass die Manipulationsschutzklappe 1302k derart eingerichtet ist, dass ein Herausführen von Leergut 104 aus dem Zuführkanal 1300k in den Transportbereich 1000t hinein verhindert wird.

Beispiel 34 ist eine Kompaktoreinrichtung 300, aufweisend: mehrere Kompaktoranordnungen 202 gemäß einem der Beispiele 21 bis 34, wobei die Kompaktoranordnungen 202 derart relativ zueinander angeordnet sind, dass Leergut 104 entlang einer Transportstrecke 306 durch die Kompaktoranordnungen 202 hindurch transportiert werden kann.

Beispiel 35 ist ein Verfahren 1400 zum Betreiben einer Kompaktoranordnung 202, das Verfahren 1400 aufweisend: Transportieren von Leergut 104 mittels der Leergut-Transportvorrichtung 202t in einem Transportbereich 1000t; und Öffnen einer Selektierklappe 1012k einer Selektiervorrichtung 202s zum Führen von Leergut 104 aus dem Transportbereich 1000t heraus durch eine Öffnung 1300o hindurch in einen Zuführkanal 1300k hinein zum Kompaktieren des Leerguts 104; anschließend, Schließen der Selektierklappe 1012k; und ferner Ermitteln eines Durchgangs von Leergut 104 durch die Öffnung 1300o hindurch in den Zuführkanal 1300k hinein in dem Zeitfenster zwischen dem Öffnen und dem anschließenden Schließen der Selektierklappe 1012k, und, basierend darauf, Erzeugen einer Verifikationsinformation; und ferner, Betreiben der Kompaktoranordnung 202 basierend auf der Verifikationsinformation.

Beispiel 36 kann das Verfahren 1400 gemäß Beispiel 35 ferner aufweisen, dass das Betreiben der Kompaktoranordnung 202 basierend auf der Verifikationsinformation aufweist: Senden einer Verifikationsnachricht, wenn ein Durchgang von Leergut 104 durch die Öffnung 1300o hindurch in den Zuführkanal 1300k hinein in dem Zeitfenster zwischen dem Öffnen und dem anschließenden Schließen der Selektierklappe ermittelt wird, und/oder Senden einer Manipulationsnachricht, wenn kein Durchgang von Leergut 104 durch die Öffnung 1300o hindurch in den Zuführkanal 1300k hinein in dem Zeitfenster zwischen dem Öffnen und dem anschließenden Schließen der Selektierklappe ermittelt wird.

Beispiel 37 kann das Verfahren 1400 gemäß Beispiel 35 oder 36 ferner aufweisen, dass das Ermitteln eines Durchgangs von Leergut durch die Öffnung 1300o hindurch in den Zuführkanal 1300k hinein aufweist: Ermitteln einer Bewegung einer Manipulationsschutzklappe 1302k, welche beweglich gelagert ist und in einer Ruhelage die Öffnung 1300o abdeckt.

Beispiel 38 ist eine Kompaktoranordnung 202, aufweisend: einen Kompaktor 102; einen Gurtgliedförderer 1502 mit einer oder mehreren Förderbaugruppen 1502g, wobei die jeweilige Förderbaugruppe 1502g aufweist: mindestens zwei Umlenkrollen 1504, welche in einem Abstand voneinander angeordnet sind; einen Transportgurt 1506, welcher mittels der mindestens zwei Umlenkrollen 1504 endlos umlaufend gelagert ist; wobei der Transportgurt 1506 eine Vielzahl von Gurtgliedern 1506g aufweist, wobei jeweils zwei einander benachbarte Gurtglieder der Vielzahl von Gurtgliedern 1506g mittels jeweils eines Verbindungselements 1506v mechanisch miteinander verbunden sind.

In Beispiel 39 kann die Kompaktoranordnung 202 gemäß Beispiel 38 ferner aufweisen, dass die jeweilige Förderbaugruppe 1502g ferner aufweist: zwei seitliche Führungsschienen 1510a, 1510b, welche derart eingerichtet sind, dass die Verbindungselemente 1506v mittels der zwei Führungsschienen 1510a, 1510b zumindest abschnittsweise geführt werden.

In Beispiel 40 kann die Kompaktoranordnung 202 gemäß Beispiel 39 ferner aufweisen, dass jede der zwei Führungsschienen 1510a, 1510b eine (z.B. abschnittweise oder vollständig entlang eines endlos umlaufende Pfades angeordnete) Aussparung aufweist, in welche die Verbindungselemente jeweils abschnittsweise eingreifen zum formschlüssigen Führen der Verbindungselemente.

In Beispiel 41 kann die Kompaktoranordnung 202 gemäß Beispiel 39 oder 40 ferner aufweisen, dass die jeweilige Förderbaugruppe 1502g ferner aufweist: eine Abdeckung 1512, welche zwischen den zwei Führungsschienen 1510a, 1510b zwischen dem Lasttrum und dem Leertrum angeordnet ist zum oberseitigen Abdecken des Leertrums.

In Beispiel 42 kann die Kompaktoranordnung 202 gemäß Beispiel 41 ferner aufweisen, dass die Abdeckung 1512 derart eingerichtet ist, dass der Transportgurt 1506 auf der Abdeckung 1512 gleitend abgestützt ist.

In Beispiel 43 kann die Kompaktoranordnung 202 gemäß einem der Beispiele 38 bis 42 ferner aufweisen, dass eine erste Förderbaugruppe 1502g und eine zweite Förderbaugruppe 1502g der mehreren Förderbaugruppen 1502g jeweils eine Transportfläche bereitstellen zum Transportieren von Leergut 104 auf den zwei Transportflächen.

In Beispiel 44 kann die Kompaktoranordnung 202 gemäß Beispiel 43 ferner aufweisen, dass die erste Förderbaugruppe 1502g und die zweite Förderbaugruppe 1502g derart relativ zueinander angeordnet sind, dass die zwei Transportflächen in einem Winkel zueinander, vorzugsweise V-förmig, ausgerichtete sind.

In Beispiel 45 kann die Kompaktoranordnung 202 gemäß Beispiel 43 oder 44 ferner aufweisen, dass die erste Förderbaugruppe 1502g eine Vielzahl von Gurtgliedern eines ersten Gurtglied-Typs 1506g-1 aufweist und wobei die zweite Förderbaugruppe 1502g eine Vielzahl von Gurtgliedern eines zweiten Gurtglied-Typs 1506g-2, welcher verschieden von dem ersten Gurtglied-Typ 1506g-1 ist, aufweist.

In Beispiel 46 kann die Kompaktoranordnung 202 gemäß Beispiel 45 ferner aufweisen, dass die erste Förderbaugruppe 1502g dem Kompaktor 102 zugewandt ist und die zweite Förderbaugruppe 1502g dem Kompaktor 102 abgewandt ist, und dass die Gurtglieder des ersten Gurtglied-Typs 1506g-1 eine nach außen hin freiliegende erste Gurtglied-Oberfläche aufweisen und wobei die Gurtglieder des zweiten Gurtglied-Typs 1506g-2 eine nach außen hin freiliegende zweite Gurtglied-Oberfläche aufweisen, wobei der erste Gurtglied-Oberfläche derart eingerichtet ist, dass diese einen geringeren Reibungskoeffizienten als die zweite Gurtglied-Oberfläche aufweist.

In Beispiel 47 kann die Kompaktoranordnung 202 gemäß Beispiel 46 ferner aufweisen, dass die Gurtglieder des zweiten Gurtglied-Typs 1506g-2 eine Haftstruktur aufweisen, wobei die Haftstruktur die zweite Gurtglied-Oberfläche bildet.

In Beispiel 48 kann die Kompaktoranordnung 202 gemäß Beispiel 47 ferner aufweisen, dass die Haftstruktur ein Polymer, vorzugsweise ein Elastomer, aufweist.

In Beispiel 49 kann die Kompaktoranordnung 202 gemäß einem der Beispiele 38 bis 48 ferner aufweisen, dass jedes der Gurtglieder 1506g zwei Verbindungsstrukturen 1506s aufweist, welche an einander gegenüberliegenden Endabschnitten des Gurtglieds 1506g gebildet sind, zum Verbinden jeweils zweier einander benachbarter Gurtglieder 1506g zu dem Transportgurt 1506.

In Beispiel 50 kann die Kompaktoranordnung 202 gemäß Beispiel 49 ferner aufweisen, dass die Verbindungsstrukturen 1506s derart ausgestaltet sind, dass jeweils eine Verbindungsstruktur 1506s zweier einander benachbarter Gurtglieder 1506g zumindest formschlüssig mittels des Verbindungselements miteinander verbunden werden können.

In Beispiel 51 kann die Kompaktoranordnung 202 gemäß einem der Beispiele 38 bis 50 ferner aufweisen, dass die jeweilige Förderbaugruppe 1502g ferner aufweist: eine Antriebsvorrichtung zum separaten Antreiben des Transportgurts 1506 der jeweiligen Förderbaugruppe 1502g.

In Beispiel 52 kann die Kompaktoranordnung 202 gemäß einem der Beispiele 38 bis 50 ferner aufweisen, dass die jeweilige Förderbaugruppe 1502g ferner aufweist: eine Antriebsvorrichtung zum gemeinsamen Antreiben mehrerer Transportgurte 1506 mehrerer Förderbaugruppen 1502g.

In Beispiel 53 kann die Kompaktoranordnung 202 gemäß Beispiel 52 ferner aufweisen, dass mindestens eine der mindestens zwei Umlenkrollen 1504 eine Verzahnungsstruktur 1504z aufweist, in welche der Transportgurt 1506 abschnittsweise eingreifen kann zum Antreiben des Transportgurts 1506. Dabei kann die Antriebsvorrichtung derart eingerichtet sein, dass diese die mindestens eine der mindestens zwei Umlenkrollen 1504 antreibt.

In Beispiel 54 kann die Kompaktoranordnung 202 gemäß Beispiel 53 ferner aufweisen, dass die Verbindungselemente 1506v und/oder die Gurtglieder 1506g des Transportgurts 1506 und die Verzahnungsstruktur 1504z derart eingerichtet sind, dass die Verbindungselemente 1506v und/oder die Gurtglieder 1506g in die Verzahnungsstruktur eingreifen können zum Antreiben des Transportgurts 1506.

In Beispiel 55 kann die Kompaktoranordnung 202 gemäß einem der Beispiele 38 bis 54 ferner aufweisen, dass die jeweilige Breite der mindestens zwei Umlenkrollen 1504 geringer ist als die Breite des Transportgurts 1506.

In Beispiel 56 kann die Kompaktoranordnung 202 gemäß einem der Beispiele 38 bis 55 ferner aufweisen, dass die jeweilige Förderbaugruppe 1502g modular eingerichtet ist und zwei Umlenkmodule 1502g-1 und mindestens ein lineares Streckenmodul 1502g-2 aufweist, wobei jeweils mindestens eine der mindestens zwei Umlenkrollen 1504 in jedem der zwei Umlenkmodule 1502g-1 angeordnet sind und wobei das mindestens eine Streckenmodul 1502g-2 zwischen den zwei Umlenkmodulen 1502g-1 angeordnet ist.

In Beispiel 57 kann die Kompaktoranordnung 202 gemäß einem der Beispiele 38 bis 56 ferner aufweisen, dass eines der zwei Umlenkmodule 1502g-1 als Antriebsmodul 1502g-a ausgestaltet ist zum Antreiben des Transportgurts 1506.

Beispiel 58 ist eine Kompaktoranordnung 202 aufweisend: einen Kompaktor 102; ein Tragegestell 204a zum Tragen des Kompaktors 102; eine Leergut-Transportvorrichtung 202t zum Transportieren von Leergut 104 in einem Transportbereich 1000t der Kompaktoranordnung 202; eine Baugruppenanordnung 1606, welche oberhalb des Kompaktors 102 und/oder oberhalb der Leergut-Transportvorrichtung 202t angeordnet ist und eine erste Abdeckstruktur 1604 und eine zweite Abdeckstruktur 1608 aufweist, wobei die Baugruppenanordnung 1606 zwischen einer ersten Position 1600a (anschaulich einer Betriebsposition) und einer zweiten Position 1600b (anschaulich einer Montageposition) beweglich (z.B. an dem Tragegestell 204a) gelagert ist, und wobei die Baugruppenanordnung 1606 derart eingerichtet ist, dass, in der zweiten Position 1600b, die erste Abdeckstruktur 1604 den Transportbereich 1000t auf einer ersten Seite abdeckt und die zweite Abdeckstruktur 1608 den Transportbereich 1000t auf einer der ersten Seite gegenüberliegenden zweiten Seite abdeckt; und dass, in der ersten Position 1600a, die erste Abdeckstruktur 1604 den Transportbereich 1000t auf der zweiten Seite abdeckt. Dabei kann die zweite Seite des Transportbereichs 1000t dem Kompaktor 102 zugewandt sein.

In Beispiel 59 kann die Kompaktoranordnung 202 gemäß Beispiel 58 ferner aufweisen, dass die Baugruppenanordnung 1606 eine Selektiervorrichtung 202s aufweist, welche eingerichtet ist, in der ersten Position 1600a, Leergut 104 selektiv aus dem Transportbereich 1000t dem Kompaktor 102 zuzuführen.

In Beispiel 60 kann die Kompaktoranordnung 202 gemäß Beispiel 58 ferner aufweisen, dass die Baugruppenanordnung 1606 eine Funktionsmodulanordnung 1102 aufweist, welche eine Modulaufnahme 1104 und wahlweise ein in der Modulaufnahme 1104 aufgenommenes Selektiermodul 1106s oder Schutzmodul 1106n aufweist.

In Beispiel 61 kann die Kompaktoranordnung 202 gemäß einem der Beispiele 58 bis 60 ferner aufweisen, dass die zweite Abdeckstruktur 1608 schwenkbar gelagert ist derart, dass die zweite Abdeckstruktur 1608 in einer ersten (z.B. horizontalen) Stellung ist, wenn die Baugruppenanordnung 1606 in der ersten Position 1600a ist, und dass die zweite Abdeckstruktur 1608 in einer zweiten (z.B. vertikalen) Stellung ist, wenn die Baugruppenanordnung 1606 in der zweiten Position 1600b ist.

Beispiel 62 ist ein Verfahren zum Betreiben einer Kompaktoranordnung 202, das Verfahren aufweisend: Transportieren von Leergut 104 in einem Transportbereich 1000t der Kompaktoranordnung 202 mittels einer Leergut-Transportvorrichtung 202t; wahlweises Betreiben der Kompaktoranordnung 202 in einem Betriebsmodus oder in einem Montagemodus (anschaulich in zwei voneinander verschiedenen Betriebsmodi), wobei eine Baugruppenanordnung 1606 der Kompaktoranordnung 202 in dem Betriebsmodus in einer ersten Position oberhalb der Leergut-Transportvorrichtung 202t angeordnet ist und Leergut 104 mittels einer Selektiervorrichtung 202s der Baugruppenanordnung 1606 selektiv einem Kompaktor 102 der Kompaktoranordnung 202 zugeführt wird, und wobei die Baugruppenanordnung 1606 in dem Montagemodus in eine zweite Position gebracht (z.B. verschoben) wird und der Transportbereich 1000t beidseitig mittels zweier Abdeckstrukturen 1604, 1608 der Baugruppenanordnung 1606 abgedeckt wird.

Beispiel 63 ist ein Verfahren zum Betreiben einer Kompaktoranordnung 202, das Verfahren aufweisend: Betreiben der Kompaktoranordnung 202 in einem Betriebsmodus, aufweisend: Transportieren von Leergut 104 mittels der Leergut-Transportvorrichtung 202t in einem Transportbereich 1000t, und selektives Führen des Leerguts 104 mittels einer Selektiervorrichtung 202s, die Teil einer beweglich gelagerten Baugruppenanordnung ist, aus dem Transportbereich 1000t heraus und durch einen Zuführbereich 1000d hindurch zu einem Kompaktor 102 der Kompaktoranordnung 202; und, zuvor und/oder anschließend, Betreiben der Kompaktoranordnung 202 in einem zweiten Betriebsmodus, aufweisend: Transportieren von Leergut 104 mittels der Leergut-Transportvorrichtung 202t in dem Transportbereich 1000t durch die Kompaktoranordnung 202 hindurch, und Sichern des Zuführbereichs 1000d mittels mindestens einer Abdeckstruktur 1608, die Teil der beweglich gelagerten Baugruppenanordnung ist, vor einem Eingriff aus Richtung des Transportbereichs 1000t.

In Beispiel 64 kann das Verfahren gemäß Beispiel 63 ferner aufweisen: Wechseln von dem ersten Betriebsmodus in den zweiten Betriebsmodus, das Wechseln aufweisend: Verschieben der Baugruppenanordnung 1606 derart, dass eine erste Abdeckstruktur 1604 der Baugruppenanordnung 1606 den Transportbereich 1000t auf einer ersten Seite abdeckt, und Schwenken einer zweiten Abdeckstruktur 1608 der Baugruppenanordnung 1606 in eine Stellung, in welcher die zweite Abdeckstruktur 1608 den Transportbereich 1000t auf einer der ersten Seite gegenüberliegenden zweiten Seite abdeckt. Dabei kann die zweite Seite des Transportbereichs 1000t dem Kompaktor 102 zugewandt sein.

## Patentansprüche

1. Kompaktoranordnung (202), aufweisend:
• einen Kompaktor (102);
• eine Leergut-Transportvorrichtung (202t) zum Transportieren von Leergut (104) in der Kompaktoranordnung (202) in einem Transportbereich (1000t) oberhalb der Leergut-Transportvorrichtung (202t);
• eine erste Eingriff-Schutzstruktur (1000s), welche den Transportbereich (1000t) seitlich begrenzt und zwischen dem Transportbereich (1000t) und dem Kompaktor (102) bereitgestellt ist, wobei die erste Eingriff-Schutzstruktur (1000s) einen Zuführbereich (1000d) definiert, durch welchen hindurch Leergut (104) seitlich aus dem Transportbereich (1000t) heraus dem Kompaktor (102) zugeführt werden kann; und
• eine Schutzvorrichtung (1002) aufweisend eine zweite Eingriff-Schutzstruktur (1002s), welche derart eingerichtet ist, dass wahlweise ein Eingriff (1002e) aus Richtung des Transportbereichs (1000t) in den Zuführbereich (1000d) verhindert werden kann.

2. Kompaktoranordnung (202) gemäß Anspruch 1, ferner aufweisend:
eine Selektiervorrichtung (202s), welche derart eingerichtet ist, dass Leergut (104) selektiv aus dem Transportbereich (1000t) heraus und durch den Zuführbereich (1000d) hindurchgeführt werden kann.

3. Kompaktoranordnung (202) gemäß Anspruch 2,
wobei die Selektiervorrichtung (202s) eine Selektierklappe (1012k) und einen Stellantrieb (1012a) aufweist zum Bewegen der Selektierklappe (1012k) in eine erste Stellung (1003a) und in eine zweite Stellung (1003b), und ferner derart eingerichtet ist, dass,
wenn die Selektierklappe (1012k) in der ersten Stellung (1003a) ist, Leergut (104), welches mittels der Leergut-Transportvorrichtung (202t) transportiert wird, mittels der Selektierklappe (1012k) durch den Zuführbereich (1000d) hindurch geführt werden kann, und,
wenn die Selektierklappe (1012k) in der zweiten Stellung (1003b) ist, Leergut (104) mittels der Leergut-Transportvorrichtung (202t) in dem Transportbereich (1000t) durch die Kompaktoranordnung (202) hindurch transportiert werden kann.

4. Kompaktoranordnung (202) gemäß einem der Ansprüche 1 bis 3,
wobei die zweite Eingriff-Schutzstruktur (1002s) der Schutzvorrichtung (1002) eine Schutzplatte aufweist, wobei die Schutzplatte derart beweglich (1002v) gelagert ist, dass diese in eine erste Position (1005a) und eine zweite Position (1005b) bewegt werden kann, wobei die Schutzplatte nur in der ersten Position (1005a) den Zuführbereich (1000d) abdeckt und/oder in dem Zuführbereich (1000d) angeordnet ist zum Verhindern des Eingriffs (1002e) aus Richtung des Transportbereichs (1000t) in den Zuführbereich (1000d).

5. Kompaktoranordnung (202) gemäß einem der Ansprüche 1 bis 3, ferner aufweisend:
eine Funktionsmodulanordnung (1102), welche oberhalb der Leergut-Transportvorrichtung (202t) angeordnet ist, wobei die Funktionsmodulanordnung (1102) aufweist:
eine Modulaufnahme (1104) zum Aufnehmen von mehreren Funktionsmodulen (1106),
die mehreren Funktionsmodule (1106), welche passend zu der Modulaufnahme (1104) ausgestaltet sind derart, dass die mehreren Funktionsmodule (1106) jeweils wahlweise in der Modulaufnahme (1104) aufgenommen werden können,
wobei die Selektiervorrichtung (202s) als ein Selektiermodul (1106s) der mehreren Funktionsmodule (1106) bereitgestellt ist, und wobei die Schutzvorrichtung (1002) als ein Schutzmodul (1106n) der mehreren Funktionsmodule (1106) bereitgestellt ist.

6. Kompaktoranordnung (202) gemäß Anspruch 5,
wobei das Schutzmodul (1106n) eine Schutzplatte (1106n-1) aufweist, wobei das Schutzmodul (1106n) derart eingerichtet ist, dass, wenn das Schutzmodul (1106n) in der Modulaufnahme (1104) aufgenommen ist, die Schutzplatte (1106n-1) den Zuführbereich (1000d) abdeckt und/oder in dem Zuführbereich (1000d) angeordnet ist zum Verhindern des Eingriffs (1002e) aus Richtung des Transportbereichs (1000t) in den Zuführbereich (1000d).

7. Kompaktoranordnung (202) gemäß Anspruch 5 oder 6, ferner aufweisend:
mindestens einen Prozessor, welcher eingerichtet ist, den Kompaktor (102) zu deaktivieren, wenn das Schutzmodul (1106n) in der Modulaufnahme (1104) aufgenommen ist.

8. Kompaktoranordnung (202) gemäß Anspruch 7,
wobei der mindestens eine Prozessor ferner eingerichtet ist, die Leergut-Transportvorrichtung (202t) derart anzusteuern, dass Leergut (104) mittels der Leergut-Transportvorrichtung (202t) durch die Kompaktoranordnung (202) hindurch transportiert wird, wenn das Schutzmodul (1106n) in der Modulaufnahme (1104) aufgenommen ist.

9. Kompaktoranordnung (202) gemäß Anspruch 7 oder 8,
wobei der mindestens eine Prozessor ferner eingerichtet ist, das Selektiermodul (1106s), wenn dieses in der Modulaufnahme (1104) aufgenommen ist, derart anzusteuern, dass Leergut (104) aus dem Transportbereich (1000t) selektiv dem Kompaktor (102) durch den Zuführbereich (1000d) hindurch zugeführt werden kann.

10. Kompaktoranordnung (202) gemäß einem der Ansprüche 1 bis 9, ferner aufweisend:
eine obere Abdeckung (408), welche derart eingerichtet ist, dass mittels der oberen Abdeckung (408) wahlweise ein Eingriff in den Transportbereich (1000t) verhindern werden kann.

11. Kompaktoreinrichtung (300), aufweisend:
mehrere Kompaktoranordnungen (202) gemäß einem der Ansprüche 1 bis 10,
wobei die Kompaktoranordnungen (202) derart relativ zueinander angeordnet sind,
dass Leergut (104) entlang einer Transportstrecke (306) durch die Kompaktoranordnungen (202) hindurch transportiert werden kann.

12. Verfahren (1200) zum Betreiben einer Kompaktoranordnung (202), das Verfahren (1200) aufweisend:
• Betreiben der Kompaktoranordnung (202) in einem ersten Betriebsmodus (1001a), aufweisend:
Transportieren von Leergut (104) mittels der Leergut-Transportvorrichtung (202t) in einem Transportbereich (1000t), und
selektives Führen des Leerguts (104) mittels einer Selektiervorrichtung (202s) aus dem Transportbereich (1000t) heraus und durch einen Zuführbereich (1000d) hindurch zu einem Kompaktor (102) der Kompaktoranordnung (202); und, zuvor und/oder anschließend,
• Betreiben der Kompaktoranordnung (202) in einem zweiten Betriebsmodus, aufweisend:
Transportieren von Leergut (104) mittels der Leergut-Transportvorrichtung (202t) in dem Transportbereich (1000t) durch die Kompaktoranordnung (202) hindurch, und
Sichern des Zuführbereichs (1000d) mittels mindestens einer Eingriff-Schutzstruktur (1002s) vor einem Eingriff (1002e) aus Richtung des Transportbereichs (1000t).

13. Verfahren (1200) gemäß Anspruch 12, ferner aufweisend:
• Wechseln von dem ersten Betriebsmodus (1001a) in den zweiten Betriebsmodus (1001b), aufweisend:
Demontieren der Selektiervorrichtung (202s), und
Montieren der mindestens einen Eingriff-Schutzstruktur (1002s) derart, dass diese den Zuführbereich (1000d) abdeckt und/oder in dem Zuführbereich (1000d) angeordnet ist; und/oder
• Wechseln von dem zweiten Betriebsmodus (1001b) in den ersten Betriebsmodus (1001a), aufweisend:
Demontieren der mindestens einen Eingriff-Schutzstruktur (1002s), und
Montieren der Selektiervorrichtung (202s).

14. Verfahren (1200) gemäß Anspruch 12, ferner aufweisend:
• Wechseln von dem ersten Betriebsmodus (1001a) in den zweiten Betriebsmodus (1001b), aufweisend:
Verschieben der Eingriff-Schutzstruktur (1002s) derart, dass diese den Zuführbereich (1000d) abdeckt und/oder in dem Zuführbereich (1000d) angeordnet ist; und/oder
• Wechseln von dem zweiten Betriebsmodus (1001b) in den ersten Betriebsmodus (1001a), aufweisend:
Verschieben der Eingriff-Schutzstruktur (1002s) derart, dass der Zuführbereich (1000d) freigegeben wird.

15. Verfahren (1200) gemäß einem der Ansprüche 12 bis 14,
wobei das Betreiben der Kompaktoranordnung (202) in dem ersten Betriebsmodus (1001a) ferner aufweist:
• Betreiben des Kompaktors (102) zum Kompaktieren des Leerguts (104), welches mittels der Selektiervorrichtung (202s) dem Kompaktor (102) durch den Zuführbereich (1000d) hindurch zugeführt wird; und
wobei das Betreiben der Kompaktoranordnung (202) in dem zweiten Betriebsmodus (1001b) ferner aufweist:
• Deaktivieren des Kompaktors (102).

## Geänderte Patentansprüche

### Geänderte Patentansprüche gemäss Regel 137(2) EPÜ.

1. Kompaktoranordnung (202), aufweisend:
• einen Kompaktor (102);
• eine Leergut-Transportvorrichtung (202t) zum Transportieren von Leergut (104) in der Kompaktoranordnung (202) in einem Transportbereich (1000t) oberhalb der Leergut-Transportvorrichtung (202t);
• eine erste Eingriff-Schutzstruktur (1000s), welche den Transportbereich (1000t) seitlich begrenzt und zwischen dem Transportbereich (1000t) und dem Kompaktor (102) bereitgestellt ist, wobei die erste Eingriff-Schutzstruktur (1000s) einen Zuführbereich (1000d) definiert, durch welchen hindurch Leergut (104) seitlich aus dem Transportbereich (1000t) heraus dem Kompaktor (102) zugeführt werden kann;
• eine Schutzvorrichtung (1002) aufweisend eine zweite Eingriff-Schutzstruktur (1002s), welche derart eingerichtet ist, dass wahlweise ein Eingriff (1002e) aus Richtung des Transportbereichs (1000t) in den Zuführbereich (1000d) verhindert werden kann; und, zusätzlich zu der Schutzvorrichtung (1002),
• eine Selektiervorrichtung (202s), welche derart eingerichtet ist, dass Leergut (104) selektiv aus dem Transportbereich (1000t) heraus und durch den Zuführbereich (1000d) hindurchgeführt werden kann.

2. Kompaktoranordnung (202) gemäß Anspruch 1,
wobei die Selektiervorrichtung (202s) eine Selektierklappe (1012k) und einen Stellantrieb (1012a) aufweist zum Bewegen der Selektierklappe (1012k) in eine erste Stellung (1003a) und in eine zweite Stellung (1003b), und ferner derart eingerichtet ist, dass,
wenn die Selektierklappe (1012k) in der ersten Stellung (1003a) ist, Leergut (104), welches mittels der Leergut-Transportvorrichtung (202t) transportiert wird, mittels der Selektierklappe (1012k) durch den Zuführbereich (1000d) hindurch geführt werden kann, und,
wenn die Selektierklappe (1012k) in der zweiten Stellung (1003b) ist, Leergut (104) mittels der Leergut-Transportvorrichtung (202t) in dem Transportbereich (1000t) durch die Kompaktoranordnung (202) hindurch transportiert werden kann.

3. Kompaktoranordnung (202) gemäß Anspruch 1 oder 2,
wobei die zweite Eingriff-Schutzstruktur (1002s) der Schutzvorrichtung (1002) eine Schutzplatte aufweist, wobei die Schutzplatte derart beweglich (1002v) gelagert ist, dass diese in eine erste Position (1005a) und eine zweite Position (1005b) bewegt werden kann, wobei die Schutzplatte nur in der ersten Position (1005a) den Zuführbereich (1000d) abdeckt und/oder in dem Zuführbereich (1000d) angeordnet ist zum Verhindern des Eingriffs (1002e) aus Richtung des Transportbereichs (1000t) in den Zuführbereich (1000d).

4. Kompaktoranordnung (202) gemäß Anspruch 1 oder 2, ferner aufweisend:
eine Funktionsmodulanordnung (1102), welche oberhalb der Leergut-Transportvorrichtung (202t) angeordnet ist, wobei die Funktionsmodulanordnung (1102) aufweist:
eine Modulaufnahme (1104) zum Aufnehmen von mehreren Funktionsmodulen (1106),
die mehreren Funktionsmodule (1106), welche passend zu der Modulaufnahme (1104) ausgestaltet sind derart, dass die mehreren Funktionsmodule (1106) jeweils wahlweise in der Modulaufnahme (1104) aufgenommen werden können,
wobei die Selektiervorrichtung (202s) als ein Selektiermodul (1106s) der mehreren Funktionsmodule (1106) bereitgestellt ist, und wobei die Schutzvorrichtung (1002) als ein Schutzmodul (1106n) der mehreren Funktionsmodule (1106) bereitgestellt ist.

5. Kompaktoranordnung (202) gemäß Anspruch 4,
wobei das Schutzmodul (1106n) eine Schutzplatte (1106n-1) aufweist, wobei das Schutzmodul (1106n) derart eingerichtet ist, dass, wenn das Schutzmodul (1106n) in der Modulaufnahme (1104) aufgenommen ist, die Schutzplatte (1106n-1) den Zuführbereich (1000d) abdeckt und/oder in dem Zuführbereich (1000d) angeordnet ist zum Verhindern des Eingriffs (1002e) aus Richtung des Transportbereichs (1000t) in den Zuführbereich (1000d).

6. Kompaktoranordnung (202) gemäß Anspruch 4 oder 5,
wobei die Modulaufnahme (1104) zumindest eine Aufnahmeposition (1104p) aufweist derart, dass wahlweise entweder das Selektiermodul (1106s) oder das Schutzmodul (1106n) in der Aufnahmeposition (1104p) aufgenommen werden kann.

7. Kompaktoranordnung (202) gemäß Anspruch 5 oder 6, ferner aufweisend:
mindestens einen Prozessor, welcher eingerichtet ist, den Kompaktor (102) zu deaktivieren, wenn das Schutzmodul (1106n) in der Modulaufnahme (1104) aufgenommen ist.

8. Kompaktoranordnung (202) gemäß Anspruch 7,
wobei der mindestens eine Prozessor ferner eingerichtet ist, die Leergut-Transportvorrichtung (202t) derart anzusteuern, dass Leergut (104) mittels der Leergut-Transportvorrichtung (202t) durch die Kompaktoranordnung (202) hindurch transportiert wird, wenn das Schutzmodul (1 106n) in der Modulaufnahme (1104) aufgenommen ist.

9. Kompaktoranordnung (202) gemäß Anspruch 7 oder 8,
wobei der mindestens eine Prozessor ferner eingerichtet ist, das Selektiermodul (1106s), wenn dieses in der Modulaufnahme (1104) aufgenommen ist, derart anzusteuern, dass Leergut (104) aus dem Transportbereich (1000t) selektiv dem Kompaktor (102) durch den Zuführbereich (1000d) hindurch zugeführt werden kann.

10. Kompaktoranordnung (202) gemäß einem der Ansprüche 1 bis 9, ferner aufweisend:
eine obere Abdeckung (408), welche derart eingerichtet ist, dass mittels der oberen Abdeckung (408) wahlweise ein Eingriff in den Transportbereich (1000t) verhindern werden kann.

11. Kompaktoreinrichtung (300), aufweisend:
mehrere Kompaktoranordnungen (202) gemäß einem der Ansprüche 1 bis 10,
wobei die Kompaktoranordnungen (202) derart relativ zueinander angeordnet sind,
dass Leergut (104) entlang einer Transportstrecke (306) durch die Kompaktoranordnungen (202) hindurch transportiert werden kann.

12. Verfahren (1200) zum Betreiben einer Kompaktoranordnung (202), wobei die Kompaktoranordnung (202) eine Selektiervorrichtung (202s) und, zusätzlich zu der Selektiervorrichtung (202s), mindestens eine Eingriff-Schutzstruktur (1002s) aufweist, das Verfahren (1200) aufweisend:
• Betreiben der Kompaktoranordnung (202) in einem ersten Betriebsmodus (1001a), aufweisend:
Transportieren von Leergut (104) mittels der Leergut-Transportvorrichtung (202t) in einem Transportbereich (1000t), und
selektives Führen des Leerguts (104) mittels der Selektiervorrichtung (202s) aus dem Transportbereich (1000t) heraus und durch einen Zuführbereich (1000d) hindurch zu einem Kompaktor (102) der Kompaktoranordnung (202); und, zuvor und/oder anschließend,
• Betreiben der Kompaktoranordnung (202) in einem zweiten Betriebsmodus, aufweisend:
Transportieren von Leergut (104) mittels der Leergut-Transportvorrichtung (202t) in dem Transportbereich (1000t) durch die Kompaktoranordnung (202) hindurch, und
Sichern des Zuführbereichs (1000d) mittels der mindestens einen Eingriff-Schutzstruktur (1002s) vor einem Eingriff (1002e) aus Richtung des Transportbereichs (1000t).

13. Verfahren (1200) gemäß Anspruch 12, ferner aufweisend:
• Wechseln von dem ersten Betriebsmodus (1001a) in den zweiten Betriebsmodus (1001b), aufweisend:
Demontieren der Selektiervorrichtung (202s), und
Montieren der mindestens einen Eingriff-Schutzstruktur (1002s) derart, dass diese den Zuführbereich (1000d) abdeckt und/oder in dem Zuführbereich (1000d) angeordnet ist; und/oder
• Wechseln von dem zweiten Betriebsmodus (1001b) in den ersten Betriebsmodus (1001a), aufweisend:
Demontieren der mindestens einen Eingriff-Schutzstruktur (1002s), und
Montieren der Selektiervorrichtung (202s).

14. Verfahren (1200) gemäß Anspruch 12, ferner aufweisend:
• Wechseln von dem ersten Betriebsmodus (1001a) in den zweiten Betriebsmodus (1001b), aufweisend:
Verschieben der Eingriff-Schutzstruktur (1002s) derart, dass diese den Zuführbereich (1000d) abdeckt und/oder in dem Zuführbereich (1000d) angeordnet ist; und/oder
• Wechseln von dem zweiten Betriebsmodus (1001b) in den ersten Betriebsmodus (1001a), aufweisend:
Verschieben der Eingriff-Schutzstruktur (1002s) derart, dass der Zuführbereich (1000d) freigegeben wird.

15. Verfahren (1200) gemäß einem der Ansprüche 12 bis 14,
wobei das Betreiben der Kompaktoranordnung (202) in dem ersten Betriebsmodus (1001a) ferner aufweist:
• Betreiben des Kompaktors (102) zum Kompaktieren des Leerguts (104), welches mittels der Selektiervorrichtung (202s) dem Kompaktor (102) durch den Zuführbereich (1000d) hindurch zugeführt wird; und
wobei das Betreiben der Kompaktoranordnung (202) in dem zweiten Betriebsmodus (1001b) ferner aufweist:
• Deaktivieren des Kompaktors (102).
